# EUROPEAN PATENT APPLICATION

(11) **EP 4 716 292 A1**
(43) Date of publication of application: **25.03.2026**
(21) Application number: 24830451.1
(22) Date of filing: 06.06.2024
(51) Int. Cl.: H04W 28/06, H04W 24/02

(54) **PPDU TRANSMISSION METHOD AND APPARATUS**

(30) Priority: 30.06.2023 CN 202310803016
(71) Applicant: Huawei Technologies Co., Ltd., Shenzhen, Guangdong 518129 (CN)
(72) Inventor: WANG, Guoxin, Chengdu, Sichuan 611756 (CN); FANG, Xuming, Chengdu, Sichuan 611756 (CN); HUANG, Gaoyong, Chengdu, Sichuan 611756 (CN); DU, Rui, Shenzhen, Guangdong 518129 (CN)
(74) Representative: Goddar, Heinz J.
(86) International application number: PCT/CN2024/097836
(87) International publication number: WO 2025/001805

(57) **Abstract**

This application relates to the wireless communication field and is applied to a sensing system supporting, for example, the 802.11bf protocol or a next-generation sensing protocol, and in particular, relates to a PPDU transmission method and apparatus. The method includes: An AP generates and sends a data frame, where a MAC header of the data frame includes indication information, used to determine transmit power of a PPDU from a STA and a quantity of HE-LTFs/EHT-LTFs in the PPDU. According to this application, communication and sensing measurement can be simultaneously performed. This application is further applied to a WLAN system that supports 802.11ax and a next-generation Wi-Fi protocol, for example, 802.11be, Wi-Fi 7, or EHT, or for another example, 802.11 series protocols such as a next generation of 802.11be, like Wi-Fi 8, UHR, and Wi-Fi AI, and may be further applied to a UWB-based WPAN system.

## Description

This application claims priority to Chinese Patent Application No. 202310803016.5, filed with the China National Intellectual Property Administration on June 30, 2023 and entitled "PPDU TRANSMISSION METHOD AND APPARATUS", which is incorporated herein by reference in its entirety.

### TECHNICAL FIELD

This application relates to the field of wireless communication technologies, and in particular, to a physical layer protocol data unit (physical layer protocol data unit, PPDU) transmission method and apparatus.

### BACKGROUND

Due to wide deployment of wireless fidelity (wireless fidelity, Wi-Fi) devices and an increase in sensing (Sensing) requirements, sensing through widely available Wi-Fi devices is a hot topic of current research. In daily life, a signal transmitted by a Wi-Fi device is usually received after being reflected, diffracted, and scattered by various obstacles. Consequently, an actually received signal is usually a superposition of a plurality of signals. Therefore, a wireless signal may sense a physical environment through which the wireless signal passes, and a surrounding environment may be inferred by analyzing a wireless signal "modulated" by various obstacles, to derive a wireless local area network (wireless local area network, WLAN) sensing (sensing) technology (which may also be referred to as a wireless sensing technology). WLAN sensing is a technology with a broad application prospect. In the WLAN sensing, existing widely deployed Wi-Fi devices may be used to send specific data or communication channel probe frames to sense a surrounding environment, receive signal echoes or feedback information generated by peer devices in a wireless network, and then extract corresponding parameters in the received signals by using specific algorithms for analysis, to obtain information about the surrounding environment.

The 802.11bf standard is a standard formulated by the Institute of Electrical and Electronics Engineers (institute of electrical and electronics engineers, IEEE) for wireless sensing (WLAN sensing). The standard specifies a protocol for sensing on a sub-7 GHz frequency band and a 60 GHz frequency band. In the WLAN sensing, an existing Wi-Fi device is used to sense a surrounding target, and a basic function of the existing Wi-Fi device is data communication. Therefore, a scenario in which communication and sensing are simultaneously performed may occur in the WLAN sensing.

However, in the existing 802.11bf protocol and other Wi-Fi technical solutions, sensing measurement and communication cannot be simultaneously performed.

### SUMMARY

Embodiments of this application provide a PPDU transmission method and apparatus, to simultaneously (or concurrently) perform communication and sensing measurement, and alleviate degradation of communication quality of service (quality of service, QoS) or degradation of sensing quality caused by a conflict between the sensing measurement and the communication.

The following describes this application from different aspects. It should be understood that mutual reference may be made between the following different aspects in terms of implementations and beneficial effects.

According to a first aspect, this application provides a PPDU transmission method. The method is applied to a first communication apparatus, and the method includes: generating and sending a first PPDU, where the first PPDU includes a first data frame, and the first data frame includes first indication information. The first indication information is used to determine one or more of the following: transmit power of a second PPDU from a second communication apparatus, or a quantity of fields used for sensing in the second PPDU.

For example, the first data frame may be a data frame of any type, for example, a data frame in the 802.11ax protocol, a data frame in the 802.11be protocol, or a data frame in a future-generation 802.11 communication protocol. This is not limited in this application.

In this application, the field used for sensing may be a long training field (long training field, LTF) of a first standard. For example, the first standard may be the 802.11ax protocol, the 802.11be protocol, or a future-generation 802.11 communication protocol. For example, the first standard is the 802.11ax protocol, and the sequence used for sensing may be a high efficiency (high efficiency, HE)-long training field (HE-LTF); or the first standard is the 802.11be protocol, and the field used for sensing may be an extremely high throughput (extremely high throughput, EHT)-long training field (EHT-LTF).

In this application, the field used for sensing may be used for sensing measurement, and may also implement another function, for example, be used for channel estimation. This application focuses on the function of the field used for sensing measurement.

In this application, the first communication apparatus may be an access point station (access point station, AP STA), referred to as an access point (AP); or may be a non-access point station (non-access point station, non-AP STA), referred to as a station (STA). The second communication apparatus may be a non-access point station (non-AP STA) or an access point (AP). For example, in a downlink communication scenario, the first communication apparatus is an access point, and the second communication apparatus is a non-access point station; and in an uplink communication scenario, the first communication apparatus is a non-access point station, and the second communication apparatus is an access point.

In the conventional technology, if a communication requirement with a higher priority arises during sensing, a sensing procedure is terminated, leading to a delay in obtaining a sensing result and degrading quality of service of sensing. Alternatively, if there is a sensing requirement with a higher priority during communication, the communication needs to be terminated, resulting in an increase in a data delay and degradation of QoS.

However, in this application, the first indication information is carried in a data frame, to determine the transmit power of the second PPDU fed back by a peer end and the quantity of fields used for sensing in the second PPDU. Because a frame body of the data frame includes a data payload, data communication can be implemented. In addition, because the data frame carries the first indication information, the first indication information can indicate, to the peer end, a manner of feeding back the second PPDU that carries the field used for sensing, so that sensing measurement can be implemented. Therefore, in this application, communication and sensing measurement can be simultaneously (or concurrently) performed, to alleviate degradation of communication QoS or degradation of sensing quality caused by a conflict between the sensing measurement and the communication.

With reference to the first aspect, in a possible implementation, after the first communication apparatus sends the first PPDU, the method further includes: The first communication apparatus receives the second PPDU, where the second PPDU includes at least one field used for sensing and a feedback used to determine whether the first data frame is successfully transmitted. The quantity of fields used for sensing in the second PPDU is determined based on the first indication information. For example, if the first indication information is used to determine the transmit power of the second PPDU from the second communication apparatus, a physical layer header of the second PPDU includes one field used for sensing. If the first indication information is used to determine the quantity of fields used for sensing in the second PPDU, the physical layer header of the second PPDU includes at least one sequence used for sensing, and a quantity of sequences used for sensing in the second PPDU is equal to the quantity determined (or indicated) by the first indication information.

Optionally, after the first communication apparatus receives the second PPDU, the method further includes: The first communication apparatus performs sensing measurement based on at least one field used for sensing in the second PPDU. It can be understood that a larger quantity of fields used for sensing in the second PPDU indicates better sensing performance of the second PPDU. Therefore, the quantity of fields used for sensing in the second PPDU is indicated, to improve sensing performance.

For example, the feedback used to determine whether the first data frame is successfully transmitted includes an acknowledgement (acknowledge, ACK) frame or a block acknowledgement (Block Ack, BA) frame. The ACK frame may be used to determine that the first data frame is successfully transmitted. The BA frame may be used to determine whether the first data frame is successfully transmitted. For example, the ACK frame or the BA frame is located in a physical layer service data unit (physical layer service data unit, PSDU) of the second PPDU.

In this application, the first communication apparatus sends the first data frame carrying the first indication information, and the second communication apparatus replies with the second PPDU that can be used for sensing. A frame body (frame body) of the first data frame includes a data payload, and the second PPDU includes the ACK frame or the BA frame. Therefore, normal communication can be ensured through interaction between the first data frame and the second PPDU. In addition, the first data frame includes the first indication information that can indicate to send the second PPDU, and the second PPDU is a PPDU that is used for sensing and that is indicated by the first data frame. Therefore, a sensing processing procedure is completed through interaction between the first data frame and the second PPDU. Therefore, in this application, it can be ensured that communication and sensing are simultaneously performed, to alleviate degradation of communication QoS or degradation of sensing quality caused by a conflict between the sensing measurement and the communication.

According to a second aspect, this application provides a PPDU transmission method. The method is applied to a second communication apparatus, and the method includes: receiving and parsing a first PPDU, where the first PPDU includes a first data frame, and the first data frame includes first indication information. The first indication information is used to determine one or more of the following: transmit power of a second PPDU, or a quantity of fields used for sensing in the second PPDU.

With reference to the second aspect, in a possible implementation, after the second communication apparatus parses the first PPDU, the method further includes: The second communication apparatus sends the second PPDU based on the first indication information, where the second PPDU includes at least one field used for sensing and a feedback used to determine whether the first data frame is successfully transmitted. The quantity of fields used for sensing in the second PPDU is determined based on the first indication information. At least one field used for sensing in the second PPDU is used for a first communication apparatus to perform sensing measurement.

In some scenarios, sending the second PPDU by the second communication apparatus may not be triggered by the first PPDU sent by the first communication apparatus. To be specific, sending the first PPDU by the first communication apparatus may be decoupled from sending the second PPDU by the second communication apparatus. For example, a specific trigger frame may be used to trigger the second communication apparatus to send the second PPDU, or the second communication apparatus may autonomously send the second PPDU based on another case.

According to a third aspect, this application provides a communication apparatus. The communication apparatus may be a first communication apparatus, or a chip, a functional module, or the like configured in a first communication apparatus. The communication apparatus includes a processing unit and a transceiver unit. The processing unit is configured to generate a first PPDU, where the first PPDU includes a first data frame, the first data frame includes first indication information, and the first indication information is used to determine one or more of the following: transmit power of a second PPDU from a second communication apparatus, or a quantity of fields used for sensing in the second PPDU. The transceiver unit is configured to send or output the first PPDU.

With reference to the third aspect, in a possible implementation, the transceiver unit is further configured to receive the second PPDU, where the second PPDU includes at least one field used for sensing and a feedback used to determine whether the first data frame is successfully transmitted. The quantity of fields used for sensing in the second PPDU is determined based on the first indication information.

With reference to the third aspect, in a possible implementation, the processing unit is further configured to perform sensing measurement based on at least one field used for sensing in the second PPDU.

According to a fourth aspect, this application provides a communication apparatus. The communication apparatus may be a second communication apparatus, or a chip, a functional module, or the like configured in a second communication apparatus. The communication apparatus includes a processing unit and a transceiver unit. The transceiver unit is configured to receive a first PPDU, where the first PPDU includes a first data frame, the first data frame includes first indication information, and the first indication information is used to determine one or more of the following: transmit power of a second PPDU, or a quantity of fields used for sensing in the second PPDU. The processing unit is configured to parse the first PPDU.

With reference to the fourth aspect, in a possible implementation, the transceiver unit is further configured to send the second PPDU based on the first indication information, where the second PPDU includes at least one field used for sensing and a feedback used to determine whether the first data frame is successfully transmitted. The quantity of fields used for sensing in the second PPDU is determined based on the first indication information. The field used for sensing is used for a first communication apparatus to perform sensing measurement.

In a possible implementation of any one of the foregoing aspects, the first indication information includes one or more of the following: transmit power of the first PPDU, expected receive power, a quantity of combinations of fields used for sensing in the second PPDU, or a quantity of fields used for sensing in a combination of fields used for sensing. The transmit power of the first PPDU and the expected receive power are used to determine the transmit power of the second PPDU.

It can be understood that, if the field used for sensing is an HE-LTF, the combination of fields used for sensing may be an HE-LTF repetition block (HE-LTF repetition block), and the quantity of fields used for sensing in the combination of fields used for sensing is a quantity of HE-LTFs in the HE-LTF repetition block; or if the field used for sensing is an EHT-LTF, the combination of fields used for sensing may be an EHT-LTF repetition block (EHT-LTF repetition block), and the quantity of fields used for sensing in the combination of fields used for sensing is a quantity of EHT-LTFs in the EHT-LTF repetition block.

It can be understood that the field used for sensing may be used for sensing measurement, and may also implement another function, for example, be used for channel estimation. This application focuses on the function of the field used for sensing measurement.

In a possible implementation of any one of the foregoing aspects, the first indication information further includes one or more of the following: a spatial stream allocated to the second PPDU, or a resource unit (resource unit, RU) allocated to the second PPDU.

Optionally, the first data frame belongs to a first user. The first PPDU further includes a second data frame, and the second data frame belongs to a second user.

Optionally, the second data frame includes second indication information, and the second indication information is used to determine transmit power of a third PPDU from a third communication apparatus and/or a quantity of fields used for sensing in the third PPDU, and a spatial stream allocated to the third PPDU and/or an RU allocated to the third PPDU.

It can be understood that, in this application, information formats of the first indication information and the second indication information may be the same. However, specific values may be different, or certainly, may be the same. The specific values are determined by the first communication apparatus.

In other words, the first indication information and the second indication information may be summarized as being used to determine transmit power of a PPDU from a frame receiver and/or a quantity of sequences used for sensing in the PPDU, and a spatial stream allocated to the PPDU and/or an RU allocated to the PPDU. For the first data frame, the frame receiver is the second communication apparatus. For the second data frame, the frame receiver is the third communication apparatus.

In this application, the spatial stream allocated to the second PPDU or the RU allocated to the second PPDU is carried in a data frame, so that multi-user downlink communication and sensing measurement can be simultaneously (or concurrently) performed.

In a possible implementation of any one of the foregoing aspects, the first indication information is carried in a medium access control (medium access control, MAC) header of the first data frame.

Optionally, the second indication information is carried in a MAC header of the second data frame.

In a possible implementation of any one of the foregoing aspects, the first data frame further includes third indication information. The third indication information may indicate whether the first data frame carries the first indication information. Herein, the third indication information indicates that the first data frame carries the first indication information.

In a possible implementation of any one of the foregoing aspects, the field used for sensing is carried in a physical layer header of the second PPDU.

In a possible implementation of any one of the foregoing aspects, a physical layer header of the first PPDU includes fourth indication information. The fourth indication information indicates that a type of the first PPDU is any one of the following: a non-sensing PPDU, a sensing PPDU, or a communication and sensing PPDU.

The non-sensing PPDU may be understood as a PPDU irrelevant to a sensing technology. In other words, the PPDU does not carry sensing-related information (for example, the first indication information in this application, or an existing sensing-related parameter). In other words, the PPDU is a PPDU related only to communication. The sensing PPDU may be understood as a PPDU related to a sensing technology. In other words, the PPDU carries sensing-related information, or the PPDU participates in a sensing-related processing process. In other words, the PPDU is a PPDU related only to sensing. The communication and sensing PPDU may be understood as a PPDU related to both communication and sensing. In other words, the PPDU carries both communication data and sensing-related information. In other words, the PPDU participates in both conventional communication processing and sensing processing.

In this application, the fourth indication information is carried in a physical layer header of a PPDU to indicate a type of the PPDU, so that a device receiving the PPDU learns, by parsing the fourth indication information in the PPDU, whether to continue to parse a subsequent field. This can reduce energy loss, caused by parsing a sensing-related PPDU during sensing, of a device that does not participate in sensing, to achieve power saving for the device, and minimize impact of a sensing activity on the device that does not participate in sensing.

According to a fifth aspect, this application provides a PPDU transmission method. The method is applied to a first communication apparatus, and the method includes: generating and sending a first PPDU, where the first PPDU includes a data frame, and the data frame includes third indication information. The third indication information indicates that the data frame carries first indication information or indicates that the data frame carries fifth indication information. The first indication information is used to determine one or more of the following: transmit power of a second PPDU from a second communication apparatus, or a quantity of fields used for sensing in the second PPDU. The fifth indication information is used to terminate a sensing measurement session.

With reference to the fifth aspect, in a possible implementation, after the first communication apparatus sends the first PPDU, the method further includes: The first communication apparatus receives the second PPDU, where the second PPDU includes a feedback used to determine whether the data frame is successfully transmitted, for example, an ACK frame or a BA frame.

Optionally, if the third indication information indicates that the data frame carries the first indication information, the second PPDU further includes at least one field used for sensing. The quantity of fields used for sensing in the second PPDU is determined based on the first indication information. Optionally, after the first communication apparatus receives the second PPDU, the method further includes: The first communication apparatus performs sensing measurement based on at least one field used for sensing in the second PPDU.

Optionally, if the third indication information indicates that the data frame carries the fifth indication information, the second PPDU is an existing PPDU that carries an ACK frame or a BA frame.

In this application, the third indication information is carried in a data frame, so that the data frame can have a plurality of functions, and the functions of the data frame can be set according to a requirement. Therefore, communication and sensing measurement can be simultaneously (or concurrently) performed, to alleviate degradation of communication QoS or sensing quality caused by a conflict between the sensing measurement and the communication, and a sensing measurement session can be closed during communication, to save time and channel resources.

According to a sixth aspect, this application provides a PPDU transmission method. The method is applied to a second communication apparatus, and the method includes: receiving and parsing a first PPDU, where the first PPDU includes a data frame, and the data frame includes third indication information. The third indication information indicates that the data frame carries first indication information or indicates that the data frame carries fifth indication information. The first indication information is used to determine one or more of the following: transmit power of a second PPDU, or a quantity of fields used for sensing in the second PPDU. The fifth indication information is used to terminate a sensing measurement session.

With reference to the sixth aspect, in a possible implementation, after the second communication apparatus parses the first PPDU, the method further includes: The second communication apparatus sends the second PPDU, where the second PPDU includes a feedback used to determine whether the data frame is successfully transmitted, for example, an ACK frame or a BA frame.

Optionally, if the third indication information indicates that the data frame carries the first indication information, the second PPDU further includes at least one field used for sensing. The quantity of fields used for sensing in the second PPDU is determined based on the first indication information. The field used for sensing in the second PPDU may be used for a first communication apparatus to perform sensing measurement.

Optionally, if the third indication information indicates that the data frame carries the fifth indication information, the second PPDU is an existing PPDU that carries an ACK frame or a BA frame.

It can be understood that the second communication apparatus may learn, by parsing the first PPDU, whether the data frame is to terminate the sensing measurement session or indicate a transmit parameter of the second PPDU (the transmit power, and/or the quantity of fields used for sensing in the second PPDU), to perform a corresponding operation. For details, refer to descriptions in the following method embodiments. Details are not described herein.

According to a seventh aspect, this application provides a communication apparatus. The communication apparatus may be a first communication apparatus, or a chip, a functional module, or the like configured in a first communication apparatus. The communication apparatus includes a processing unit and a transceiver unit. The processing unit is configured to generate a first PPDU, where the first PPDU includes a data frame, the data frame includes third indication information, the third indication information indicates that the data frame carries first indication information or indicates that the data frame carries fifth indication information, the first indication information is used to determine one or more of the following: transmit power of a second PPDU from a second communication apparatus, or a quantity of fields used for sensing in the second PPDU, and the fifth indication information is used to terminate a sensing measurement session. The transceiver unit is configured to send the first PPDU.

With reference to the seventh aspect, in a possible implementation, the transceiver unit is further configured to receive the second PPDU, where the second PPDU includes a feedback used to determine whether the data frame is successfully transmitted, for example, an ACK frame or a BA frame.

Optionally, if the third indication information indicates that the data frame carries the first indication information, the second PPDU further includes at least one field used for sensing. The quantity of fields used for sensing in the second PPDU is determined based on the first indication information. Optionally, the processing unit is further configured to perform sensing measurement based on at least one field used for sensing in the second PPDU.

Optionally, if the third indication information indicates that the data frame carries the fifth indication information, the second PPDU is an existing PPDU that carries an ACK frame or a BA frame.

According to an eighth aspect, this application provides a communication apparatus. The communication apparatus may be a second communication apparatus, or a chip, a functional module, or the like configured in a second communication apparatus. The communication apparatus includes a processing unit and a transceiver unit. The transceiver unit is configured to receive a first PPDU, where the first PPDU includes a data frame, the data frame includes third indication information, the third indication information indicates that the data frame carries first indication information or indicates that the data frame carries fifth indication information, the first indication information is used to determine one or more of the following: transmit power of a second PPDU, or a quantity of fields used for sensing in the second PPDU, and the fifth indication information is used to terminate a sensing measurement session. The processing unit is configured to parse the first PPDU.

With reference to the eighth aspect, in a possible implementation, the transceiver unit is further configured to send the second PPDU, where the second PPDU includes a feedback used to determine whether the data frame is successfully transmitted, for example, an ACK frame or a BA frame.

Optionally, if the third indication information indicates that the data frame carries the first indication information, the second PPDU further includes at least one field used for sensing. The quantity of fields used for sensing in the second PPDU is determined based on the first indication information. The field used for sensing in the second PPDU may be used for a first communication apparatus to perform sensing measurement.

Optionally, if the third indication information indicates that the data frame carries the fifth indication information, the second PPDU is an existing PPDU that carries an ACK frame or a BA frame.

With reference to any one of the fifth aspect to the eighth aspect, in a possible implementation, when the third indication information is a first value, the third indication information indicates that the data frame carries the first indication information; or when the third indication information is a second value, the third indication information indicates that the data frame carries the fifth indication information. For example, the first value is 1, and the second value is 0; or the first value is 0, and the first value is 1.

With reference to any one of the fifth aspect to the eighth aspect, in a possible implementation, the first indication information includes one or more of the following: transmit power of the first PPDU, expected receive power, a quantity of combinations of fields used for sensing in the second PPDU, or a quantity of fields used for sensing in a combination of fields used for sensing. The transmit power of the first PPDU and the expected receive power are used to determine the transmit power of the second PPDU.

With reference to any one of the fifth aspect to the eighth aspect, in a possible implementation, the first indication information further includes one or more of the following: a spatial stream allocated to the second PPDU, or an RU allocated to the second PPDU.

Optionally, the data frame belongs to a first user. The first PPDU further includes a data frame of another user, for example, a data frame belonging to a second user.

With reference to any one of the fifth aspect to the eighth aspect, in a possible implementation, the fifth indication information includes one or more of the following: a measurement session identifier field, a terminate all trigger-based measurement sessions field, a terminate all non-trigger-based measurement sessions field, or a trigger-based/non-trigger-based measurement session type field.

With reference to any one of the fifth aspect to the eighth aspect, in a possible implementation, a physical layer header of the first PPDU includes fourth indication information. The fourth indication information indicates that a type of the first PPDU is any one of the following: a non-sensing PPDU, a sensing PPDU, or a communication and sensing PPDU.

According to a ninth aspect, this application provides a PPDU transmission method. The method is applied to a first communication apparatus, and the method includes: sending a first PPDU, where the first PPDU includes a data frame, the data frame includes fifth indication information, and the fifth indication information is used to terminate a sensing measurement session; and receiving a second PPDU, where the second PPDU includes a feedback used to determine whether the data frame is successfully transmitted, for example, an ACK frame or a BA frame.

In the conventional technology, if an AP and a STA want to close a sensing measurement session, the AP and the STA may send a sensing measurement termination frame. In this case, the AP and the STA need to re-contend for a channel. However, in this application, a data frame carries indication information used to close/terminate a sensing measurement session, so that the sensing measurement session can be closed during communication, without a need to re-contend for a channel and then send a sensing measurement termination frame. This saves transmission duration and channel resources of the sensing measurement termination frame.

According to a tenth aspect, this application provides a PPDU transmission method. The method is applied to a second communication apparatus, and the method includes: receiving a first PPDU, where the first PPDU includes a data frame, the data frame includes fifth indication information, and the fifth indication information is used to terminate a sensing measurement session; and sending a second PPDU, where the second PPDU includes a feedback used to determine whether the data frame is successfully transmitted, for example, an ACK frame or a BA frame.

According to an eleventh aspect, this application provides a communication apparatus. The communication apparatus may be a first communication apparatus, or a chip, a functional module, or the like configured in a first communication apparatus. The communication apparatus includes a processing unit and a transceiver unit. The processing unit is configured to generate a first PPDU. The transceiver unit is configured to send the first PPDU and receive a second PPDU. The first PPDU includes a data frame, the data frame includes fifth indication information, and the fifth indication information is used to terminate a sensing measurement session. The second PPDU includes a feedback used to determine whether the data frame is successfully transmitted, for example, an ACK frame or a BA frame.

According to a twelfth aspect, this application provides a communication apparatus. The communication apparatus may be a second communication apparatus, or a chip, a functional module, or the like configured in a second communication apparatus. The communication apparatus includes a processing unit and a transceiver unit. The transceiver unit is configured to receive a first PPDU, where the first PPDU includes a data frame, the data frame includes fifth indication information, and the fifth indication information is used to terminate a sensing measurement session. The processing unit is configured to generate a second PPDU. The transceiver unit is further configured to send the second PPDU, where the second PPDU includes a feedback used to determine whether the data frame is successfully transmitted, for example, an ACK frame or a BA frame.

With reference to any one of the ninth aspect to the twelfth aspect, in a possible implementation, the fifth indication information includes one or more of the following: a measurement session identifier field, a terminate all trigger-based measurement sessions field, a terminate all non-trigger-based measurement sessions field, or a trigger-based/non-trigger-based measurement session type field. For specific meanings of the fields, refer to descriptions in the following method embodiments. Due to limited space, details are not described herein.

With reference to any one of the ninth aspect to the twelfth aspect, in a possible implementation, the data frame belongs to a first user, and the first PPDU further includes a data frame of another user. The data frame of the another user may be in a format of an existing data frame, and does not carry the fifth indication information. Alternatively, a part or all of the data frame of the another user may carry the fifth indication information. This is not limited in this application. It can be understood that, in this application, a sensing measurement session with a specific user may be terminated in a multi-user scenario.

With reference to any one of the ninth aspect to the twelfth aspect, in a possible implementation, the fifth indication information is carried in a MAC header of the data frame.

With reference to any one of the ninth aspect to the twelfth aspect, in a possible implementation, the data frame further includes sixth indication information. The sixth indication information indicates whether the data frame carries the fifth indication information. Herein, the sixth indication information indicates that the data frame carries the fifth indication information.

With reference to any one of the ninth aspect to the twelfth aspect, in a possible implementation, a physical layer header of the first PPDU includes fourth indication information. The fourth indication information indicates that a type of the first PPDU is any one of the following: a non-sensing PPDU, a sensing PPDU, or a communication and sensing PPDU.

In this application, the fourth indication information is carried in a physical layer header of a PPDU to indicate a type of the PPDU. This can reduce energy loss, caused by parsing a sensing-related PPDU during sensing, of a device that does not participate in sensing, to achieve power saving for the device, and minimize impact of a sensing activity on the device that does not participate in sensing.

According to a thirteenth aspect, this application provides a PPDU transmission method. The method is applied to a first communication apparatus, and the method includes: generating and sending a PPDU, where a physical layer header of the PPDU includes fourth indication information, and the fourth indication information indicates that a type of the PPDU is any one of the following: a non-sensing PPDU, a sensing PPDU, or a communication and sensing PPDU.

The non-sensing PPDU may be understood as a PPDU irrelevant to a sensing technology. In other words, the PPDU does not carry sensing-related information. In other words, the PPDU is a PPDU related only to communication. The sensing PPDU may be understood as a PPDU related to a sensing technology. In other words, the PPDU carries sensing-related information. In other words, the PPDU is a PPDU related only to sensing. The communication and sensing PPDU may be understood as a PPDU related to both communication and sensing. In other words, the PPDU carries both communication data and sensing-related information.

For example, the PPDU may be a PPDU of any type, for example, a PPDU specified in the 802.11ax protocol, a PPDU specified in the 802.11be protocol, or a PPDU specified in a future-generation 802.11 protocol. This is not limited in this application.

In the conventional technology, an AP and a STA exchange a large quantity of frames during sensing. A basic service set (basic service set, BSS) to which the AP belongs may include other STAs that do not participate in sensing. If the STAs are in a non-sleep state, the STAs also receive sensing-related frames sent by other devices. When obtaining a receiving MAC address of a frame through parsing, the STAs learn that the frame is not sent to the STAs, and therefore stop subsequent frame parsing. However, the MAC address is in a MAC part of the frame, and the STAs need to parse a physical layer header before continuing to parse the MAC part. Therefore, a part of energy of the STAs is still consumed in unnecessary frame parsing.

Therefore, in this application, the fourth indication information is carried in a physical layer header of a PPDU to indicate a type of the PPDU, so that a device receiving the PPDU learns, by parsing the fourth indication information in the PPDU, whether to continue to parse a subsequent field. This can reduce energy loss, caused by parsing a sensing-related PPDU during sensing, of a device that does not participate in sensing, to achieve power saving for the device, and minimize impact of a sensing activity on the device that does not participate in sensing.

According to a fourteenth aspect, this application provides a PPDU transmission method. The method is applied to a second communication apparatus, and the method includes: receiving and parsing a PPDU, where a physical layer header of the PPDU includes fourth indication information, and the fourth indication information indicates that a type of the PPDU is any one of the following: a non-sensing PPDU, a sensing PPDU, or a communication and sensing PPDU.

According to a fifteenth aspect, this application provides a communication apparatus. The communication apparatus may be a first communication apparatus, or a chip, a functional module, or the like configured in a first communication apparatus. The communication apparatus includes a processing unit and a transceiver unit. The processing unit is configured to generate a PPDU, where a physical layer header of the PPDU includes fourth indication information, and the fourth indication information indicates that a type of the PPDU is any one of the following: a non-sensing PPDU, a sensing PPDU, or a communication and sensing PPDU. The transceiver unit is configured to send the PPDU.

According to a sixteenth aspect, this application provides a communication apparatus. The communication apparatus may be a second communication apparatus, or a chip, a functional module, or the like configured in a second communication apparatus. The communication apparatus includes a processing unit and a transceiver unit. The transceiver unit is configured to receive a PPDU, where a physical layer header of the PPDU includes fourth indication information, and the fourth indication information indicates that a type of the PPDU is any one of the following: a non-sensing PPDU, a sensing PPDU, or a communication and sensing PPDU. The processing unit is configured to parse the PPDU.

With reference to any one of the thirteenth aspect to the sixteenth aspect, in a possible implementation, the fourth indication information may be represented by 2 redefinable bits in the physical layer header of the PPDU. In this way, a length of the physical layer header of the PPDU may not be increased, and compatibility is good.

According to a seventeenth aspect, this application provides a communication apparatus. The communication apparatus includes a processor, configured to perform the method according to any one of the first aspect, the second aspect, the fifth aspect, the sixth aspect, the ninth aspect, the tenth aspect, the thirteenth aspect, the fourteenth aspect, or the possible implementations of any one of the aspects. Alternatively, the processor is configured to execute a program stored in a memory, and when the program is executed, the method according to any one of the first aspect, the second aspect, the fifth aspect, the sixth aspect, the ninth aspect, the tenth aspect, the thirteenth aspect, the fourteenth aspect, or the possible implementations of any one of the aspects.

With reference to the seventeenth aspect, in a possible implementation, the memory is located outside the communication apparatus.

With reference to the seventeenth aspect, in a possible implementation, the memory is located in the communication apparatus.

In this application, the processor and the memory may alternatively be integrated into one component. In other words, the processor and the memory may alternatively be integrated together.

With reference to the seventeenth aspect, in a possible implementation, the communication apparatus further includes a transceiver, and the transceiver is configured to send or receive a PPDU.

According to an eighteenth aspect, this application provides a communication apparatus. The communication apparatus may be implemented in a form of a chip, or may be implemented in a form of a device. This is not limited in this application. The communication apparatus includes a logic circuit and an interface. The logic circuit is coupled to the interface. The interface is configured to input and/or output a PPDU. The logic circuit is configured to perform the method according to any one of the first aspect, the second aspect, the fifth aspect, the sixth aspect, the ninth aspect, the tenth aspect, the thirteenth aspect, the fourteenth aspect, or the possible implementations of any one of the aspects.

According to a nineteenth aspect, this application provides a readable storage medium. The readable storage medium stores program instructions. When the program instructions are run on a computer, the computer is enabled to perform the method described in any one of the first aspect, the second aspect, the fifth aspect, the sixth aspect, the ninth aspect, the tenth aspect, the thirteenth aspect, the fourteenth aspect, or the possible implementations of any one of the aspects.

According to a twentieth aspect, this application provides a computer program product. The computer program product includes a computer program or computer code. When the computer program product is run on a computer, the method described in any one of the first aspect, the second aspect, the fifth aspect, the sixth aspect, the ninth aspect, the tenth aspect, the thirteenth aspect, the fourteenth aspect, or the possible implementations of any one of the aspects is performed.

According to a twenty-first aspect, this application provides a computer program. When the computer program is run on a computer, the method described in any one of the first aspect, the second aspect, the fifth aspect, the sixth aspect, the ninth aspect, the tenth aspect, the thirteenth aspect, the fourteenth aspect, or the possible implementations of any one of the aspects is performed.

According to a twenty-second aspect, this application provides a wireless communication system. The wireless communication system includes a first communication apparatus and/or a second communication apparatus. The first communication apparatus is configured to perform the method described in any one of the first aspect, the fifth aspect, the ninth aspect, the thirteenth aspect, or the possible implementations of any one of the aspects. The second communication apparatus is configured to perform the method described in any one of the second aspect, the sixth aspect, the tenth aspect, the fourteenth aspect, or the possible implementations of any one of the aspects.

For technical effects achieved in the foregoing aspects, refer to the foregoing aspects, or refer to beneficial effects in the following method embodiments. Details are not described herein.

### BRIEF DESCRIPTION OF DRAWINGS

FIG. 1 is a diagram of a general sensing procedure according to an embodiment of this application;
FIG. 2 is a schematic flowchart of a trigger-based sensing measurement exchange according to an embodiment of this application;
FIG. 3 is a schematic flowchart of SR2SR sounding according to an embodiment of this application;
FIG. 4 is a schematic flowchart of a non-trigger-based sensing measurement exchange according to an embodiment of this application;
FIG. 5 is a diagram of a sensing availability window according to an embodiment of this application;
FIG. 6 is a diagram of an architecture of a communication system according to an embodiment of this application;
FIG. 7 is a diagram of a structure of an access point according to an embodiment of this application;
FIG. 8 is a diagram of a structure of a station according to an embodiment of this application;
FIG. 9 is a diagram of an application scenario according to an embodiment of this application;
FIG. 10 is a first schematic flowchart of a PPDU transmission method according to an embodiment of this application;
FIG. 11a is a diagram of a first possible frame format of a data frame according to an embodiment of this application;
FIG. 11b is a diagram of a second possible frame format of a data frame according to an embodiment of this application;
FIG. 11c is a diagram of a third possible frame format of a data frame according to an embodiment of this application;
FIG. 12 is a diagram of a frame format of a single-user sensing parameters information field according to an embodiment of this application;
FIG. 13a is a diagram of a possible frame format of a second PPDU according to an embodiment of this application;
FIG. 13b is a diagram of another possible frame format of a second PPDU according to an embodiment of this application;
FIG. 14 is a diagram of a possible sensing measurement exchange according to an embodiment of this application;
FIG. 15 is a diagram of another possible sensing measurement exchange according to an embodiment of this application;
FIG. 16 is a second schematic flowchart of a PPDU transmission method according to an embodiment of this application;
FIG. 17 is a diagram of a possible structure of a first PPDU according to an embodiment of this application;
FIG. 18a is a diagram of a fourth possible frame format of a data frame according to an embodiment of this application;
FIG. 18b is a diagram of a fifth possible frame format of a data frame according to an embodiment of this application;
FIG. 18c is a diagram of a sixth possible frame format of a data frame according to an embodiment of this application;
FIG. 19 is a diagram of a frame format of a multi-user sensing parameters information field according to an embodiment of this application;
FIG. 20 is a diagram of still another possible sensing measurement exchange according to an embodiment of this application;
FIG. 21 is a third schematic flowchart of a PPDU transmission method according to an embodiment of this application;
FIG. 22a is a diagram of a seventh possible frame format of a data frame according to an embodiment of this application;
FIG. 22b is a diagram of an eighth possible frame format of a data frame according to an embodiment of this application;
FIG. 23 is a diagram of a frame format of a sensing measurement termination field according to an embodiment of this application;
FIG. 24 is a diagram of a frame format of an action field of a sensing measurement termination frame according to an embodiment of this application;
FIG. 25 is a fourth schematic flowchart of a PPDU transmission method according to an embodiment of this application;
FIG. 26a is a schematic flowchart of data transmission according to an embodiment of this application;
FIG. 26b is another schematic flowchart of data transmission according to an embodiment of this application;
FIG. 26c is still another schematic flowchart of data transmission according to an embodiment of this application;
FIG. 27 is a fifth schematic flowchart of a PPDU transmission method according to an embodiment of this application;
FIG. 28 is a diagram of yet another possible sensing measurement exchange according to an embodiment of this application;
FIG. 29 is a diagram of a frame format of an HE PPDU according to an embodiment of this application;
FIG. 30 is a diagram of a structure of a communication apparatus according to an embodiment of this application;
FIG. 31 is a diagram of another structure of a communication apparatus according to an embodiment of this application; and
FIG. 32 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, "first", "second", and the like are merely intended to distinguish between different objects, but not to describe a specific order. In addition, "/" indicates "or", unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, "at least one" means one or more, and "a plurality of" means two or more. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c. a, b, and c may be in a singular form or a plural form.

The terms "include", "have", and any variants thereof are intended to cover a nonexclusive inclusion. For example, a process, a method, a system, a product, or a device that includes a series of steps or units is not limited to the listed steps or units, but optionally further includes steps or units that are not listed, or optionally further includes other steps or units inherent to the process, the method, the product, or the device.

In this application, the term "in an example", "for example", or the like is used to give an example, an illustration, or a description. Any embodiment or design scheme described with "example", "in an example", or "for example" in this application should not be construed as being more preferred or more advantageous than another embodiment or design scheme. To be precise, the term "example", "in an example", "for example", or the like is intended to present a related concept in a specific manner.

It can be understood that, in this application, "when", "provided that", and "if" mean that an apparatus performs corresponding processing in an objective case, but are not intended to limit time. In addition, the terms do not mean that the apparatus needs to perform a determining action during implementation, and do not mean any other limitation either.

In this application, "simultaneously" may be understood as "concurrently" or being at a same time point, or may be understood as being in a period of time, or may be understood as being in a same periodicity. This may be specifically understood with reference to a context.

In this application, an element represented in a singular form is intended to indicate "one or more", but not indicate "one and only one", unless otherwise specified.

It can be understood that, in embodiments of this application, "B corresponding to A" indicates that there is a correspondence between A and B, and B may be determined based on A. Determining B based on A does not mean that B is determined based only on A, and B may alternatively be determined based on A and/or other information.

The following briefly describes some terms or nouns in this application.

### 1. Roles in WLAN sensing

Sensing initiator (sensing initiator): a high-efficiency (high-efficiency, HE) station or an extremely high throughput (extremely high throughput, EHT) station that initiates a sensing procedure by transmitting a sensing measurement request frame, or a DMG station that initiates a DMG sensing procedure by transmitting a directional multi-gigabit (directional multi-gigabit, DMG) sensing measurement request frame. (sensing initiator: A high-efficiency (HE) station (STA) or extremely high throughput (EHT) STA that initiates a sensing procedure by transmitting a Sensing Measurement Request frame, or a DMG STA that initiates a DMG sensing procedure by transmitting a DMG Sensing Measurement Request frame.)

Sensing responder (sensing responder): an HE station or an EHT station that participates in a sensing procedure by responding to a sensing initiator, or a DMS station that participates in a DMG sensing procedure by responding to a sensing initiator. (sensing responder: A high-efficiency (HE) station (STA) or extremely high throughput (EHT) STA that participates in a sensing procedure by responding to a sensing initiator, or a DMG STA that participates in a DMG sensing procedure by responding to a sensing initiator.)

Sensing transmitter (sensing transmitter): a station that transmits a PPDU used for sensing measurement in a sensing procedure or a directional multi-gigabit (directional multi-gigabit, DMG) sensing procedure. (sensing transmitter: A station (STA) that transmits PPDUs used for measurements in a sensing procedure or a directional multi-gigabit (DMG) sensing procedure.)

Sensing receiver (sensing receiver): a station that receives a PPDU sent by a sensing transmitter and obtains a measurement result in a sensing procedure or a DMG sensing procedure. (sensing receiver: A station (STA) that is the intended recipient of PPDUs sent by a sensing transmitter and obtains measurements in either a sensing procedure or a directional multi-gigabit (DMG) sensing procedure.)

It can be understood that, with evolution of standards, meanings of the sensing initiator, the sensing responder, the sensing transmitter, and the sensing receiver may change. The descriptions herein is merely an example for description of this application, and does not constitute a limitation on the protection scope of this application.

### 2. General (or general-purpose) sensing procedure

802.11bf defines how to use a communication device to sense a target (target) around the communication device. In the 802.11bf protocol, sensing is classified into low-frequency sensing and high-frequency sensing based on a signal frequency, and sensing is also classified into trigger-based (trigger-based, TB) sensing measurement (TB sensing measurement) and non-trigger-based (non-trigger-based, non-TB) sensing measurement (non-TB sensing measurement) depending on whether an access point (access point, AP) is a sensing initiator. When an AP is a sensing initiator, the sensing is the TB sensing measurement. When a non-access point station (non-access point station, non-AP STA) is a sensing initiator, the sensing is the non-TB sensing measurement.

In this specification, the non-access point station (non-AP STA) may also be referred to as a station (station, STA), and the two terms may be used interchangeably.

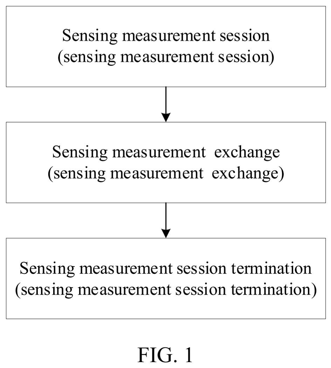

FIG. 1 is a diagram of a general sensing procedure according to an embodiment of this application. An AP and a non-AP STA may exchange sensing capability information in an association phase. As shown in FIG. 1, a general sensing procedure may include three phases: sensing measurement session (sensing measurement session), sensing measurement exchange (sensing measurement exchange), and sensing measurement session termination (sensing measurement session termination).

In the sensing measurement session phase, a sensing initiator and a sensing responder may negotiate upon a sensing-related operation parameter, for example, a measurement session identifier (measurement session ID), a role of the sensing responder (herein, the role indicates whether the sensing responder participates in a sensing measurement exchange as a sensing transmitter or a sensing receiver), maximum available bandwidth, maximum transmit space-time streams, maximum receive space-time streams, or sensing end time. The measurement session identifier is allocated by the sensing initiator in the sensing measurement session phase.

In the sensing measurement exchange phase, a sensing transmitter and a sensing receiver perform sensing measurement. The sensing measurement exchange may be classified into a trigger-based sensing measurement exchange (TB sensing measurement exchange) and a non-trigger-based sensing measurement exchange (non-TB sensing measurement exchange).

In the sensing measurement session termination phase, a sensing measurement session may be explicitly or implicitly terminated. The explicit termination may be termination in a case in which the AP or the non-AP STA sends a sensing measurement termination (sensing measurement termination) frame. The implicit termination may be termination in a case in which a measurement session expiry timer (measurement session expiry timer) specified in the sensing measurement session phase expires.

It can be understood that, during establishment of a sensing measurement session, the sensing initiator and the sensing responder agree upon a value as a measurement setup expiry exponent (measurement setup expiry exponent), namely, the sensing end time. Then the sensing initiator and the sensing responder each maintain a timer, that is, the measurement session expiry timer. When the sensing initiator and the sensing responder successfully establish the sensing measurement session, perform first interaction of the TB sensing measurement exchange, or perform first interaction of the non-TB sensing measurement exchange, the timer (that is, the measurement session expiry timer) is updated to the measurement setup expiry exponent. When the measurement session expiry timer expires, the corresponding sensing measurement session is terminated.

### 3. Trigger-based sensing measurement exchange and non-trigger-based sensing measurement exchange

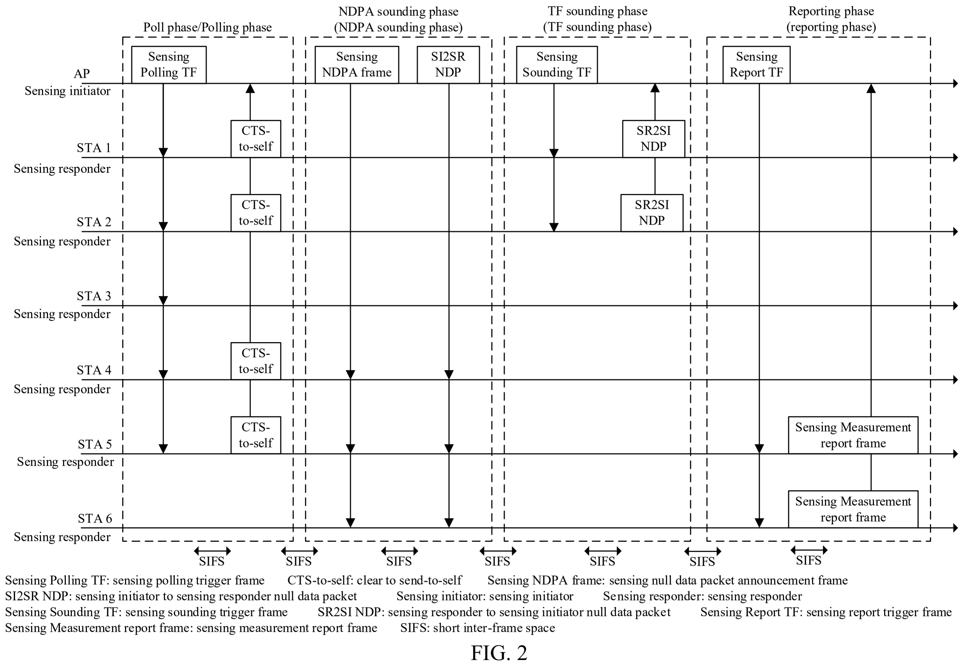

FIG. 2 is a schematic flowchart of a trigger-based sensing measurement exchange according to an embodiment of this application. As shown in FIG. 2, the trigger-based sensing measurement exchange includes but is not limited to one or more of the following phases: a polling phase (Polling phase), one or more null data packet announcement (null data packet announcement, NDPA) sounding phases (NDPA sounding phase), one or more trigger frame (trigger frame, TF) sounding phases (TF sounding phase), or a reporting phase (Reporting phase). For example, a combination of phases that may occur in the trigger-based sensing measurement exchange is shown in Table 1.

**Table 1**

| Polling phase | NDPA sounding phase | TF sounding phase | Reporting phase |
|---|---|---|---|
| | | √ | |
| √ | √ | | |
| √ | | √ | |
| √ | √ | √ | |
| | √ | | √ |
| | √ | √ | √ |
| √ | √ | √ | √ |

The symbol "√" in Table 1 indicates presence of the phase (the symbol √ is used to indicate the presence of the phase).

As shown in FIG. 2, in the polling phase, an AP sends a sensing polling (sensing polling) trigger frame (trigger frame, TF) to a STA 1 to a STA 5. If the STA 1, the STA 2, the STA 4, and the STA 5 are allowed to perform sending, the STA 1, the STA 2, the STA 4, and the STA 5 each return a CTS (clear to send)-to-self (clear to send-to-self) frame after one short inter-frame space (short inter-frame space, SIFS). In the NDPA sounding phase, the AP sends a sensing NDPA (sensing NDPA) frame to the STA 4 to a STA 6. After one SIFS, the AP sends an NDP to the STA 4 to the STA 6. The NDP is from a sensing initiator to a sensing responder (sensing initiator to sensing responder, SI2SR), and therefore is denoted as an SI2SR NDP in FIG. 2. The STA 4 to the STA 6 receive the NDP and separately perform sensing measurement. In the TF sounding phase, the AP sends a sensing sounding trigger frame (sensing sounding TF) to the STA 1 and the STA 2. After one SIFS, the STA 1 and the STA 2 each send an NDP to the AP. The NDP is from a sensing responder to a sensing initiator (sensing responder to sensing initiator, SR2SI), and therefore is denoted as an SR2SI NDP in FIG. 2. The AP receives the NDP and performs sensing measurement. In the reporting phase, if the AP sends a sensing report trigger frame (sensing report TF) to the STA 5 and the STA 6, after one SIFS, the STA 5 and the STA 6 each return a corresponding sensing measurement report frame (sensing measurement report frame) to the AP.

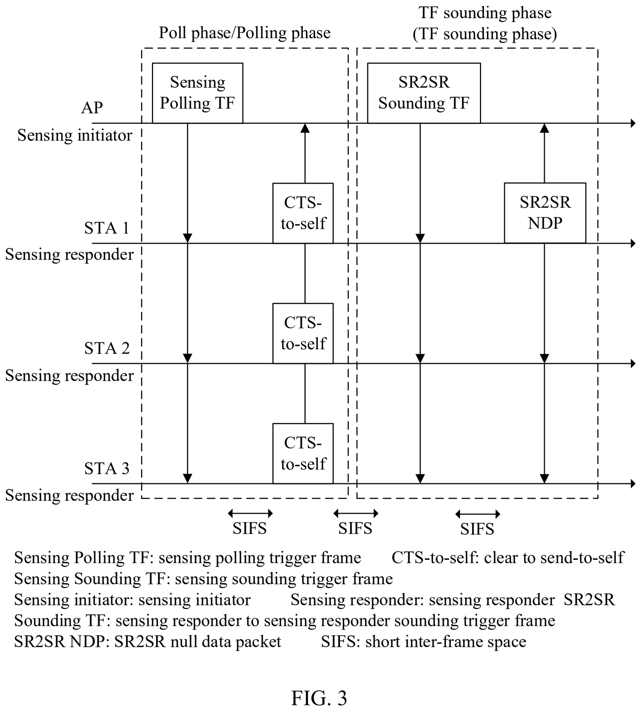

In a possible implementation, in addition to the form shown in FIG. 2, TF sounding (trigger frame sounding) has another variant: sensing responder to sensing responder (sensing responder to sensing responder, SR2SR) sounding (SR2SR sounding). In the SR2SR sounding, the AP sends an SR2SR sounding trigger frame to a plurality of STAs, where the SR2SR sounding trigger frame specifies roles of the STAs: one sensing transmitter and a plurality of sensing receivers. The sensing transmitter sends an SR2SR NDP, and the sensing receivers use the SR2SR NDP to perform sensing measurement. In the SR2SR sounding, the AP may alternatively serve as a sensing receiver to participate in sensing measurement. FIG. 3 is a schematic flowchart of SR2SR sounding according to an embodiment of this application. As shown in FIG. 3, in a polling phase, an AP sends a sensing polling TF to a STA 1 to a STA 3. If the STA 1 to the STA 3 are allowed to perform sending, the STA 1 to the STA 3 each return a CTS-to-self frame after one SIFS. In a TF sounding phase (which is also an SR2SR sounding phase herein), the AP sends an SR2SR sounding trigger frame (SR2SR sounding TF) to the STA 1 to the STA 3. After one SIFS, the STA 1 sends an NDP to the AP, the STA 2, and the STA 3. The NDP is from a sensing responder to a sensing responder (SR2SR), and therefore is denoted as an SR2SR NDP in FIG. 3. The AP, the STA 2, and the STA 3 receive the NDP and separately perform sensing measurement.

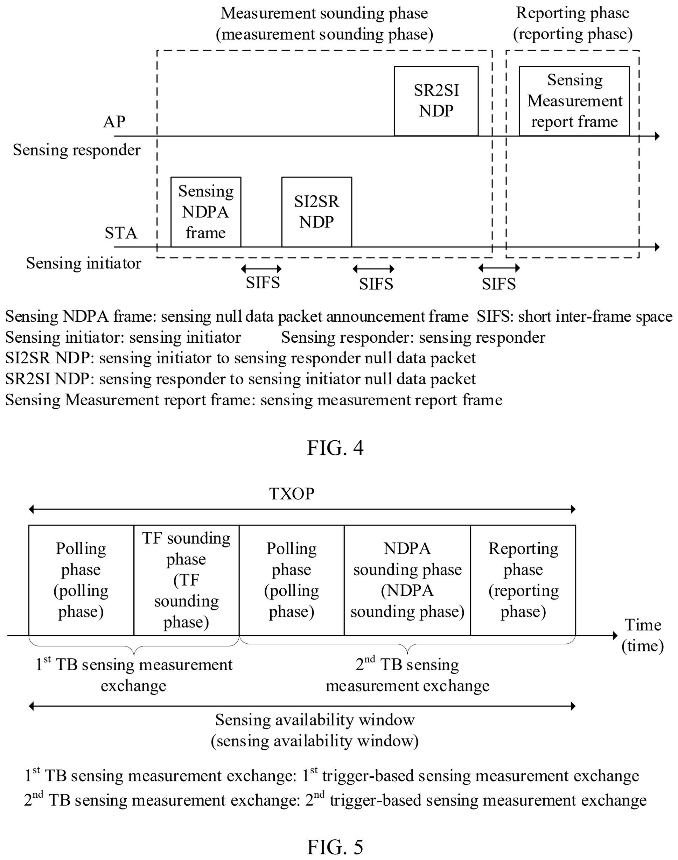

FIG. 4 is a schematic flowchart of a non-trigger-based sensing measurement exchange according to an embodiment of this application. In the non-TB sensing measurement exchange, a STA serves as a sensing initiator. As shown in FIG. 4, the non-trigger-based sensing measurement exchange includes but is not limited to a measurement sounding phase (measurement sounding phase) and a reporting phase (reporting phase). In the measurement sounding phase, the STA sends an NDPA frame. After one SIFS, the STA sends an SI2SR NDP. After another SIFS, the AP serves as a sensing responder to return an SR2SI NDP. After another SIFS, the process enters a reporting phase, and the AP includes a measurement result in a sensing measurement report frame and feeds back the sensing measurement report frame to the STA (namely, the sensing initiator).

It can be understood that the reporting phase is not necessarily needed in the non-trigger-based sensing measurement exchange. When the SI2SR NDP sent by the STA is not used for sensing measurement, the AP does not use the SI2SR NDP to perform sensing calculation, and therefore does not need to feed back a sensing measurement report frame to the STA.

In a possible implementation, each sensing measurement exchange needs to be performed within a time range of a sensing availability window (sensing availability window). One sensing availability window may include one or more transmission opportunities (transmission opportunity, TXOP). One TOXP may include one or more sensing measurement exchanges. For example, FIG. 5 is a diagram of a sensing availability window according to an embodiment of this application. FIG. 5 is a diagram in which one sensing availability window includes one TXOP, and one TXOP includes two TB sensing measurement exchanges. As shown in FIG. 5, a 1^{st} TB sensing measurement exchange includes a polling phase and a TF sounding phase, and a 2^{nd} TB sensing measurement exchange includes a polling phase, an NDPA sounding phase, and a reporting phase. For specific implementations of the phases, refer to the foregoing descriptions. Details are not described herein again.

It can be understood that FIG. 5 is merely an example. In this application, a quantity of TXOPs included in one sensing availability window is not limited, and a quantity of sensing measurement exchanges included in one TXOP is not limited either. Certainly, phases included in the TB sensing measurement exchange may alternatively not be limited.

The following briefly describes a system architecture in this application.

The technical solutions provided in this application are applicable to a WLAN sensing system. For example, a method provided in this application is applicable to the 802.1 1bf protocol, a future-generation WLAN sensing protocol, or the like. In addition, the method provided in this application may be further applied to other 802.11 protocols, such as the 802.11ax protocol, the 802.11be protocol, Wi-Fi 7, or a next-generation protocol, for example, Wi-Fi 8, ultra-high reliability (ultra-high reliability, UHR), ultra-high reliability and throughput (ultra-high reliability and throughput, UHRT), or Wi-Fi AI. Details are not described herein. The technical solutions provided in this application may be further applied to an ultra-wideband (ultra-wideband, UWB)-based wireless personal area network (wireless personal area network, WPAN) system. For example, the method provided in this application is applicable to IEEE 802.15 series protocols, for example, the 802.15.4a protocol, the 802.15.4z protocol, or the 802.15.4ab protocol, or a future-generation UWB WPAN protocol. Details are not described. The technical solutions provided in this application may be further applied to communication systems such as an internet of things (internet of things, IoT) system, vehicle-to-everything (vehicle to X, V2X), and a narrowband internet of things (narrowband internet of things, NB-IoT) system; or may be applied to a device in an internet of vehicles, an internet of things node, a sensor, or the like in an internet of things (IoT), a smart camera, a smart remote control, a smart water meter, or a smart electricity meter in a smart home, a sensor in a smart city, and the like; or is further applicable to a long term evolution (long term evolution, LTE) system, a 5th-generation (5th-generation, 5G) communication system, a new communication system emerging in future communication development, and the like.

Although this application is mainly described by using a network in which IEEE 802.11 is deployed as an example, it is easily understood by a person skilled in the art that various aspects of this application may be extended to other networks that use various standards or protocols, for example, a high performance radio LAN (high performance radio LAN, HIPERLAN) (a wireless standard similar to the IEEE 802.11 standard and mainly used in Europe), a wide area network (wide area network, WAN), a wireless local area network (WLAN), a personal area network (personal area network, PAN), or another known or later developed network.

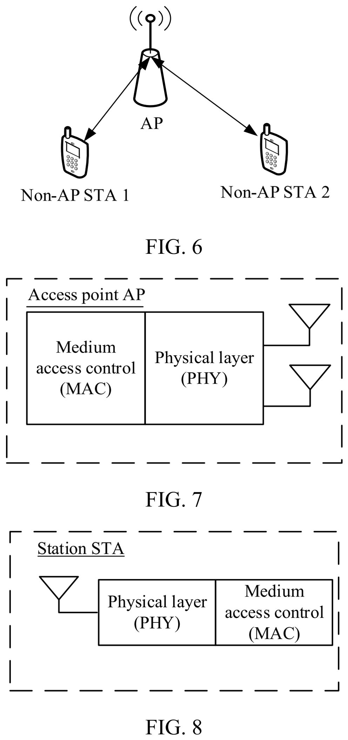

FIG. 6 is a diagram of an architecture of a communication system according to an embodiment of this application. As shown in FIG. 6, the communication system includes one or more APs and one or more non-AP STAs (for example, a non-AP STA 1 and a non-AP STA 2 in FIG. 6). The non-AP STA and the AP may be associated, and exchange sensing capability information in an association phase. The AP may perform communication and sensing with one or more non-AP STAs, and a plurality of non-AP STAs may also perform communication and sensing with each other.

It can be understood that, in FIG. 6, an example in which the non-AP STA is a mobile phone and the AP is a router is used, but this does not constitute a limitation on types of the AP and the non-AP STA in this embodiment of this application. In addition, FIG. 6 shows only one AP and two non-AP STAs as an example. However, the communication system may alternatively include more or fewer APs or non-AP STAs. This is not limited in embodiments of this application.

In a possible implementation, the non-AP STA and the AP may support both a WLAN communication protocol and a WLAN sensing protocol, for example, the 802.11ax protocol and the 802.11bf protocol, or the 802.11be protocol and the 802.11bf protocol. Certainly, with continuous evolution and development of communication technologies, the WLAN sensing protocol may further include a next-generation protocol of 802.11bf, or the like, and the WLAN communication protocol may further include a next-generation protocol of the 802.11be protocol, or the like.

For example, an access point (for example, the AP in FIG. 6) is an apparatus with a wireless communication function. The access point supports communication according to a WLAN protocol, has a function of communicating with another device (for example, a station or another access point) in a WLAN network, and certainly, may further have a function of communicating with another device. In a WLAN system, an access point may be referred to as an access point station (access point station, AP STA). The apparatus with the wireless communication function may be an entire device, or may be a chip, a processing system, or the like installed in an entire device. A device in which the chip or the processing system is installed may implement the methods and the functions in embodiments of this application under the control of the chip or the processing system. The AP in embodiments of this application is an apparatus that provides a service for a STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the methods and the functions in embodiments of this application. For example, a separate non-access point station (non-AP STA) function may alternatively be integrated into an access point station (AP STA).

For example, in a WLAN system, a non-access point station (non-access point station, non-AP STA) may also be referred to as a station. The station (for example, any non-AP STA in FIG. 6) is an apparatus with a wireless communication function, supports communication according to a WLAN protocol, and has a capability of communicating with another station or an access point in a WLAN network. For example, the STA is any user communication device that allows a user to communicate with an AP and further communicate with the WLAN. The apparatus with the wireless communication function may be an entire device, or may be a chip, a processing system, or the like installed in an entire device. A device in which the chip or the processing system is installed may implement the methods and the functions in embodiments of this application under the control of the chip or the processing system. For example, the STA may be user equipment that can be connected to the internet, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone. Alternatively, the STA may be an internet of things node in an internet of things, an in-vehicle communication apparatus in an internet of vehicles, an entertainment device, a game device or system, a global positioning system device, or the like. Alternatively, the STA may be a chip or a processing system in the foregoing terminals. For example, a separate access point station (AP STA) function may alternatively be integrated into a non-access point station (non-AP STA).

The WLAN system may provide high-rate and low-latency transmission. With continuous evolution of WLAN application scenarios, the WLAN system is to be applied to more scenarios or industries, for example, an internet of things industry, an internet of vehicles industry, a banking industry, enterprise offices, exhibition halls of stadiums, concert halls, hotel rooms, dormitories, wards, classrooms, supermarkets, squares, streets, production workshops, and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in an internet of things, an entertainment terminal (for example, a wearable device like an augmented reality (augmented reality, AR) device or a virtual reality (virtual reality, VR) device), a smart device (for example, a printer, a projector, a loudspeaker, or a stereo) in a smart office, an internet of vehicles device in an internet of vehicles, infrastructure (for example, a vending machine, a self-service navigation console of a supermarket, a self-service cash register device, or a self-service ordering machine) in daily life scenes, a device in a large sports or music venue, or the like. Specific forms of the station and the access point are not limited in embodiments of this application, and the descriptions herein are merely examples.

It should be understood that the 802.11 standard focuses on a physical layer (physical layer, PHY) part and a medium access control (medium access control, MAC) layer part. In an example, FIG. 7 is a diagram of a structure of an access point according to an embodiment of this application. The AP may be a multi-antenna/multi-radio AP, or may be a single-antenna/singleradio AP. The antenna/radio is configured to send/receive a PPDU. In an implementation, an antenna part or a radio part of the AP may be separated from a main part of the AP in a remote layout structure. In FIG. 7, the AP may include a physical layer processing circuit and a medium access control processing circuit. The physical layer processing circuit may be configured to process a physical layer signal, and the MAC layer processing circuit may be configured to process a MAC layer signal. In another example, FIG. 8 is a diagram of a structure of a station according to an embodiment of this application. FIG. 8 is a diagram of a structure of a single-antenna/singleradio STA. In an actual scenario, the STA may alternatively be a multi-antenna/multi-radio STA, and may be a device with two or more antennas. The antenna/radio is configured to send/receive a data packet. In an implementation, an antenna part or a radio part of the STA may be separated from a main part of the STA in a remote layout structure. In FIG. 8, the STA may include a PHY processing circuit and a MAC processing circuit. The physical layer processing circuit may be configured to process a physical layer signal, and the MAC layer processing circuit may be configured to process a MAC layer signal.

In some embodiments, in the communication system shown in FIG. 6, the AP may be replaced with an access point multi-link device (AP multi-link device, AP MLD), and the non-AP STA may be replaced with a non-access point multi-link device (non-AP multi-link device, non-AP MLD). To be specific, the technical solutions provided in embodiments of this application may also be applied to a scenario in which a multi-link device (multi-link device, MLD) communicates with a multi-link device. The multi-link device is a wireless communication device that supports parallel transmission on a plurality of links. Compared with a device that supports only single-link transmission, the multi-link device has higher transmission efficiency and a higher throughput. The multi-link device includes one or more affiliated stations STAs (affiliated STA). The affiliated STA is a logical station and may operate on a link. The affiliated station may be an access point (access point, AP) or a non-access point station (non-access point station, non-AP STA). A multi-link device whose affiliated station is an AP may be referred to as an AP MLD, and a multi-link device whose affiliated station is a non-AP STA may be referred to as a non-AP MLD.

In a possible implementation, the multi-link device (which may be a non-AP MLD or an AP MLD herein) in embodiments of this application is an apparatus with a wireless communication function. The apparatus may be an entire device, or may be a chip, a processing system, or the like installed in an entire device. A device in which the chip or the processing system is installed may implement the methods and the functions in embodiments of this application under the control of the chip or the processing system.

In WLAN sensing, existing widely deployed Wi-Fi devices may be used to sense a surrounding target, and a basic function of the existing Wi-Fi devices is data communication. Therefore, a scenario in which communication and sensing are simultaneously performed may occur in the WLAN sensing. However, in the existing 802.11bf protocol and other Wi-Fi technical solutions, sensing measurement and communication cannot be simultaneously performed. In other words, a communication requirement with a higher priority arises during WLAN sensing based on the 802.11bf protocol, and how to perform data communication without interrupting original sensing measurement and implement simultaneous communication and sensing measurement is still to be resolved. Alternatively, a sensing requirement arises during data communication, and how to perform sensing measurement without interrupting data communication and implement simultaneous communication and sensing measurement is still to be resolved.

In view of this, embodiments of this application provide a PPDU transmission method and apparatus. Sensing-related indication information is carried in a data frame, to determine transmit power used by a peer end to send a communication PPDU and a quantity of fields used for sensing in the communication PPDU. In this way, communication and sensing measurement can be simultaneously (or concurrently) performed, to alleviate degradation of communication QoS or degradation of sensing quality caused by a conflict between the sensing measurement and the communication.

In addition, embodiments of this application further provide a PPDU transmission method and apparatus. Indication information is carried in a physical layer header (PHY header) of a PPDU, to indicate that a type of the PPDU is a non-sensing PPDU, a sensing PPDU, or a communication and sensing PPDU. In this way, when the type of the PPDU is the sensing PPDU, a device that does not have a sensing capability or a device that does not participate in sensing can terminate parsing of a subsequent field in advance by reading the indication information in the PHY header, to reduce energy loss and achieve power saving (power save) for the device.

The technical solutions provided in this application are described below in detail with reference to more accompanying drawings.

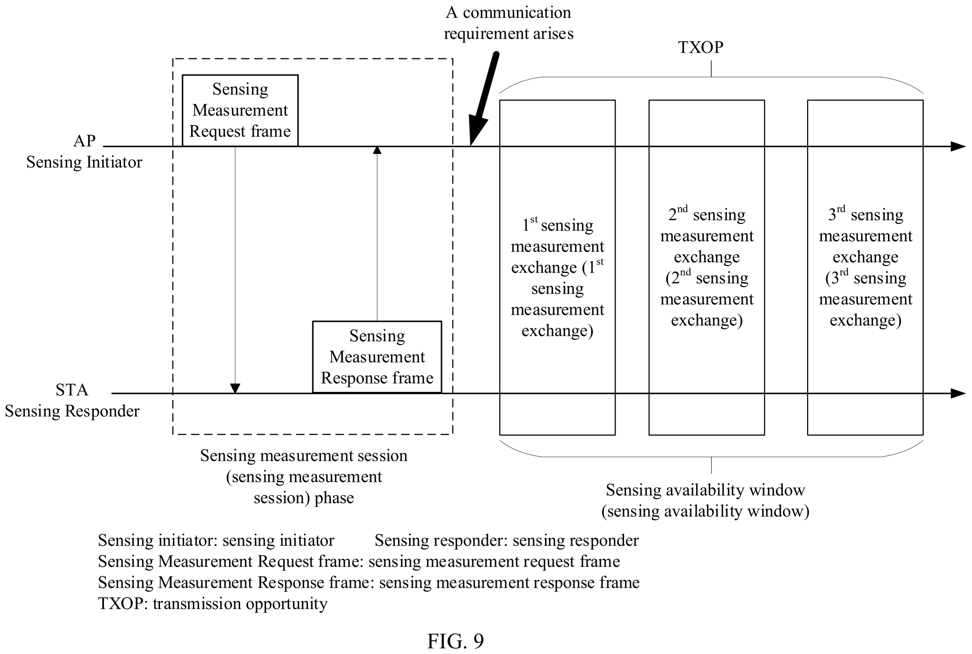

In a possible implementation, the technical solutions provided in this application may be applied to a scenario in which data communication and sensing are simultaneously performed. For example, FIG. 9 is a diagram of an application scenario according to an embodiment of this application. FIG. 9 shows a scenario in which a communication requirement with a higher priority arises during WLAN sensing based on the 802.11bf protocol. As shown in FIG. 9, after an AP and a STA negotiate upon a sensing-related operation parameter by using a sensing measurement request frame (sensing measurement request frame) and a sensing measurement response frame (sensing measurement response frame), that is, after a sensing measurement session phase, a communication requirement arises, and a sensing measurement exchange between the AP and the STA is not completed. In this case, the AP and the STA have both a sensing requirement and a communication requirement.

It can be understood that the application scenario shown in FIG. 9 is merely an example, and does not constitute a limitation on the protection scope of this application. Any scenario in which data communication and sensing are simultaneously performed falls within the protection scope of this application.

To clearly describe the technical solutions of this application, this application is described by using a plurality of embodiments. For details, refer to the following descriptions. In this application, for same or similar parts of embodiments or implementations, mutual reference may be made between the embodiments or implementations, unless otherwise specified. In embodiments of this application and implementations/methods/implementation methods of embodiments, unless otherwise specified or a logical conflict occurs, terms and/or descriptions in different embodiments and implementations/methods/implementation methods of embodiments are consistent and may be mutually referenced. Technical features in different embodiments and implementations/methods/implementation methods of embodiments may be combined to form a new embodiment, implementation, method, or implementation method based on an internal logical relationship between the technical features. The following implementations of this application do not constitute a limitation on the protection scope of this application.

A communication apparatus in this application may support both a WLAN communication protocol and a WLAN sensing protocol. The WLAN communication protocol may include but is not limited to the 802.11ax protocol, the 802.11be protocol, Wi-Fi 7, or a next-generation protocol of 802.11be, for example, Wi-Fi 8, UHR, UHRT, or Wi-Fi AI. The WLAN sensing protocol may include but is not limited to 802.11bf or a next-generation protocol of 802.11bf.

In a possible implementation, in this application, a first communication apparatus may be an AP, and a second communication apparatus may be a non-AP STA; or a first communication apparatus is a non-AP STA, and a second communication apparatus is an AP. For details, refer to descriptions in the following embodiments.

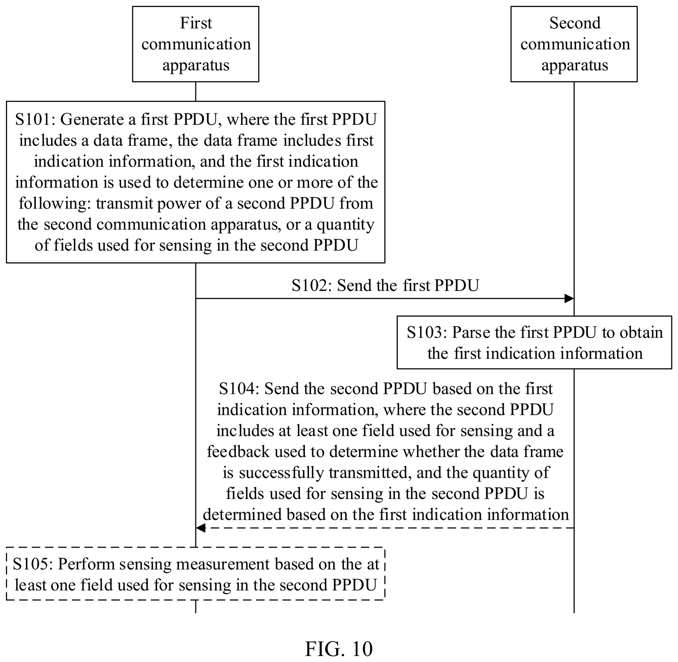

FIG. 10 is a first schematic flowchart of a PPDU transmission method according to an embodiment of this application. In the method, signaling interaction procedures of single-user uplink and downlink communication in which sensing measurement can be implemented and several possible frame formats are mainly described. In this embodiment of this application, for the single-user downlink communication, a first communication apparatus is an AP, and a second communication apparatus is a non-AP STA (or referred to as a STA); and for the single-user uplink communication, a first communication apparatus is a non-AP STA (or referred to as a STA), and a second communication apparatus is an AP.

As shown in FIG. 10, the PPDU transmission method includes but is not limited to the following steps.

S101: The first communication apparatus generates a first PPDU, where the first PPDU includes a data frame, the data frame includes first indication information, and the first indication information is used to determine one or more of the following: transmit power of a second PPDU from the second communication apparatus, or a quantity of fields used for sensing in the second PPDU.

S102: The first communication apparatus sends the first PPDU.

Correspondingly, the second communication apparatus receives the first PPDU.

S103: The second communication apparatus parses the first PPDU to obtain the first indication information.

In a possible implementation, the first PPDU includes the data frame, and the data frame may be a data frame of any type, for example, a data frame in the 802.11ax protocol, a data frame in the 802.11be protocol, or a data frame in a future-generation 802.11 communication protocol. This is not limited in this embodiment of this application. The data frame may be a MAC frame. A MAC header of the data frame may include the first indication information. The first indication information may be used to determine one or more of the following: the transmit power of the second PPDU from the second communication apparatus, or the quantity of fields used for sensing in the second PPDU.

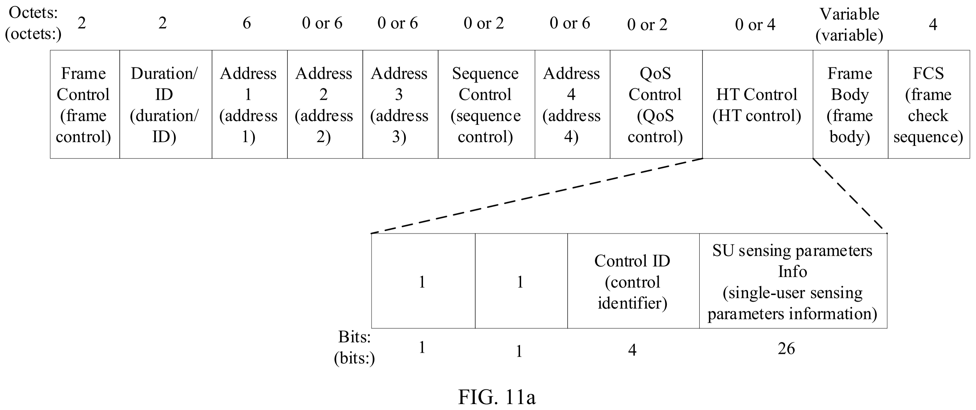

For example, the first indication information may be referred to as a single-user (single user, SU) sensing parameters information (SU sensing parameters information) field. Certainly, the first indication information may alternatively have another name, for example, a sensing information field or a sensing parameter field. A field name of the first indication information is not limited in this embodiment of this application. FIG. 11a is a diagram of a first possible frame format of a data frame according to an embodiment of this application. As shown in FIG. 11a, a MAC header of the data frame includes but is not limited to a high throughput (high throughput, HT) control (HT Control) field. The HT control field includes but is not limited to a single-user sensing parameters information (SU sensing parameters Info) field (namely, the first indication information). For example, a length of the SU sensing parameters info field is 26 bits. The length of the SU sensing parameters info field is not limited in this embodiment of this application. It can be understood that the HT control field is a field shared by a plurality of releases of protocols. For example, the first 2 bits (bit) of the HT control field being "10" indicates that the HT control field is used by the 802.1 1ac protocol; or the first 2 bits of the HT control field being "11" indicates that the HT control field is used by the 802.11 ax protocol, and indicates that the last 30 bits of the HT control field are an aggregate control (aggregate control, A-Control) field. For example, as shown in FIG. 11a, the first 2 bits of the HT control field are "11". This indicates that the data frame is a data frame in the 802.11ax protocol. A frame body (frame body) of the data frame includes data sent by the first communication apparatus to the second communication apparatus.

It can be understood that, for lengths and meanings of others field in FIG. 11a that are not described, reference may be made to descriptions in an existing standard, for example, the 802.11ax protocol. Details are not described in this embodiment of this application. It can be further understood that FIG. 11a shows only an example structure of a data frame in the 802.11ax protocol, the data frame in this embodiment of this application may be a data frame of any type, and any data frame including the first indication information falls within the protection scope of this application.

In a possible implementation, the MAC header of the data frame further includes third indication information. The third indication information may indicate whether the data frame carries the first indication information. For example, the third indication information being a first value indicates that the data frame carries the first indication information, or the third indication information being a second value or the third indication information having no value indicates that the data frame does not carry the first indication information. In this embodiment of this application, the third indication information is set to the first value, to indicate that the data frame carries the first indication information. The first value is 1, and the second value is 0; or the first value is 0, and the first value is 1. This is not limited in this embodiment of this application.

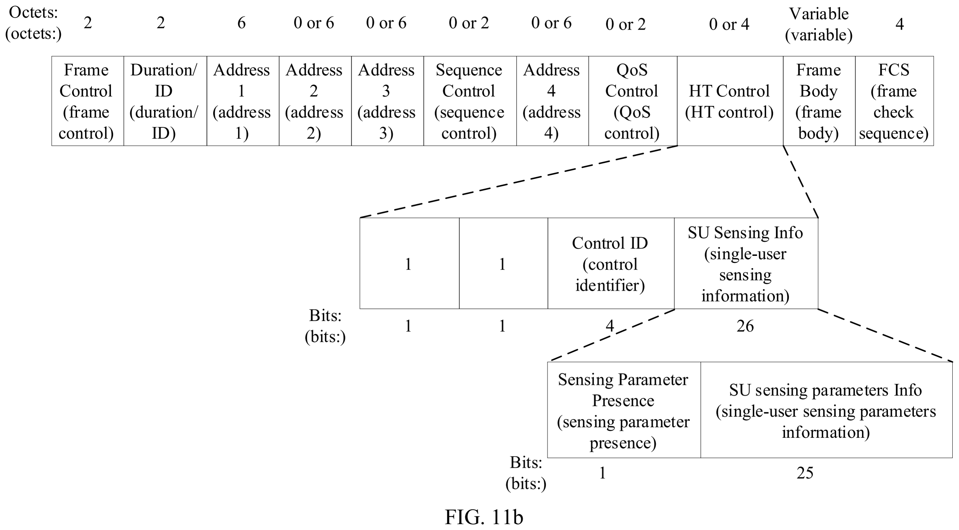

For example, the third indication information may be referred to as a sensing parameter presence (sensing parameters presence) field. Certainly, the third indication information may alternatively have another name, for example, a sensing information presence field. This is not limited in this embodiment of this application. FIG. 11b is a diagram of a second possible frame format of a data frame according to an embodiment of this application. As shown in FIG. 11b, an HT control field of the data frame includes but is not limited to a single-user sensing information (SU sensing Info) field. The single-user sensing information field includes a sensing parameter existence (sensing parameter presence) field (namely, the third indication information) and an SU sensing parameters info field (namely, the first indication information). For example, a length of the sensing parameter presence field is 1 bit. The sensing parameter presence field being a first value indicates that the data frame includes the SU sensing parameters info field, in other words, the data frame carries the first indication information. The sensing parameter presence field being a second value indicates that the data frame does not include the SU sensing parameters info field, in other words, the data frame does not carry the first indication information. In this embodiment of this application, the sensing parameter presence field is set to the first value, to indicate that the data frame includes the first indication information. For example, a length of the SU sensing parameters info field is 25 bits. The length of the sensing parameter presence field and the length of the SU sensing parameters info field are not limited in this embodiment of this application. As shown in FIG. 11b, the first 2 bits of the HT control field are "11". This indicates that the data frame is a data frame in the 802.11ax protocol. A frame body (frame body) of the data frame includes data sent by the first communication apparatus to the second communication apparatus.

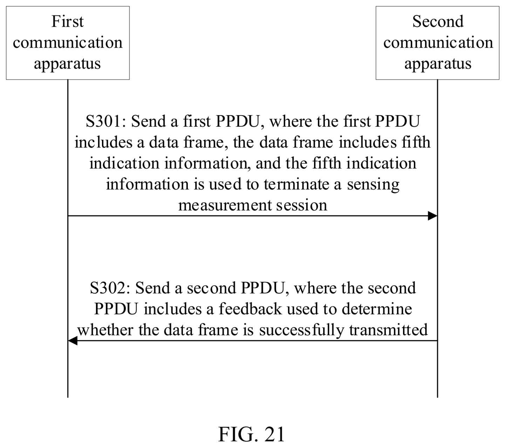

For another example, that the data frame does not carry the first indication information may include: The data frame carries other indication information, for example, fifth indication information, to terminate a sensing measurement session. In other words, the third indication information may indicate that the data frame carries the first indication information, or indicate that the data frame carries the fifth indication information. For example, the third indication information being a first value indicates that the data frame carries the first indication information, or the third indication information being a second value indicates that the data frame carries the fifth indication information. For a specific implementation of the fifth indication information, refer to descriptions in an embodiment shown in FIG. 21 below. Details are not described herein. Herein, the third indication information may be referred to as a function indication field or a function indication bit. Certainly, the third indication information may alternatively have another name. This is not limited in this embodiment of this application.

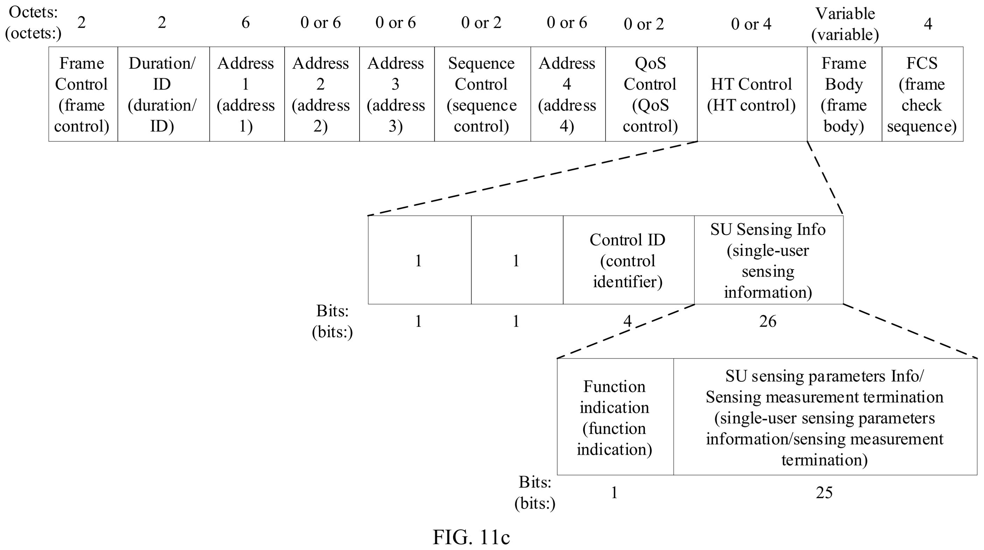

FIG. 11c is a diagram of a third possible frame format of a data frame according to an embodiment of this application. As shown in FIG. 11c, an HT control field of the data frame includes but is not limited to a single-user sensing information (SU sensing Info) field. The single-user sensing information field includes a function indication (Function indication) field (namely, the third indication information), and an SU sensing parameters info field (namely, the first indication information) or a sensing measurement termination (sensing measurement termination) field (namely, the fifth indication information). For example, a length of the function indication field is 1 bit. The function indication field being a first value indicates that the last 25 bits of the HT control field are the SU sensing parameters info field, in other words, indicates that the data frame carries the SU sensing parameters info field, that is, the data frame carries the first indication information. The function indication field being a second value indicates that the last 25 bits of the HT control field are the sensing measurement termination field, in other words, indicates that the data frame carries the sensing measurement termination field, that is, the data frame carries the fifth indication information. In this embodiment of this application, the function indication field is set to the first value, to indicate that the data frame carries the first indication information. For example, both a length of the SU sensing parameters info field and a length of the sensing measurement termination field are 25 bits. The length of the function indication field, the length of the SU sensing parameters info field, and the length of the sensing measurement termination field are not limited in this embodiment of this application. As shown in FIG. 11c, the first 2 bits of the HT control field are "11". This indicates that the data frame is a data frame in the 802.11ax protocol. A frame body (frame body) of the data frame includes data sent by the first communication apparatus to the second communication apparatus.

It can be understood that, for lengths and meanings of others field in FIG. 11b and FIG. 11c that are not described, reference may be made to descriptions in an existing standard, for example, the 802.11ax protocol. Details are not described in this embodiment of this application.

In a possible implementation, the first indication information (for example, the SU sensing parameters info field) may include one or more of the following: transmit power of the first PPDU, expected receive power of the first communication apparatus, a quantity of combinations of fields used for sensing in the second PPDU, or a quantity of fields used for sensing in a combination of fields used for sensing. In a possible implementation, the first indication information may further include one or more of the following: a spatial stream allocated to the second PPDU, or a resource unit (resource unit, RU) allocated to the second PPDU.

The transmit power of the first PPDU and the expected receive power may be used to determine the transmit power of the second PPDU. It can be understood that the transmit power, carried in the data frame, of the first PPDU may be used to calculate path loss between the first communication apparatus and the second communication apparatus. For example, a difference between the transmit power of the first PPDU and receive power used by the second communication apparatus to receive the first PPDU is the path loss. The transmit power used by the second communication apparatus to send the second PPDU may be determined based on the path loss plus the expected receive power of the first communication apparatus.

In a possible implementation, the quantity of fields used for sensing in the second PPDU may be determined based on the quantity of combinations of fields used for sensing and quantities of fields used for sensing in the combinations of fields used for sensing. For example, if the quantities of fields used for sensing in the combinations of fields used for sensing are the same, the quantity of fields used for sensing in the second PPDU is equal to a product of the quantity of combinations and a quantity of fields used for sensing in each combination. For another example, assuming that the quantities of fields used for sensing in the combinations of fields used for sensing are not completely the same, the quantity of fields used for sensing in the second PPDU is equal to a sum of quantities of fields used for sensing in the combinations of fields used for sensing. In a possible implementation, the quantities of fields used for sensing in the combinations of fields used for sensing may be predefined, preconfigured, pre-negotiated, or the like. In this way, the quantities of fields used for sensing in the combinations of fields used for sensing may not be carried in the first indication information, or certainly, may be carried in the first indication information. This is not limited in this embodiment of this application. For example, the quantities of fields used for sensing in the combinations of fields used for sensing are the same, and a quantity of fields used for sensing in each combination may be predefined or preconfigured. In this case, the first indication information does not need to include the quantities of fields used for sensing in the combinations of fields used for sensing, and only needs to include the quantity of combinations of fields used for sensing in the second PPDU.

In a possible implementation, the field used for sensing may be a long training field (long training field, LTF) of a first standard. For example, the first standard may be the 802.11ax protocol, the 802.11be protocol, or a future-generation 802.11 communication protocol. Assuming that the first standard is the 802.11ax protocol, the field used for sensing may be a high efficiencylong training field (HE-LTF), the combination of fields used for sensing may be an HE-LTF repetition block (HE-LTF repetition block), and the quantity of fields used for sensing in the combination of fields used for sensing is a quantity of HE-LTFs in the HE-LTF repetition block. Assuming that the first standard is the 802.11be protocol, the field used for sensing may be an extremely high throughput-long training field (EHT-LTF), the combination of fields used for sensing may be an EHT-LTF repetition block (EHT-LTF repetition block), and the quantity of fields used for sensing in the combination of fields used for sensing is a quantity of EHT-LTFs in the EHT-LTF repetition block.

It can be understood that the field used for sensing may be used for sensing measurement, and may also implement another function, for example, be used for channel estimation. This application focuses on the function of the field used for sensing measurement. It can be further understood that, in embodiments of this application, the "field used for sensing" may also be referred to as a "sequence used for sensing", and a field used for sensing (for example, an HE-LTF or an EHT-LTF) may also be understood as a sequence used for sensing.

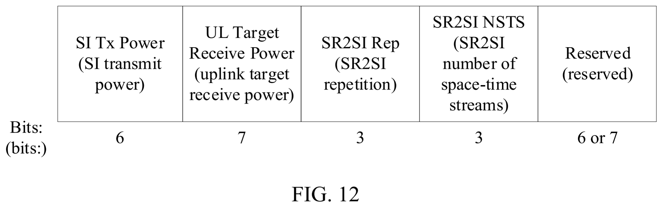

FIG. 12 is a diagram of a frame format of a single-user sensing parameters information field according to an embodiment of this application. As shown in FIG. 12, the SU sensing parameters info field (namely, the first indication information) includes but is not limited to one or more of the following: a sensing initiator (sensing initiator, SI) transmit power (SI Tx Power) field, an uplink (uplink, UL) target receive power (UL Target Receiver Power) field, an SR2SI repetition (SR2SI repetition, SR2SI Rep) field, and an SR2SI number of space-time streams (SR2SI number of space-time streams, SR2SI NSTS) field.

The SI Tx power field indicates transmit power used by a sensing initiator (namely, the first communication apparatus) to send a frame (to be specific, the data frame or the first PPDU) that carries the field. The UL target receiver power field indicates the expected receive power of the first communication apparatus. A frame receiver (the second communication apparatus in this embodiment of this application) may adjust transmit power of a subsequent PPDU (for example, the second PPDU) by using the field. The SR2SI rep field may indicate a quantity of HE-LTF repetition blocks in the second PPDU, and the SR2SI NSTS field may indicate a quantity of HE-LTFs in each HE-LTF repetition block.

In some scenarios, the data frame may not be a data frame in the 802.11ax protocol. For example, when the data frame is a data frame in the 802.11be protocol, the SR2SI rep field and the SR2SI NSTS field may indicate a quantity of EHT-LTF repetition blocks and a quantity of EHT-LTFs in each EHT-LTF repetition block respectively.

It can be understood that names and lengths of the fields in the SU sensing parameters info field are not limited in this embodiment of this application. For example, as shown in FIG. 12, when a length of the SU sensing parameters info field is 26 bits, reserved bits in the SU sensing parameters info field are 7 bits; or when a length of the SU sensing parameters info field is 25 bits, reserved bits in the SU sensing parameters info field are 6 bits.

Optionally, the SU sensing parameters info field (namely, the first indication information) may further include a spatial stream (spatial stream, SS) allocation (SS Allocation) field or a random access (random access, RA) resource unit information (RA-RU Information) field, which is not shown in FIG. 12. The SS allocation field may indicate a spatial stream allocated to the second PPDU, and the RA-RU information field may indicate an RU allocated to the second PPDU. For example, the SS allocation field or the RA-RU information field may be represented by a reserved bit in FIG. 12.

It can be understood that, when the data frame sent by the first communication apparatus includes the SU sensing parameters info field (namely, the first indication information), the first communication apparatus may indicate, to the second communication apparatus, a manner of feeding back the second PPDU, to perform sensing calculation by using the second PPDU.

In a possible implementation, after step S103, the PPDU transmission method shown in FIG. 10 further includes the following steps.

S104: The second communication apparatus sends the second PPDU based on the first indication information, where the second PPDU includes at least one field used for sensing and a feedback used to determine whether the data frame is successfully transmitted, and the quantity of fields used for sensing in the second PPDU is determined based on the first indication information.

Correspondingly, the first communication apparatus receives the second PPDU.

In a possible implementation, the second communication apparatus may obtain the first indication information by parsing the data frame in the first PPDU. If the first indication information is used to determine the transmit power of the second PPDU from the second communication apparatus, the second communication apparatus may send the second PPDU by using the transmit power. In this case, a physical layer header (PHY header) of the second PPDU may include a field used for sensing, for example, an HE-LTF or an EHT-LTF. For example, if the first indication information (for example, the SU sensing parameters info field) includes the SI Tx power field and the UL target receiver power field and does not include the SR2SI rep field or the SR2SI NSTS field, the quantity of fields used for sensing in the second PPDU may be a quantity of HE-LTFs or EHT-LTFs in an existing ACK PPDU. For example, the second PPDU may be an existing ACK PPDU, or an existing PPDU that carries a BA frame. If the first indication information is used to determine the quantity of fields used for sensing in the second PPDU, the second communication apparatus may determine transmit power by itself, and send the second PPDU. In this case, a physical layer header of the second PPDU includes at least one field used for sensing, and the quantity of fields used for sensing in the second PPDU is equal to a quantity determined based on the first indication information. For example, if the first indication information (for example, the SU sensing parameters info field) includes the SR2SI rep field and/or the SR2SI NSTS field and does not include the SI Tx power field or the UL target receiver power field, the quantity of fields used for sensing in the second PPDU is equal to a product of a quantity of HE-LTF repetition blocks and a quantity of HE-LTFs in each HE-LTF repetition block, or a product of a quantity of EHT-LTF repetition blocks and a quantity of EHT-LTFs in each EHT-LTF repetition block.

Certainly, if the first indication information is used to determine the transmit power of the second PPDU from the second communication apparatus and the quantity of fields used for sensing in the second PPDU, the second communication apparatus sends the second PPDU by using the transmit power, and the quantity of fields used for sensing in the second PPDU is equal to a quantity determined based on the first indication information.

It can be understood that a larger quantity of fields used for sensing in the second PPDU indicates better sensing performance of the second PPDU. Therefore, the quantity of fields used for sensing in the second PPDU is indicated, to improve sensing performance.

In a possible implementation, a physical layer service data unit (PHY service data unit, PSDU) of the second PPDU includes an acknowledgement (acknowledge, ACK) frame or a block acknowledgement (Block Ack, BA) frame. The ACK frame may be used to determine that the data frame in the first PPDU is successfully transmitted. The BA frame may be used to determine whether the data frame in the first PPDU is successfully transmitted.

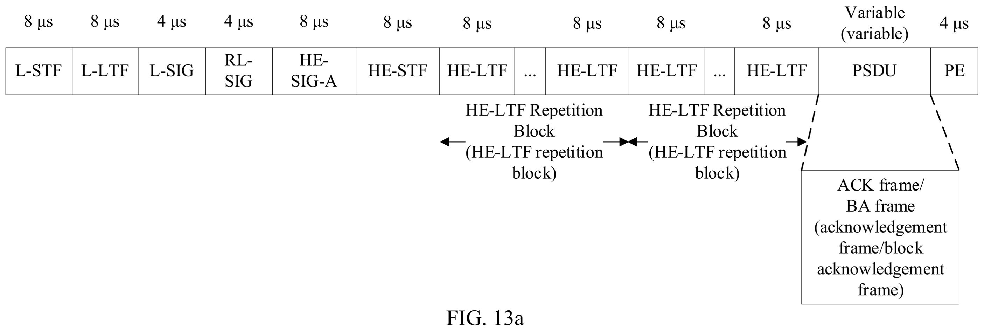

For example, FIG. 13a is a diagram of a possible frame format of a second PPDU according to an embodiment of this application. FIG. 13a shows a possible frame format of the second PPDU in a case in which the field used for sensing is an HE-LTF. As shown in FIG. 13a, a PHY header of the second PPDU includes at least one HE-LTF, and a quantity of HE-LTFs in the second PPDU is variable, and is indicated by the first indication information (for example, the SU sensing parameters info field). For a specific indication manner, refer to the foregoing descriptions. Details are not described herein again.

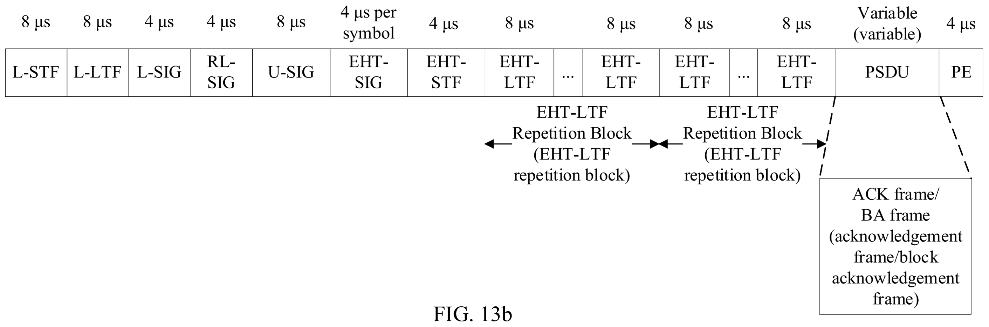

For another example, FIG. 13b is a diagram of another possible frame format of a second PPDU according to an embodiment of this application. FIG. 13b shows a possible frame format of the second PPDU in a case in which the field used for sensing is an EHT-LTF. As shown in FIG. 13b, a PHY header of the second PPDU includes at least one EHT-LTF, and a quantity of EHT-LTFs in the second PPDU is variable, and is indicated by the first indication information (for example, the SU sensing parameters info field). For a specific indication manner, refer to the foregoing descriptions. Details are not described herein again.

It can be understood that, as shown in FIG. 13a and FIG. 13b, a PSDU of the second PPDU carries an ACK frame or a BA frame, and a specific type of a carried acknowledgement frame needs to be determined based on a type of a data frame sent by a peer party (the first communication apparatus in this embodiment of this application).

It can be understood that a structure of the second PPDU in this embodiment of this application is not limited to the two PPDU structures shown in FIG. 13a and FIG. 13b. When both sensing and another Wi-Fi protocol release, for example, Wi-Fi 5 or future Wi-Fi 8, are present, an ACK PPDU in the protocol release may be constructed, according to a same design method, to be a second PPDU that can be used for sensing measurement, so that the second PPDU can be better used for sensing calculation.

S105: The first communication apparatus performs sensing measurement based on at the least one field used for sensing in the second PPDU.

In a possible implementation, after receiving the second PPDU, the first communication apparatus may perform sensing calculation by using at least one field (for example, an HE-LTF or an EHT-LTF) used for sensing in the physical layer header of the second PPDU. For a specific process of the sensing calculation, refer to the conventional technology. Details are not described in this embodiment of this application. In addition, the first communication apparatus may further learn, based on the ACK frame carried in the second PPDU, that data transmission between the first communication apparatus and the second communication apparatus is successful, to be specific, the data frame in the first PPDU is successfully transmitted. If the second PPDU carries the BA frame, the first communication apparatus may learn whether data transmission between the first communication apparatus and the second communication apparatus is successful.

Therefore, according to this embodiment of this application, the first communication apparatus and the second communication apparatus can simultaneously (or concurrently) perform communication and sensing measurement, to alleviate degradation of communication QoS or degradation of sensing quality caused by a conflict between the sensing measurement and the communication.

It can be understood that the communication in this embodiment of this application may be single-user downlink communication or single-user uplink communication. To better understand a process of the PPDU transmission method in this embodiment of this application, the following provides descriptions by using two examples. It can be understood that, in the following two examples, an AP has established a sensing measurement session to a STA, to be specific, the AP and the STA have negotiated upon an operation parameter that needs to be used in a sensing procedure.

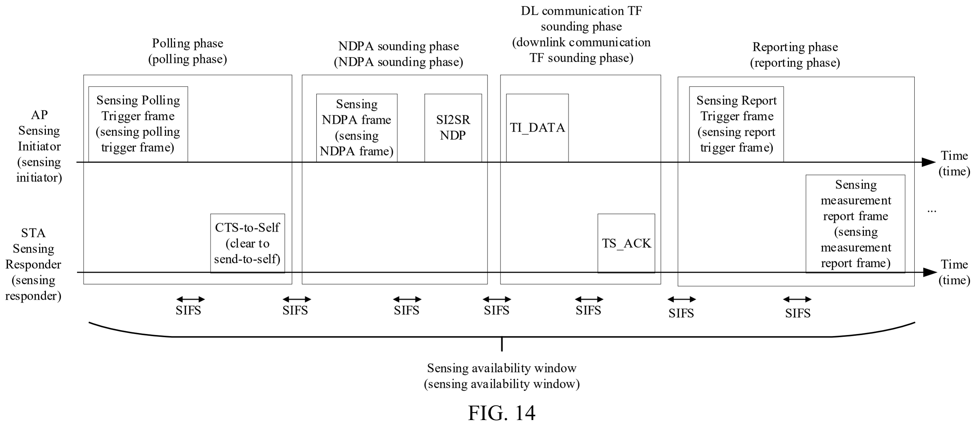

For example, FIG. 14 is a diagram of a possible sensing measurement exchange according to an embodiment of this application. FIG. 14 shows how an AP and a STA perform sensing measurement during downlink communication. As shown in FIG. 14, the AP learns, in a polling phase based on a CTS-to-self frame returned by the STA, that the STA can perform sensing. If the AP has cached data that needs to be sent to the STA, the AP may perform a downlink communication TF sounding phase (DL Communication TF Sounding phase) to simultaneously complete sensing measurement and downlink data transmission. It can be understood that the DL communication TF sounding phase is a phase designed in this embodiment of this application to simultaneously implement communication and sensing measurement. In the DL communication TF sounding phase, the AP (the first communication apparatus) first sends a TI_DATA frame (namely, the data frame in the first PPDU). A possible frame structure of the TI_DATA frame is shown in any one of FIG. 11a to FIG. 11c. The frame is a data frame carrying an SU sensing parameters info field (namely, the first indication information). After one SIFS, the STA (the second communication apparatus) returns a TS_ACK PPDU (namely, the second PPDU). A possible frame structure of the TS_ACK PPDU is shown in FIG. 13a or FIG. 13b. A quantity of HE-LTFs/EHT-LTFs (namely, fields used for sensing) in the TS_ACK PPDU is indicated by the SU sensing parameters info field in the TI_DATA frame. After receiving the TS_ACK PPDU (namely, the second PPDU), the AP (the first communication apparatus) may perform sensing calculation by using an HE-LTF/EHT-LTF in a PHY header of the TS_ACK PPDU, and can learn, based on an ACK frame or a BA frame carried in the TS_ACK PPDU, whether data transmission between the AP and the STA is successful. Therefore, in the DL communication TF sounding phase, the AP and the STA simultaneously complete communication and sensing measurement.

FIG. 14 further shows an NDPA sounding phase and a reporting phase. Actually, there are a plurality of phase combination manners in a sensing measurement exchange procedure in which communication and sensing measurement can be simultaneously implemented. However, it needs to be ensured that the sensing measurement exchange procedure includes the DL communication TF sounding phase in this embodiment of this application, because single-user downlink communication and sensing measurement can be simultaneously implemented in this phase.

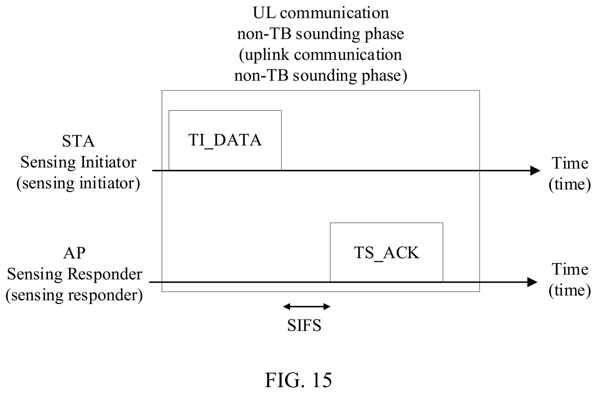

For example, FIG. 15 is a diagram of another possible sensing measurement exchange according to an embodiment of this application. FIG. 15 shows how an AP and a STA perform sensing measurement during uplink communication. As shown in FIG. 15, as a sensing initiator, a STA needs to perform sensing with an AP, and has cached data that needs to be sent to the AP. In this case, the STA and the AP may perform an uplink communication non-TB sounding phase (UL Communication non-TB Sounding phase) to simultaneously complete sensing measurement and uplink data transmission. It can be understood that the UL communication non-TB sounding phase is a phase designed in this embodiment of this application to simultaneously implement communication and sensing measurement. In the UL communication non-TB sounding phase, the STA (the first communication apparatus) first sends a TI_DATA frame (namely, the data frame in the first PPDU). A possible frame structure of the TI_DATA frame is shown in any one of FIG. 11a to FIG. 11c. The frame is a data frame carrying an SU sensing parameters info field (namely, the first indication information). After one SIFS, the AP (the second communication apparatus) returns a TS_ACK PPDU (namely, the second PPDU). A possible frame structure of the TS_ACK PPDU is shown in FIG. 13a or FIG. 13b. A quantity of HE-LTFs/EHT-LTFs (namely, fields used for sensing) in the TS_ACK PPDU is indicated by the SU sensing parameters info field in the TI_DATA frame. After receiving the TS_ACK PPDU (namely, the second PPDU), the STA (the first communication apparatus) may perform sensing calculation by using an HE-LTF/EHT-LTF in a PHY header of the TS_ACK PPDU, and can learn, based on an ACK frame or a BA frame carried in the TS_ACK PPDU, whether data transmission between the STA and the AP is successful. Therefore, in the UL communication non-TB sounding phase, the AP and the STA simultaneously complete uplink communication and sensing measurement.

It can be understood that, for brevity, FIG. 15 merely shows the uplink communication non-TB sounding phase as an example. During actual application, a non-TB sensing measurement exchange may further include other phases, for example, a reporting phase. Certainly, a non-TB sensing measurement exchange may alternatively include only the uplink communication non-TB sounding phase. This is not limited in this embodiment of this application.

It can be learned that a difference between sensing measurement during single-user uplink communication and sensing measurement during single-user downlink communication lies in: During single-user uplink communication, a sensing initiator is a STA, and sensing measurement is also performed by the STA. During single-user downlink communication, a sensing initiator is an AP, and sensing measurement is also performed by the AP.

In this embodiment of this application, the first communication apparatus sends the TI_DATA frame (namely, the data frame in the first PPDU) carrying the SU sensing parameters info field (namely, the first indication information), and the second communication apparatus returns the TS_ACK PPDU (namely, the second PPDU) that can be used for sensing. A frame body (frame body) of the TI_DATA frame includes a data payload, and the TS_ACK PPDU includes the ACK/BA frame. Therefore, normal communication can be ensured through interaction between the TI_DATA frame and the TS_ACK PPDU. In addition, the TI_DATA frame includes the SU sensing parameters info field and can indicate to send a sensing PPDU (for example, the TS_ACK PPDU), and the TS_ACK PPDU is the sensing PPDU indicated by the TI_DATA frame. Therefore, sensing is completed through interaction between the TI_DATA frame and the TS_ACK PPDU. Therefore, in this embodiment of this application, it is ensured that single-user uplink/downlink communication and sensing are simultaneously performed. In the conventional technology, if a communication requirement with a higher priority arises during sensing, a sensing procedure is terminated, leading to a delay in obtaining a sensing result and degrading quality of service of sensing. Alternatively, if there is a sensing requirement with a higher priority during communication, the communication needs to be terminated, resulting in an increase in a data delay and degradation of QoS.

Therefore, in this embodiment of this application, degradation of communication QoS or sensing quality caused by a conflict between sensing and communication can be further alleviated.

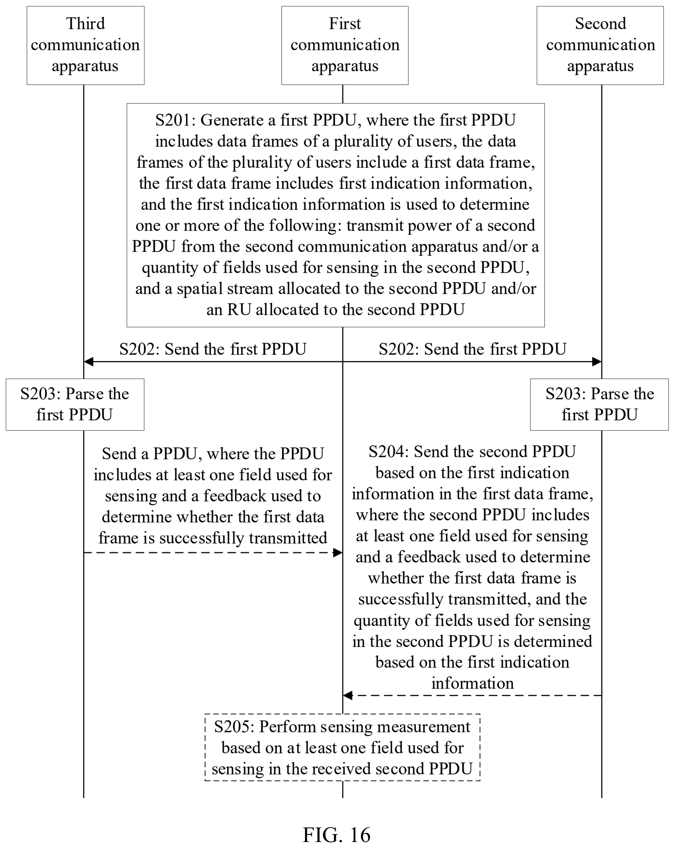

FIG. 16 is a second schematic flowchart of a PPDU transmission method according to an embodiment of this application. In the method, a signaling interaction procedure of multi-user downlink communication in which sensing measurement can be implemented and possible frame formats are mainly described. In this embodiment of this application, a first communication apparatus is an AP, and a second communication apparatus is a non-AP STA (or referred to as a STA).

As shown in FIG. 16, the PPDU transmission method includes but is not limited to the following steps.

S201: The first communication apparatus generates a first PPDU, where the first PPDU includes data frames of a plurality of users, the data frames of the plurality of users include a first data frame, the first data frame includes first indication information, and the first indication information is used to determine one or more of the following: transmit power of a second PPDU from the second communication apparatus and/or a quantity of fields used for sensing in the second PPDU, and a spatial stream allocated to the second PPDU and/or an RU allocated to the second PPDU.

S202: The first communication apparatus sends the first PPDU.

Correspondingly, the second communication apparatus receives the first PPDU. A third communication apparatus may also receive the first PPDU.

S203: The second communication apparatus parses the first PPDU. Correspondingly, the third communication apparatus may also parse the first PPDU.

In a possible implementation, the first PPDU may include the data frames of the plurality of users. The data frame may be a data frame of any type, for example, a data frame in the 802.11ax protocol, a data frame in the 802.11be protocol, or a data frame in a future-generation 802.11 communication protocol. This is not limited in this embodiment of this application.

If the first communication apparatus wants to perform sensing measurement with a user, the first communication apparatus may include the first indication information in a data frame corresponding to the user. In other words, the data frames of the plurality of users include the first data frame, and the first data frame carries the first indication information. If the first communication apparatus wants to perform sensing measurement with a plurality of users, the first communication apparatus may separately include corresponding indication information in data frames corresponding to the plurality of users. For example, it is assumed that the first PPDU includes data frames of three users, and the first communication apparatus wants to perform sensing measurement with two of the users. In this case, the first communication apparatus may include corresponding indication information in data frames (for example, the first data frame and a second data frame) corresponding to the two users. For example, the first data frame carries the first indication information, and the second data frame carries second indication information. Frame formats of the first indication information and the second indication information may be the same. However, specific values may be different, or certainly, may be the same. The specific values are determined by the first communication apparatus. In short, the first PPDU may include data frames of different structures. For example, data frames of a part of users may be existing data frames, and another part of data frames carry indication information newly designed in this embodiment of this application.

In some scenarios, if the first communication apparatus needs to perform sensing measurement and data of a plurality of users is cached on the first communication apparatus, data frames included in the first PPDU are of a same structure, and all of the data frames carry indication information newly designed in this embodiment of this application. It can be understood that, to better implement multi-user (multiple user, MU) downlink communication, the structures of the data frames in the first PPDU are consistent, to better facilitate MU demodulation.

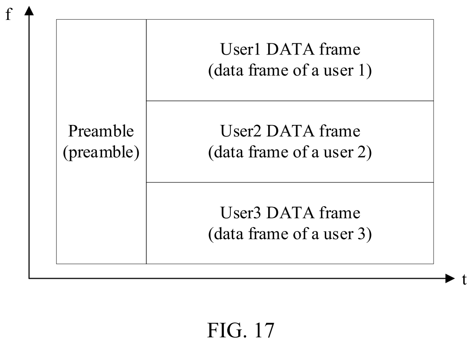

In a possible implementation, the first communication apparatus may send data frames of a plurality of users in a multi-user transmission mode specified in a Wi-Fi communication protocol, for example, multi-user multiple-input multiple-output (MU-multiple input multiple output, MU-MIMO) or orthogonal frequency division multiple access (orthogonal frequency division multiple access, OFDMA). When the first communication apparatus sends data of a plurality of users in the OFMDA mode, for example, a possible structure of the first PPDU is shown in FIG. 17. A horizontal coordinate represents a time (time) resource, denoted as "t". A vertical coordinate represents a frequency (frequency) resource, denoted as "f". As shown in FIG. 17, a MAC part of the first PPDU includes data frames to be sent to several users (user). For example, the MAC part of the first PPDU includes a data frame of a user 1, a data frame of a user 2, and a data frame of a user 3.

For ease of description, an example in which the first PPDU includes the first data frame of a first user and the second data frame of a second user is used below for description. The first data frame and the second data frame may be all data frames in the first PPDU, or may be a part of data frames in the first PPDU. This is not limited in this embodiment of this application. A MAC header of the first data frame includes the first indication information, and a MAC header of the second data frame includes the second indication information. The frame formats of the first indication information and the second indication information are the same. However, the specific values may be the same or different. The specific values are determined by the first communication apparatus.

In a possible implementation, the first indication information may be used to determine the transmit power of the second PPDU from the second communication apparatus (namely, the first user) and/or the quantity of fields used for sensing in the second PPDU, and the spatial stream allocated to the second PPDU and/or the RU allocated to the second PPDU. Correspondingly, the second indication information may be used to determine transmit power of a third PPDU from the third communication apparatus (namely, the second user) and/or a quantity of fields used for sensing in the third PPDU, and a spatial stream allocated to the third PPDU and/or an RU allocated to the third PPDU. In other words, the first indication information and the second indication information may be summarized as being used to determine transmit power of a PPDU from a frame receiver and/or a quantity of fields used for sensing in the PPDU, and a spatial stream allocated to the PPDU and/or an RU allocated to the PPDU. For the first data frame, the frame receiver is the second communication apparatus. For the second data frame, the frame receiver is the third communication apparatus. It can be understood that there are different frame receivers for different data frames in the first PPDU.

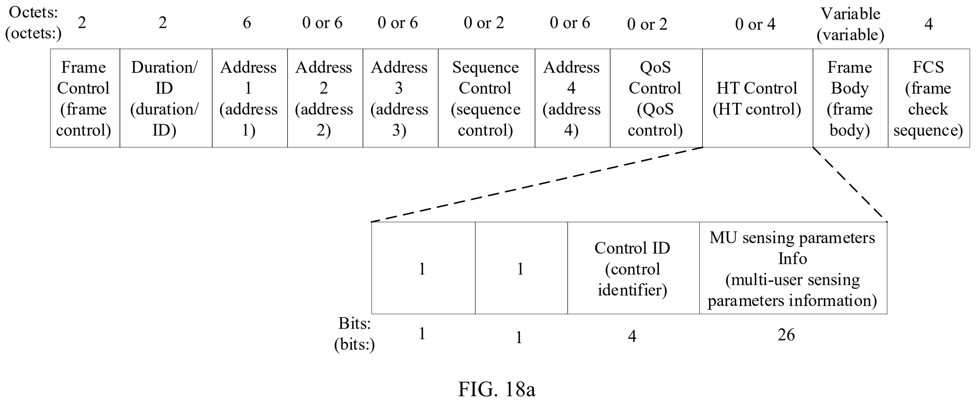

For example, frame structures of the first data frame and the second data frame are the same. FIG. 18a is a diagram of a fourth possible frame format of a data frame according to an embodiment of this application. The data frame shown in FIG. 18a may be the first data frame or the second data frame. As shown in FIG. 18a, an HT control field of the data frame includes but is not limited to a multi-user sensing parameters information (MU sensing parameters Info) field (namely, the first indication information or the second indication information). For example, a length of the MU sensing parameters info field is 26 bits. The length of the MU sensing parameters info field is not limited in this embodiment of this application. As shown in FIG. 18a, the first 2 bits of the HT control field are "11". This indicates that the data frame is a data frame in the 802.11ax protocol. A frame body (frame body) of the data frame includes data.

It can be understood that the MU sensing parameters info field may alternatively have another name, for example, an MU sensing parameters field. This is not limited in this embodiment of this application.

In a possible implementation, both the MAC header of the first data frame and the MAC header of the second data frame include third indication information. The third indication information may indicate whether a data frame to which the third indication information belongs carries the MU sensing parameters info field (namely, the first indication information or the second indication information). For a specific implementation of the third indication information, refer to related descriptions in the embodiment shown in FIG. 10. Details are not described herein again.

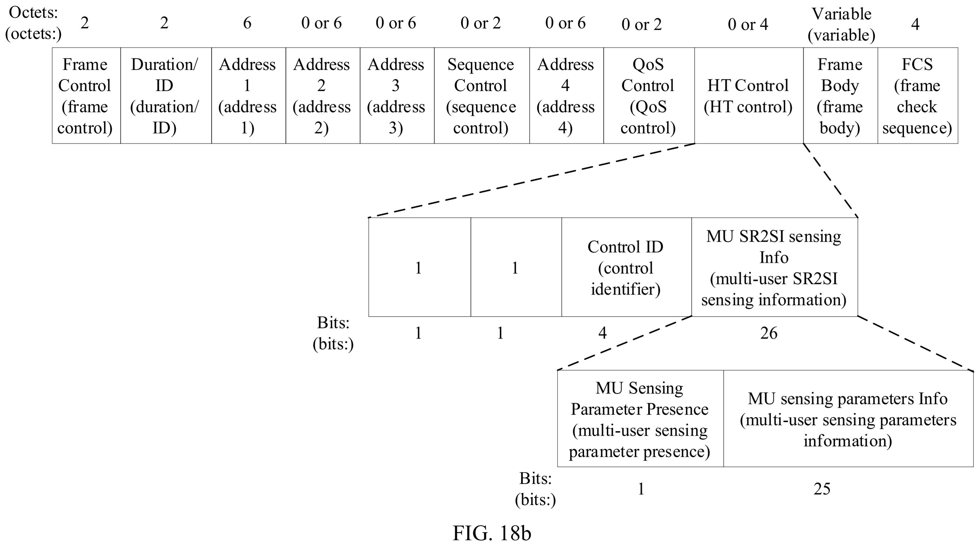

For example, frame structures of the first data frame and the second data frame are the same. FIG. 18b is a diagram of a fifth possible frame format of a data frame according to an embodiment of this application. The data frame shown in FIG. 18b may be the first data frame or the second data frame. As shown in FIG. 18b, an HT control field of the data frame includes but is not limited to a multi-user SR2SI sensing information (MU SR2SI sensing Info) field. The MU SR2SI sensing info field includes a multi-user sensing parameter presence (MU sensing parameter presence) field (namely, the third indication information) and an MU sensing parameters info field (namely, the first indication information or the second indication information). For example, a length of the multi-user sensing parameter presence field is 1 bit. The multi-user sensing parameter presence field being a first value indicates that the data frame includes the MU sensing parameters info field. The multi-user sensing parameter presence field being a second value indicates that the data frame does not include the MU sensing parameters info field. In this embodiment of this application, the multi-user sensing parameter presence field is set to the first value, to indicate that the data frame includes the MU sensing parameters info field. For example, a length of the MU sensing parameters info field is 25 bits. The length of the multi-user sensing parameter presence field and the length of the MU sensing parameters info field are not limited in this embodiment of this application. As shown in FIG. 18b, the first 2 bits of the HT control field are "11". This indicates that the data frame is a data frame in the 802.11ax protocol. A frame body (frame body) of the data frame includes data.

It can be understood that the MU sensing parameter presence field may alternatively have another name, for example, a sensing parameter presence field. This is not limited in this embodiment of this application.

For another example, that the data frame to which the third indication information belongs does not carry the MU sensing parameters info field may include: The data frame carries another field, for example, a sensing measurement termination field (namely, fifth indication information), to terminate a sensing measurement session. In other words, the third indication information may indicate that the data frame carries the MU sensing parameters info field, or indicate that the data frame carries the sensing measurement termination field. For a specific implementation of the sensing measurement termination field, refer to descriptions in an embodiment shown in FIG. 21 below. Details are not described herein.

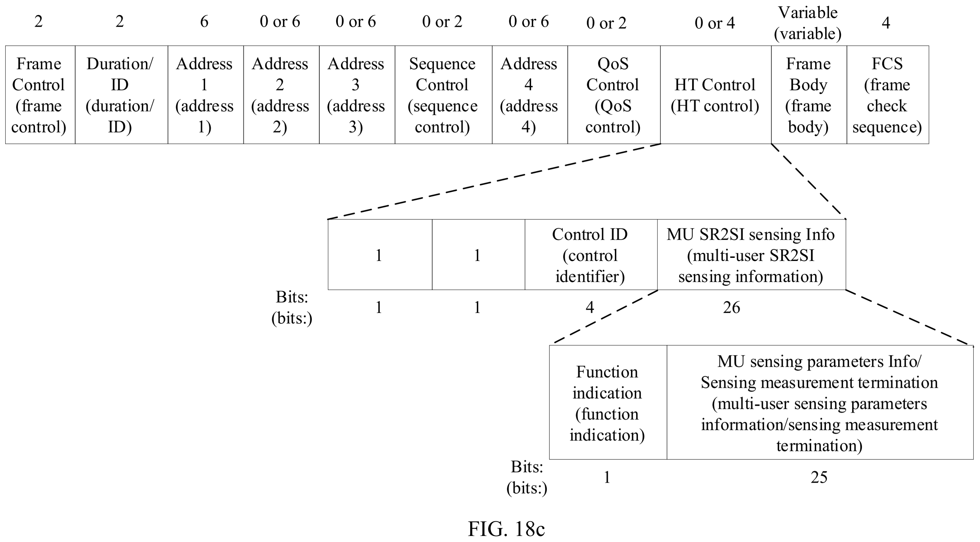

FIG. 18c is a diagram of a sixth possible frame format of a data frame according to an embodiment of this application. The data frame shown in FIG. 18c may be the first data frame or the second data frame. As shown in FIG. 18c, an HT control field of the data frame includes but is not limited to an MU SR2SI sensing info field. The MU SR2SI sensing info field includes a function indication (Function indication) field (namely, the third indication information), and an MU sensing parameters info field (namely, the first indication information or the second indication information) or a sensing measurement termination (sensing measurement termination) field (namely, the fifth indication information). For example, a length of the function indication field is 1 bit. The function indication field being a first value indicates that the last 25 bits of the HT control field are the MU sensing parameters info field or that the data frame carries the MU sensing parameters info field. The function indication field being a second value indicates that the last 25 bits of the HT control field are the sensing measurement termination field. In this embodiment of this application, the function indication field is set to the first value, to indicate that the data frame carries the MU sensing parameters info field. For example, both a length of the MU sensing parameters info field and a length of the sensing measurement termination field are 25 bits. The length of the function indication field, the length of the MU sensing parameters info field, and the length of the sensing measurement termination field are not limited in this embodiment of this application. As shown in FIG. 18c, the first 2 bits of the HT control field are "11". This indicates that the data frame is a data frame in the 802.11ax protocol. A frame body (frame body) of the data frame includes data. It can be understood that the function indication field may alternatively have another name, for example, a function control field. This is not limited in this embodiment of this application.

It can be understood that, for lengths and meanings of others field in FIG. 18a to FIG. 18c that are not described, reference may be made to descriptions in an existing standard, for example, the 802.11ax protocol. Details are not described in this embodiment of this application. It can be further understood that FIG. 18a to FIG. 18c show only example structures of a data frame in the 802.11ax protocol, the data frame in this embodiment of this application may be a data frame of any type, and any data frame including the MU sensing parameters info field falls within the protection scope of this application.

In a possible implementation, the MU sensing parameters info field (namely, the first indication information or the second indication information) may include one or more of the following: transmit power of the first PPDU, expected receive power of the first communication apparatus, a quantity of combinations of fields used for sensing in a PPDU from a frame receiver, a quantity of fields used for sensing in a combination of fields used for sensing, a spatial stream allocated to the PPDU, or an RU allocated to the PPDU. The transmit power of the first PPDU and the expected receive power may be used to determine transmit power used by the frame receiver to send the PPDU. For a specific determining manner, refer to the descriptions in the embodiment shown in FIG. 10. Details are not described herein again. In a possible implementation, a quantity of fields used for sensing in the PPDU sent by the frame receiver may be determined based on the quantity of combinations of fields used for sensing and quantities of fields used for sensing in the combinations of fields used for sensing. For a specific determining manner, refer to the descriptions in the embodiment shown in FIG. 10. Details are not described herein again. For descriptions of the fields used for sensing and the combinations thereof, refer to the descriptions in the embodiment shown in FIG. 10. Details are not described herein again.

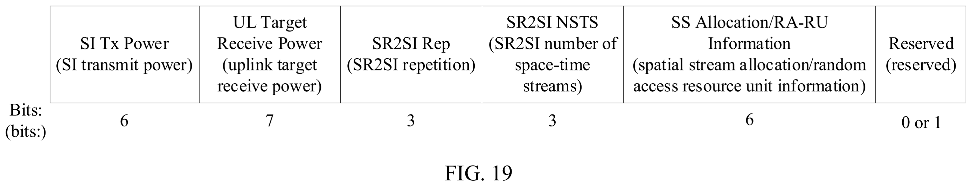

FIG. 19 is a diagram of a frame format of a multi-user sensing parameters information field according to an embodiment of this application. As shown in FIG. 19, the MU sensing parameters info field (namely, the first indication information or the second indication information) includes but is not limited to one or more of the following: an SI Tx power field, a UL target receiver power field, an SR2SI rep field, an SR2SI NSTS field, an SS allocation field, or an RA-RU information field. For descriptions of the SI Tx power field, the UL target receiver power field, the SR2SI rep field, and the SR2SI NSTS field, refer to the descriptions of FIG. 12. Details are not described herein again.

The SS allocation field may indicate a spatial stream allocated to a PPDU of a frame receiver, and the RA-RU information field may indicate an RU allocated to the PPDU of the frame receiver. Different frame receivers send PPDUs on corresponding spatial streams or RUs, to avoid mutual interference.

It can be understood that names and lengths of the fields in the MU sensing parameters info field are not limited in this embodiment of this application. For example, as shown in FIG. 19, when a length of the MU sensing parameters info field is 26 bits, the MU sensing parameters info field includes 1 reserved bit; or when a length of the MU sensing parameters info field is 25 bits, the MU sensing parameters info field may not include a reserved bit.

In some scenarios, a data frame of each user in the first PPDU includes an MU sensing parameters info field. However, the first communication apparatus may not perform sensing measurement with all users, and a specific user with which the first communication apparatus performs sensing measurement is determined by the first communication apparatus. For example, the first communication apparatus needs to perform sensing measurement with a user 1, and the first communication apparatus may indicate, in a data frame of the user 1, a PPDU that is to be sent by the user 1 to carry a plurality of fields (for example, an HE-LTF or an EHT-LTF) used for sensing, so that the first communication apparatus performs sensing calculation based on the received PPDU.

It can be understood that, when one or more data frames sent by the first communication apparatus carry the MU sensing parameters info field (namely, the first indication information or the second indication information), the first communication apparatus may indicate, to one or more frame receivers, a manner of feeding back a PPDU, to perform sensing calculation by using a fed-back PPDU.

In a possible implementation, after step S203, the PPDU transmission method shown in FIG. 16 further includes the following steps.

S204: The second communication apparatus sends the second PPDU based on the first indication information in the first data frame, where the second PPDU includes at least one field used for sensing and a feedback used to determine whether the first data frame is successfully transmitted, and the quantity of fields used for sensing in the second PPDU is determined based on the first indication information.

Correspondingly, the first communication apparatus receives the second PPDU.

In a possible implementation, the second communication apparatus may obtain the first indication information (for example, the MU sensing parameters info field) by parsing the first data frame, in the first PPDU, that is sent to the second communication apparatus. Then the second communication apparatus sends the second PPDU based on the first indication information (for example, the MU sensing parameters info field). For example, the second communication apparatus sends the second PPDU on the allocated spatial stream or RU, where a PHY header of the second PPDU includes at least one field used for sensing, for example, an HE-LTF or an EHT-LTF. If the first indication information (for example, the MU sensing parameters info field) includes the SI Tx power field and the UL target receiver power field, the second communication apparatus further needs to send the second PPDU by using transmit power determined based on the SI Tx power field and the UL target receiver power field. If the first indication information (for example, the MU sensing parameters info field) includes the SR2SI rep field and/or the SR2SI NSTS field, the quantity of fields used for sensing in the second PPDU is equal to a product of a quantity of HE-LTF repetition blocks and a quantity of HE-LTFs in each HE-LTF repetition block, or a product of a quantity of EHT-LTF repetition blocks and a quantity of EHT-LTFs in each EHT-LTF repetition block.

In a possible implementation, a PSDU of the second PPDU includes an ACK frame or a BA frame. The ACK frame may be used to determine that the first data frame is successfully transmitted. The BA frame may be used to determine whether the first data frame is successfully transmitted. For example, a frame format of the second PPDU may be shown in FIG. 13a or FIG. 13b. Details are not described herein again.

In a possible implementation, because the first PPDU includes the data frames of the plurality of users, another communication apparatus also receives the first PPDU, and obtains a data frame of the another communication apparatus from the first PPDU. For example, the third communication apparatus receives the first PPDU, and may obtain the second indication information (for example, the MU sensing parameters info field) by parsing the second data frame, in the first PPDU, that is sent to the third communication apparatus. The third communication apparatus may send the third PPDU based on the second indication information (for example, the MU sensing parameters info field). For a specific implementation, refer to the foregoing implementation in which the second communication apparatus sends the second PPDU based on the first indication information. Details are not described herein again.

S205: The first communication apparatus performs sensing measurement based on at least one field used for sensing in the received second PPDU.

In a possible implementation, if the first communication apparatus wants to perform sensing with the second communication apparatus, after receiving the second PPDU, the first communication apparatus may perform sensing calculation by using at least one field (for example, an HE-LTF or an EHT-LTF) used for sensing in the physical layer header of the second PPDU. For a specific process of the sensing calculation, refer to the conventional technology. Details are not described in this embodiment of this application. In addition, the first communication apparatus may further learn, based on the ACK frame carried in the second PPDU, that data transmission between the first communication apparatus and the second communication apparatus is successful, to be specific, the first data frame is successfully transmitted. If the second PPDU carries the BA frame, the first communication apparatus may learn whether data transmission between the first communication apparatus and the second communication apparatus is successful.

If the first communication apparatus further wants to perform sensing with another communication apparatus, after receiving a PPDU sent by the another communication apparatus, the first communication apparatus may also perform sensing calculation by using at least one field (for example, an HE-LTF or an EHT-LTF) used for sensing in a physical layer header of the PPDU. In addition, the first communication apparatus may further learn, based on an ACK frame or a BA frame carried in the PPDU sent by the another communication apparatus, whether data transmission between the first communication apparatus and the another communication apparatus is successful.

Therefore, in this embodiment of this application, multi-user downlink communication and sensing measurement can be simultaneously (or concurrently) performed, to alleviate degradation of communication QoS or degradation of sensing quality caused by a conflict between the sensing measurement and the communication.

To better understand a process of the PPDU transmission method in this embodiment of this application, the following provides descriptions by using an example. It can be understood that, in the following example, an AP has established sensing measurement sessions to all STAs, to be specific, the AP and all the STAs have negotiated upon an operation parameter that needs to be used in a sensing procedure.

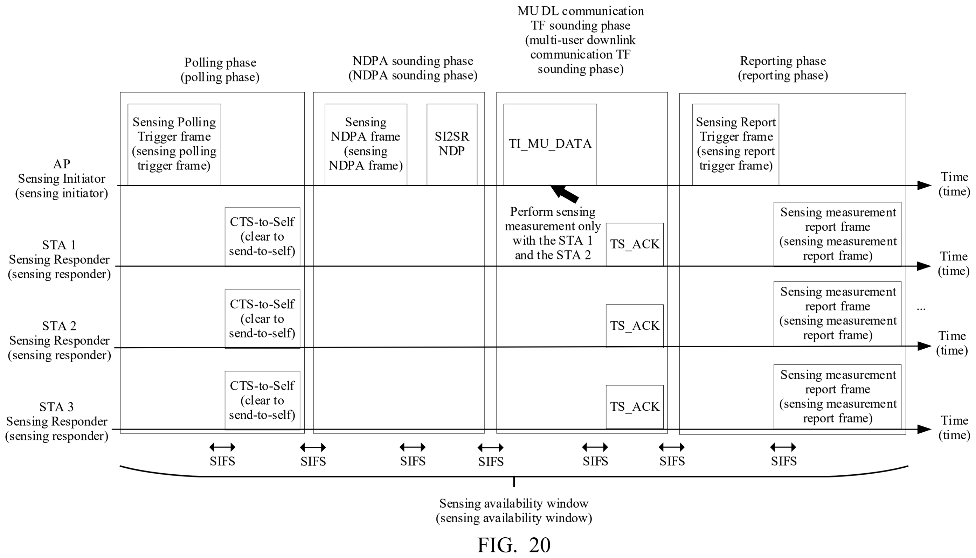

For example, FIG. 20 is a diagram of still another possible sensing measurement exchange according to an embodiment of this application. FIG. 20 shows how an AP and a plurality of STAs perform sensing measurement during downlink communication. As shown in FIG. 20, it is assumed that the AP needs to perform sensing measurement and data of the plurality of STAs is cached on the AP. In this case, the AP may perform a multi-user downlink communication TF sounding phase (MU DL Communication TF Sounding phase) with the plurality of STAs to simultaneously complete sensing measurement and multi-user downlink data transmission. It can be understood that the MU DL communication TF sounding phase is a phase designed in this embodiment of this application to simultaneously implement multi-user downlink communication and sensing measurement. In the MU DL communication TF sounding phase, the AP (the first communication apparatus) first sends a TI_MU_DATA PPDU (namely, the first PPDU). A possible frame structure of the TI_MU_DATA PPDU is shown in FIG. 17. A MAC part of the TI_MU_DATA PPDU includes MTI_DATA frames (namely, data frames) to be sent to several STAs. Although the AP performs sensing measurement only with a STA 1 and a STA 2, frame structures of MTI_DATA frames of the STA 1 to a STA 3 in the TI_MU_DATA_PPDU may be the same. A possible frame structure of the MTI_DATA frame is shown in any one of FIG. 18a to FIG. 18c. The frame is a data frame carrying an MU sensing parameters info field. Because MTI_DATA frames (namely, data frames) of different STAs are different, the AP may use the TI_MU_DATA PPDU (namely, the first PPDU) to indicate sensing transmit parameters (for example, transmit power, a quantity of HE-LTFs/EHT-LTFs, or a spatial stream/RU) of different STAs. After receiving the TI_MU_DATA PPDU (namely, the first PPDU), the STA 1, the STA 2, and the STA 3 obtain, by parsing corresponding MTI_DATA frames (namely, data frames), the sensing transmit parameters and data sent by the AP, to return corresponding TS_ACK PPDUs. A specific type of a PPDU returned by a STA is indicated by a corresponding MTI_DATA frame (namely, a data frame). A possible frame structure of the TS_ACK PPDU is shown in FIG. 13a or FIG. 13b. A quantity of HE-LTFs/EHT-LTFs (namely, fields used for sensing) in the TS_ACK PPDU is indicated by an MU sensing parameters info field in a corresponding MTI_DATA frame (namely, a data frame). The AP (the first communication apparatus) performs sensing calculation by using TS_ACK PPDUs returned by the STA 1 and the STA 2, and learns of data receiving acknowledgement statuses of the STA 1 and the STA 2 based on ACK frames or BA frames carried in the TS_ACK PPDUs. The AP learns of a data receiving acknowledgement status of the STA 3 based on an ACK frame or a BA frame carried in a TS_ACK PPDU returned by the STA 3. Therefore, in the MU DL communication TF sounding phase, the AP and the plurality of STAs simultaneously complete sensing measurement and downlink communication.

FIG. 20 further shows an NDPA sounding phase and a reporting phase. Actually, there are a plurality of phase combination manners in a sensing measurement exchange procedure in which multi-user downlink communication and sensing measurement can be simultaneously implemented. It only needs to be ensured that the sensing measurement exchange procedure includes the MU DL communication TF sounding phase in this embodiment of this application, because multi-user downlink communication and sensing measurement can be simultaneously implemented only in this phase.

In this embodiment of this application, a data frame carrying an MU sensing parameters info field is sent, and a TS_ACK PPDU (namely, the second PPDU) that can be used for sensing is returned, so that communication and sensing measurement can be simultaneously (or concurrently) performed, to alleviate degradation of communication QoS or sensing quality caused by a conflict between the sensing measurement and the communication.

FIG. 21 is a third schematic flowchart of a PPDU transmission method according to an embodiment of this application. In the method, a signaling interaction procedure in which a sensing measurement session is terminated by using a data frame and possible frame formats are mainly described. In this embodiment of this application, a first communication apparatus may be an AP, and a second communication apparatus may be a non-AP STA (or referred to as a STA); or a first communication apparatus may be a non-AP STA (or referred to as a STA), and a second communication apparatus may be an AP. This is not limited in this embodiment of this application.

As shown in FIG. 21, the PPDU transmission method includes but is not limited to the following steps.

S301: The first communication apparatus sends a first PPDU, where the first PPDU includes a data frame, the data frame includes fifth indication information, and the fifth indication information is used to terminate a sensing measurement session.

Correspondingly, the second communication apparatus receives the first PPDU. The second communication apparatus parses the first PPDU to obtain the fifth indication information, to learn of a specific sensing measurement session between the first communication apparatus and the second communication apparatus that is to be terminated.

S302: The second communication apparatus sends a second PPDU, where the second PPDU includes a feedback used to determine whether the data frame is successfully transmitted. The feedback for determining whether the data frame is successfully transmitted includes an ACK frame or a BA frame. It can be understood that the data frame being successfully transmitted indicates that the sensing measurement session between the first communication apparatus and the second communication apparatus is successfully terminated.

Correspondingly, the first communication apparatus receives the second PPDU.

In a possible implementation, the first PPDU includes data frames of one or more users. It can be understood that, in single-user communication, the first PPDU includes a data frame of a single user; or in multi-user communication, the first PPDU may include data frames of a plurality of users. The data frame may be a data frame of any type, for example, a data frame in the 802.11 ax protocol, a data frame in the 802.11be protocol, or a data frame in a future-generation 802.11 communication protocol. This is not limited in this embodiment of this application.

In a possible implementation, the first communication apparatus may include the fifth indication information in a MAC header of a data frame, to terminate a sensing measurement session between the first communication apparatus and a receiver of the data frame. If the first communication apparatus wants to terminate a sensing measurement session with a specific device, the first communication apparatus may include the fifth indication information in a data frame corresponding to the specific device. If the first communication apparatus wants to terminate sensing measurement sessions with a plurality of devices, the first communication apparatus may separately include the fifth indication information in data frames corresponding to the plurality of devices, to terminate the sensing measurement sessions between the first communication apparatus and the plurality of devices.

In some scenarios, if the first communication apparatus does not want to terminate a sensing measurement session with a device, the first communication apparatus does not include the fifth indication information in a data frame to be sent to the device.

For ease of description, an example in which the first communication apparatus wants to terminate a sensing measurement session with the second communication apparatus is used below for description.

In a possible implementation, the first PPDU may include one or more data frames, the one or more data frames include a data frame to be sent to the second communication apparatus, and a MAC header of the data frame may include the fifth indication information. The fifth indication information may be used to terminate the sensing measurement session between the first communication apparatus and the second communication apparatus, in other words, the fifth indication information may be used to terminate a sensing measurement session between a frame transmitter and a frame receiver. For example, the fifth indication information may be a sensing measurement termination (sensing measurement termination) field.

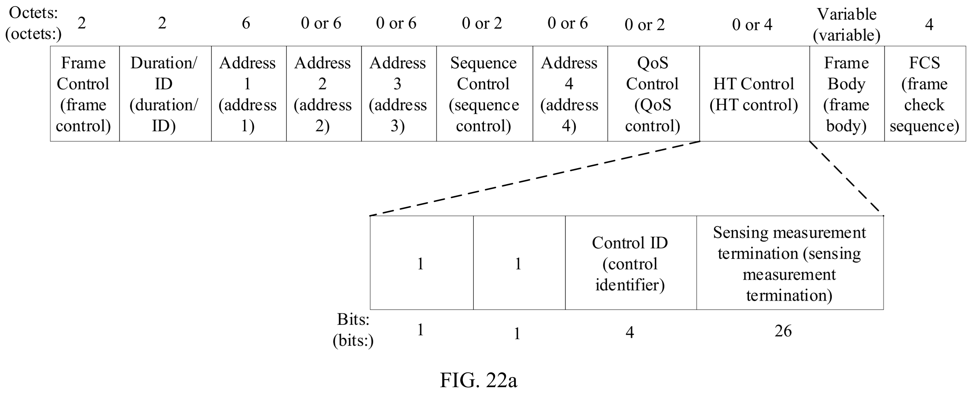

FIG. 22a is a diagram of a seventh possible frame format of a data frame according to an embodiment of this application. As shown in FIG. 22a, an HT control field of the data frame includes but is not limited to a sensing measurement termination field (namely, the fifth indication information). For example, a length of the sensing measurement termination field is 26 bits. The length of the sensing measurement termination field is not limited in this embodiment of this application. As shown in FIG. 22a, the first 2 bits of the HT control field are "11". This indicates that the data frame is a data frame in the 802.11ax protocol. A frame body (frame body) of the data frame includes data.

In a possible implementation, the data frame, in the first PPDU, that is sent to the second communication apparatus includes sixth indication information, and the sixth indication information may indicate whether the data frame carries the fifth indication information. For example, the sixth indication information being a first value indicates that the data frame carries the fifth indication information, or the sixth indication information being a second value indicates that the data frame does not carry the fifth indication information. In this embodiment of this application, if the first communication apparatus wants to terminate a sensing measurement session with a device, sixth indication information in a data frame corresponding to the device is set to the first value, to indicate that the data frame carries the fifth indication information. The first value is 1, and the second value is 0; or the first value is 0, and the first value is 1. This is not limited in this embodiment of this application.

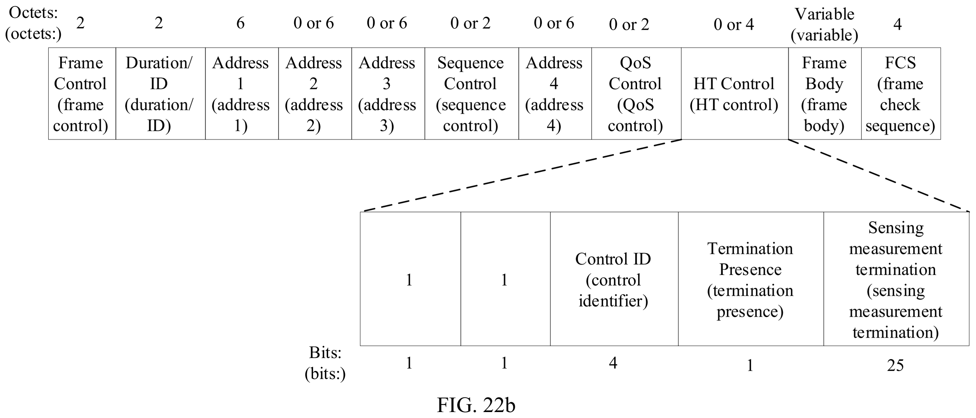

FIG. 22b is a diagram of an eighth possible frame format of a data frame according to an embodiment of this application. As shown in FIG. 22b, an HT control field of the data frame includes but is not limited to a termination presence (termination presence) field and a sensing measurement termination field. For example, a length of the termination presence field is 1 bit. The termination presence field being a first value indicates that the data frame includes the sensing measurement termination field, in other words, the data frame carries the fifth indication information. The termination presence field being a second value indicates that the data frame does not include the sensing measurement termination field, in other words, the data frame does not carry the fifth indication information. If the first communication apparatus wants to terminate a sensing measurement session with a device, the first communication apparatus may set, to the first value, a termination presence field in a data frame to be sent to the device, to indicate that the data frame includes a sensing measurement termination field. For example, a length of the sensing measurement termination field is 25 bits. The length of the termination presence field and the length of the sensing measurement termination field are not limited in this embodiment of this application. As shown in FIG. 22b, the first 2 bits of the HT control field are "11". This indicates that the data frame is a data frame in the 802.11ax protocol. A frame body (frame body) of the data frame includes data.

In a possible implementation, that the data frame does not carry the fifth indication information may include: The data frame carries other indication information, for example, first indication information, used to determine one or more of the following: transmit power of the second PPDU from the second communication apparatus, or a quantity of fields used for sensing in the second PPDU. In other words, the sixth indication information may indicate whether the data frame carries the first indication information or the fifth indication information. In this case, the sixth indication information in this embodiment of this application may be the same as the third indication information in the embodiment shown in FIG. 10 or FIG. 16. For example, the sixth indication information being a first value indicates that the data frame carries the first indication information, or the third indication information being a second value indicates that the data frame carries the fifth indication information. In some scenarios, a frame format of the data frame in this embodiment of this application may be shown in FIG. 11c or FIG. 18c. A difference from the data frame in the embodiment shown in FIG. 10 or FIG. 16 lies in: If the first communication apparatus wants to terminate a sensing measurement session with a device, the first communication apparatus may set, to the second value, a function indication field (namely, the sixth indication information or the third indication information) in a data frame to be sent to the device, to indicate that the last 25 bits of an HT control field of the data frame are a sensing measurement termination field, in other words, indicate that the data frame carries the sensing measurement termination field, that is, the data frame carries the fifth indication information.

It can be understood that, for lengths and meanings of others field in FIG. 22a and FIG. 22b that are not described, reference may be made to descriptions in an existing standard, for example, the 802.11ax protocol. Details are not described in this embodiment of this application. It can be further understood that FIG. 22a and FIG. 22b show only example structures of a data frame in the 802.11ax protocol, the data frame in this embodiment of this application may be a data frame of any type, and any data frame including the sensing measurement termination field falls within the protection scope of this application.

In a possible implementation, the fifth indication information (for example, the sensing measurement termination field) may include one or more of the following: a measurement session identifier (Measurement Session ID) field, a terminate all trigger-based measurement sessions (Terminate All TB Measurement Sessions) field, a terminate all non-trigger-based measurement sessions (Terminate All non-TB Measurement Sessions) field, or a trigger-based/non-trigger-based measurement session type (TB/non-TB Measurement Session Type) field.

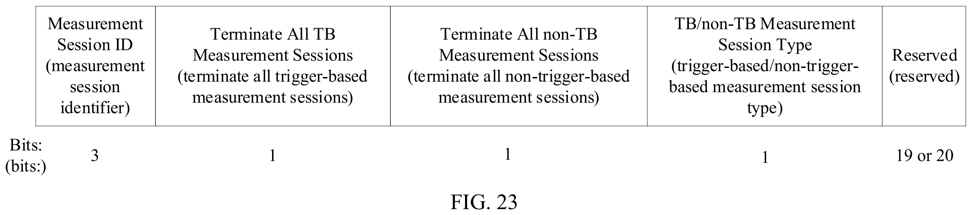

For example, FIG. 23 is a diagram of a frame format of a sensing measurement termination field according to an embodiment of this application. As shown in FIG. 23, the sensing measurement termination field may include but is not limited to a measurement session ID field, a terminate all TB measurement sessions field, a terminate all non-TB measurement sessions field, and a TB/non-TB measurement session type field. The measurement session ID field may represent an identifier (identifier, ID) to which current sensing measurement belongs. The terminate all TB measurement sessions field being set to 1 indicates that the first communication apparatus requests to close all TB-mode sensing measurement sessions established to a frame receiver. In this case, both the measurement session ID field and the TB/non-TB measurement session type field are reserved fields. The terminate all TB measurement sessions field being set to 0 indicates that the first communication apparatus does not request to close all TB-mode sensing measurement sessions established to a frame receiver. Similarly, the terminate all non-TB measurement sessions field being set to 1 indicates that the first communication apparatus requests to close all non-TB-mode sensing measurement sessions established to a frame receiver. In this case, both the measurement session ID field and the TB/non-TB measurement session type field are reserved fields. The terminate all non-TB measurement sessions field being set to 0 indicates that the first communication apparatus does not request to close all non-TB-mode sensing measurement sessions established to a frame receiver. When both the terminate all TB measurement sessions field and the terminate all non-TB measurement sessions field are set to 0, the TB/non-TB measurement session type field indicates a sensing type associated with the measurement session ID. The TB/non-TB measurement session type field being set to 0 indicates that the measurement session ID is associated with a TB sensing type. Otherwise (to be specific, when the TB/non-TB measurement session type field is set to 1), the measurement session ID is associated with a non-TB sensing type.

As shown in FIG. 23, a length of the measurement session ID field may be 3 bits, because it is specified in the existing 802.11bf protocol that only 3 bits are used to identify the measurement session ID. Although 8 bits are used to identify the measurement session ID in an existing sensing measurement termination frame, only 3 bits actually take effect. Certainly, the length of the measurement session ID field may alternatively be 8 bits. Lengths of the fields in FIG. 23 are not limited in this embodiment of this application. For example, as shown in FIG. 23, when a length of the sensing measurement termination field is 26 bits, reserved bits in the sensing measurement termination field are 20 bits; or when a length of the sensing measurement termination field is 25 bits, reserved bits in the sensing measurement termination field are 19 bits.

It can be understood that, when a data frame sent by the first communication apparatus carries the sensing measurement termination field, the first communication apparatus may close a sensing measurement session with a receiver of the data frame.

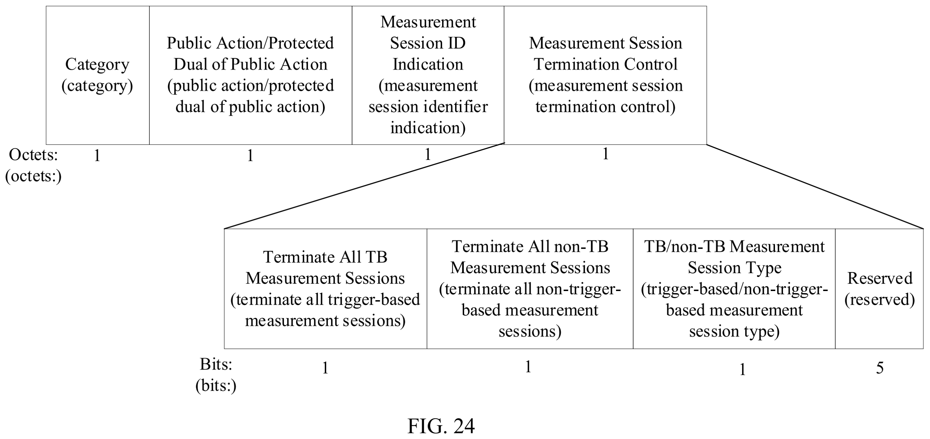

It can be understood that, in the existing 802.11bf protocol, a sensing measurement session between an AP and a STA may be closed by sending, by the AP or the STA, a sensing measurement termination (Sensing Measurement Termination) frame. FIG. 24 is a diagram of a frame format of an action field of a sensing measurement termination frame according to an embodiment of this application. As shown in FIG. 24, an action (action) field of the sensing measurement termination frame includes a category (Category) field, a public action/protected dual of public action (Public Action/Protected Dual of Public Action) field, a measurement session identifier indication (Measurement Session ID Indication) field, and a measurement session termination control (Measurement Session Termination Control) field. The measurement session termination control includes a terminate all TB measurement sessions field, a terminate all non-TB measurement sessions field, and a TB/non-TB measurement session type field. For values and meanings of the fields in FIG. 24, refer to the conventional technology, for example, the existing 802.11bf protocol. Details are not described in this embodiment of this application.

In the conventional technology, if an AP and a STA want to close a sensing measurement session, the AP and the STA may send a sensing measurement termination frame. In this case, the AP and the STA need to re-contend for a channel. However, in this embodiment of this application, a data frame carries a necessary field used to close/terminate a sensing measurement session, so that the sensing measurement session can be closed during communication, without a need to re-contend for a channel and then send a sensing measurement termination frame. This saves transmission duration and channel resources of the sensing measurement termination frame.

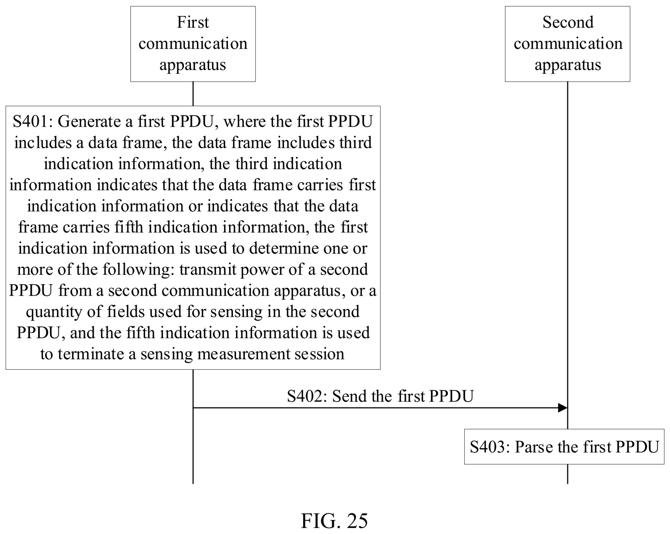

FIG. 25 is a fourth schematic flowchart of a PPDU transmission method according to an embodiment of this application. In the method, a signaling interaction procedure in which communication and sensing measurement are simultaneously performed and possible frame formats, and/or a signaling interaction procedure in which communication and sensing measurement session termination are simultaneously performed and possible frame formats are mainly described. In this embodiment of this application, for single-user downlink communication and multi-user downlink communication, a first communication apparatus is an AP, and a second communication apparatus is a non-AP STA (or referred to as a STA); and for single-user uplink communication, a first communication apparatus is a non-AP STA (or referred to as a STA), and a second communication apparatus is an AP.

As shown in FIG. 25, the PPDU transmission method includes but is not limited to the following steps.

S401: The first communication apparatus generates a first PPDU, where the first PPDU includes a data frame, the data frame includes third indication information, the third indication information indicates that the data frame carries first indication information or indicates that the data frame carries fifth indication information, the first indication information is used to determine one or more of the following: transmit power of a second PPDU from a second communication apparatus, or a quantity of fields used for sensing in the second PPDU, and the fifth indication information is used to terminate a sensing measurement session.

S402: The first communication apparatus sends the first PPDU.

Correspondingly, the second communication apparatus receives the first PPDU.

S403: The second communication apparatus parses the first PPDU. The second communication apparatus may learn, by parsing the first PPDU, whether the data frame is to terminate the sensing measurement session or indicate a transmit parameter of a sensing PPDU (namely, the second PPDU) (the transmit power, and/or the quantity of fields used for sensing in the second PPDU), to perform a corresponding operation.

In a possible implementation, the first PPDU includes data frames of one or more users. It can be understood that, in single-user communication, the first PPDU includes a data frame of a single user; or in multi-user communication, the first PPDU may include data frames of a plurality of users. The data frame may be a data frame of any type, for example, a data frame in the 802.11ax protocol, a data frame in the 802.11be protocol, or a data frame in a future-generation 802.11 communication protocol. This is not limited in this embodiment of this application.

In a possible implementation, the data frame may include the third indication information, and the third indication information may indicate that the data frame carries the first indication information, or indicate that the data frame carries the fifth indication information. The third indication information being a first value indicates that the data frame carries the first indication information, or the third indication information being a second value indicates that the data frame carries the fifth indication information. For example, a frame format of the data frame may be shown in FIG. 11c or FIG. 18c. Details are not described herein again. The first indication information may be used to determine one or more of the following: the transmit power of the second PPDU from the second communication apparatus, or the quantity of fields used for sensing in the second PPDU. Optionally, the first indication information may be further used to determine a spatial stream allocated to the second PPDU and/or an RU allocated to the second PPDU. For example, for a specific implementation of the first indication information, refer to the descriptions in the embodiment shown in FIG. 10 or FIG. 16. Details are not described herein again. The fifth indication information may be used to terminate the sensing measurement session. For example, for a specific implementation of the fifth indication information, refer to the descriptions in the embodiment shown in FIG. 21. Details are not described herein again.

In a possible implementation, if the first communication apparatus wants to perform sensing measurement with a user, the first communication apparatus may include the third indication information and the first indication information in a data frame corresponding to the user, and set the third indication information to the first value. If the first communication apparatus wants to terminate a sensing measurement session with a user, the first communication apparatus may include the third indication information and the fifth indication information in a data frame corresponding to the user, and set the third indication information to the second value. If the first communication apparatus neither wants to perform sensing measurement with a user nor wants to terminate a sensing measurement session with the user, the first communication apparatus may not include the third indication information, the first indication information, or the fifth indication information in a data frame corresponding to the user. In a possible implementation, if the first communication apparatus wants to perform sensing measurement with a first user and terminate a sensing measurement session with a second user, in a multi-user downlink communication scenario, the first communication apparatus may include the third indication information and the first indication information in a data frame corresponding to the first user, and set the third indication information to the first value; and include the third indication information and the fifth indication information in a data frame corresponding to the second user, and set the third indication information to the second value.

In some scenarios, if the first communication apparatus needs to perform sensing measurement and downlink data of a plurality of users is cached on the first communication apparatus, the first PPDU includes data frames of a plurality of users, and frame formats of the data frames of all the users may be the same. For example, the data frames of all the users carry the third indication information and the first indication information, and the third indication information is set to the first value.

In a possible implementation, after receiving the first PPDU, the second communication apparatus may parse the first PPDU to obtain a data frame, in the first PPDU, that is sent to the second communication apparatus. Then the second communication apparatus may parse the data frame to obtain the third indication information, and may determine, according to an indication of the third indication information, whether the data frame is used to terminate the sensing measurement session or indicate the transmit parameter of the second PPDU (the transmit power, and/or the quantity of fields used for sensing in the second PPDU), to perform a corresponding operation.

If the third indication information indicates that the data frame carries the first indication information, the second communication apparatus may send the second PPDU based on the first indication information, where the second PPDU includes at least one field used for sensing and a feedback used to determine whether the data frame is successfully transmitted. For example, for a specific implementation in which the second communication apparatus sends the second PPDU based on the first indication information, refer to the implementation of step S104 in the embodiment shown in FIG. 10 or the implementation of step S204 in the embodiment shown in FIG. 16. Details are not described herein again. The quantity of fields used for sensing in the second PPDU is determined based on the first indication information. For a specific determining manner, refer to the descriptions of step S104 in the embodiment shown in FIG. 10 or the descriptions of step S204 in the embodiment shown in FIG. 16. Details are not described herein again. After receiving the second PPDU, the first communication apparatus performs sensing measurement based on at least one field used for sensing in the second PPDU. For details, refer to the descriptions of step S105 in the embodiment shown in FIG. 10 or the descriptions of step S205 in the embodiment shown in FIG. 16. Details are not described herein again.

If the third indication information indicates that the data frame carries the fifth indication information, the second communication apparatus may send the second PPDU, where the second PPDU includes an ACK frame or a BA frame. The ACK frame is used to determine that the data frame is successfully transmitted. The BA frame is used to determine whether the data frame is successfully transmitted. It can be understood that the data frame being successfully transmitted may indicate that a sensing measurement session between the first communication apparatus and the second communication apparatus is successfully terminated.

In a possible implementation, during data transmission, data frames in different time periods may carry different indication information in this embodiment of this application. For example, in a time period, if the first communication apparatus has a sensing requirement, the first communication apparatus may include the first indication information in a data frame; or in another time period, if the first communication apparatus wants to terminate the sensing measurement session with the second communication apparatus, the first communication apparatus may include the fifth indication information to a data frame. For example, after a sensing measurement requirement of the first communication apparatus is met, the first communication apparatus may terminate the sensing measurement session with the second communication apparatus by using a data frame during a subsequent frame exchange. Several examples are used below for description.

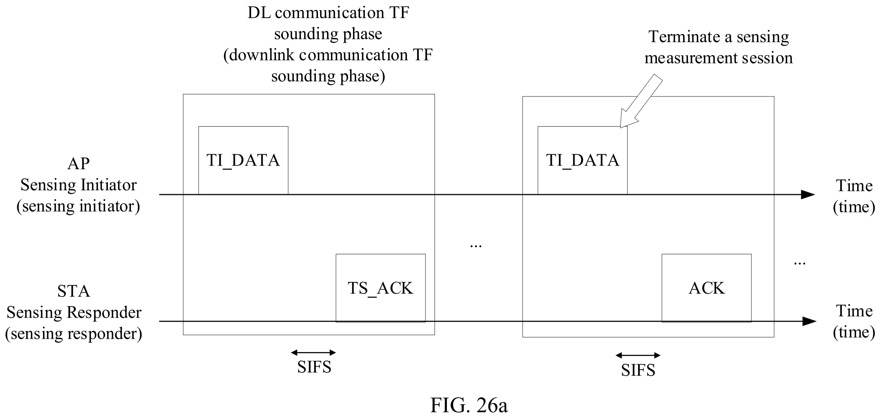

For example, for single-user downlink communication, after a sensing requirement of an AP is met, the AP may close a sensing measurement session with a STA by using a data frame during a subsequent frame exchange. FIG. 26a is a schematic flowchart of data transmission according to an embodiment of this application. As shown in FIG. 26a, an AP needs to perform sensing measurement and the AP has cached data that needs to be sent to a STA. In this case, the AP may perform a downlink communication TF sounding phase (DL Communication TF Sounding phase) to simultaneously complete sensing measurement and downlink data transmission. In the DL communication TF sounding phase, the AP (the first communication apparatus) first sends a TI_DATA frame. A possible frame structure of the TI_DATA frame is shown in FIG. 11c. A value of a function indication field (namely, the third indication information) in the frame is a first value. This indicates that the frame carries an SU sensing parameters info field (namely, the first indication information). After one SIFS, the STA (the second communication apparatus) returns a TS_ACK PPDU. A possible frame structure of the TS_ACK PPDU is shown in FIG. 13a or FIG. 13b. A quantity of HE-LTFs/EHT-LTFs (namely, fields used for sensing) in the TS_ACK PPDU is indicated by the SU sensing parameters info field in the TI_DATA frame. After receiving the TS_ACK PPDU, the AP (the first communication apparatus) may perform sensing calculation by using an HE-LTF/EHT-LTF in a PHY header of the TS_ACK PPDU, and can learn, based on an ACK frame or a BA frame carried in the TS_ACK PPDU, whether data transmission between the STA and the AP is successful. After a sensing measurement requirement of the AP is met, the AP may send another TI_DATA frame to terminate a sensing measurement session between the AP and the STA. A possible frame structure of the TI_DATA frame is shown in FIG. 11c. A value of a function indication field (namely, the third indication information) in the frame is a second value. This indicates that the frame carries a sensing measurement termination field (namely, the fifth indication information). After one SIFS, the STA returns an ACK PPDU, to determine that the TI_DATA frame is successfully transmitted.

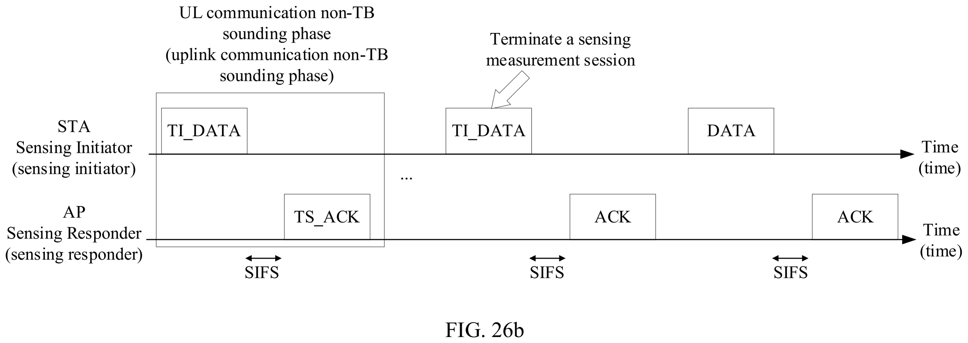

For example, for single-user uplink communication, after a sensing requirement of a STA is met, the STA may close a sensing measurement session with an AP by using a data frame during a subsequent frame exchange. FIG. 26b is another schematic flowchart of data transmission according to an embodiment of this application. As shown in FIG. 26b, as a sensing initiator, a STA needs to perform sensing with an AP, and has cached data that needs to be sent to the AP. In this case, the STA and the AP may perform an uplink communication non-TB sounding phase (UL Communication non-TB Sounding phase) to simultaneously complete sensing measurement and uplink data transmission. In the UL communication non-TB sounding phase, the STA (the first communication apparatus) first sends a TI_DATA frame. A possible frame structure of the TI_DATA frame is shown in FIG. 11c. A value of a function indication field (namely, the third indication information) in the frame is a first value. This indicates that the frame carries an SU sensing parameters info field (namely, the first indication information). After one SIFS, the AP (the second communication apparatus) returns a TS_ACK PPDU. A possible frame structure of the TS_ACK PPDU is shown in FIG. 13a or FIG. 13b. A quantity of HE-LTFs/EHT-LTFs (namely, fields used for sensing) in the TS_ACK PPDU is indicated by the SU sensing parameters info field in the TI_DATA frame. After receiving the TS_ACK PPDU, the STA (the first communication apparatus) may perform sensing calculation by using an HE-LTF/EHT-LTF in a PHY header of the TS_ACK PPDU, and can learn, based on an ACK frame or a BA frame carried in the TS_ACK PPDU, whether data transmission between the STA and the AP is successful. After a sensing measurement requirement of the STA is met, the AP may send another TI_DATA frame to terminate a sensing measurement session between the STA and the AP. A possible frame structure of the TI_DATA frame is shown in FIG. 11c. A value of a function indication field (namely, the third indication information) in the frame is a second value. This indicates that the frame carries a sensing measurement termination field (namely, the fifth indication information). After one SIFS, the AP returns an ACK PPDU, to determine that the TI_DATA frame is successfully transmitted. Subsequently, if data of the AP is still cached on the STA, the STA may send a data frame. A frame structure of the data frame may be a frame structure of an existing data frame. Details are not described herein. After receiving the data frame, the AP returns an ACK frame to determine that the data frame is successfully transmitted.

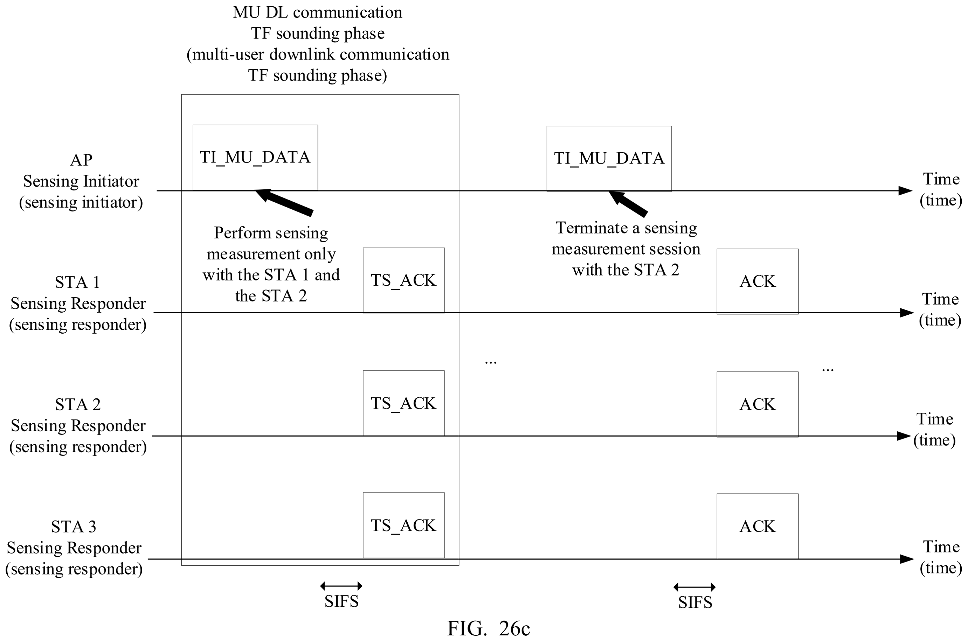

For example, for multi-user downlink communication, after a sensing requirement of an AP is met, the AP may close a sensing measurement session with a corresponding STA by using a data frame during a subsequent frame exchange. FIG. 26c is still another schematic flowchart of data transmission according to an embodiment of this application. As shown in FIG. 26c, an AP needs to perform sensing measurement, and data of a plurality of STAs is cached on the AP. In this case, the AP may perform a multi-user downlink communication TF sounding phase (MU DL Communication TF Sounding phase) with the plurality of STAs to simultaneously complete sensing measurement and multi-user downlink data transmission. In the MU DL communication TF sounding phase, the AP (the first communication apparatus) first sends a TI_MU_DATA PPDU. A possible frame structure of the TI_MU_DATA PPDU is shown in FIG. 17. A MAC part of the TI_MU_DATA PPDU includes MTI_DATA frames (namely, data frames) to be sent to several STAs. Although the AP performs sensing measurement only with a STA 1 and a STA 2, frame structures of MTI_DATA frames of the STA 1 to a STA 3 in the TI_MU_DATA PPDU may be the same. A possible frame structure of the MTI_DATA frame is shown in FIG. 18c. A value of a function indication field (namely, the third indication information) in the frame is a first value. This indicates that the frame carries an MU sensing parameters info field (namely, the first indication information). Because MTI_DATA frames (namely, data frames) of different STAs are different, the AP may use the TI_MU_DATA PPDU to indicate sensing transmit parameters (for example, transmit power, a quantity of HE-LTFs/EHT-LTFs, or a spatial stream/RU) of different STAs. After receiving the TI_MU_DATA PPDU, the STA 1, the STA 2, and the STA 3 obtain, by parsing corresponding MTI_DATA frames (namely, data frames), the sensing transmit parameters and data sent by the AP, to return corresponding TS_ACK PPDUs. A specific type of a PPDU returned by a STA is indicated by a corresponding MTI_DATA frame (namely, a data frame). A possible frame structure of the TS_ACK PPDU is shown in FIG. 13a or FIG. 13b. A quantity of HE-LTFs/EHT-LTFs (namely, fields used for sensing) in the TS_ACK PPDU is indicated by an MU sensing parameters info field in a corresponding MTI_DATA frame (namely, a data frame). The AP (the first communication apparatus) performs sensing calculation by using TS_ACK PPDUs returned by the STA 1 and the STA 2, and learns of data receiving acknowledgement statuses of the STA 1 and the STA 2 based on ACK frames or BA frames carried in the TS_ACK PPDUs. The AP learns of a data receiving acknowledgement status of the STA 3 based on an ACK frame or a BA frame carried in a TS_ACK PPDU returned by the STA 3. After a sensing measurement requirement of the AP is met, the AP may send another TI_MU_DATA PPDU to terminate a sensing measurement session. A possible frame structure of the TI_MU_DATA PPDU is shown in FIG. 17. A MAC part of the TI_MU_DATA PPDU includes MTI_DATA frames (namely, data frames) to be sent to several STAs. Assuming that the AP wants to terminate a sensing measurement session with the STA 2, a possible frame structure of an MTI_DATA frame corresponding to the STA 2 in the TI_MU_DATA PPDU is shown in FIG. 18c. A value of a function indication field (namely, the third indication information) in the frame is a second value. This indicates that the frame carries a sensing measurement termination field (namely, the fifth indication information). Frame structures of MTI_DATA frames corresponding to the STA 1 and the STA 2 in the TI_MU_DATA PPDU may be a frame structure of an existing data frame, without carrying the function indication field or the sensing measurement termination field. After receiving the TI_MU_DATA PPDU, the STA 1, the STA 2, and the STA 3 obtain, by parsing corresponding MTI_DATA frames (namely, data frames), data sent by the AP, and the STA 2 may further learn that the AP is to terminate the sensing measurement session with the STA 2. After one SIFS, the STA 1, the STA 2, and the STA 3 each return an ACK PPDU, to enable the AP to learn of a data receiving acknowledgement status of each STA.

In this embodiment of this application, the third indication information is carried in a data frame, so that the data frame can have a plurality of functions, and the functions of the data frame can be set according to a requirement. Therefore, communication and sensing measurement can be simultaneously (or concurrently) performed, to alleviate degradation of communication QoS or sensing quality caused by a conflict between the sensing measurement and the communication, and a sensing measurement session can be closed during communication, to save time and channel resources.

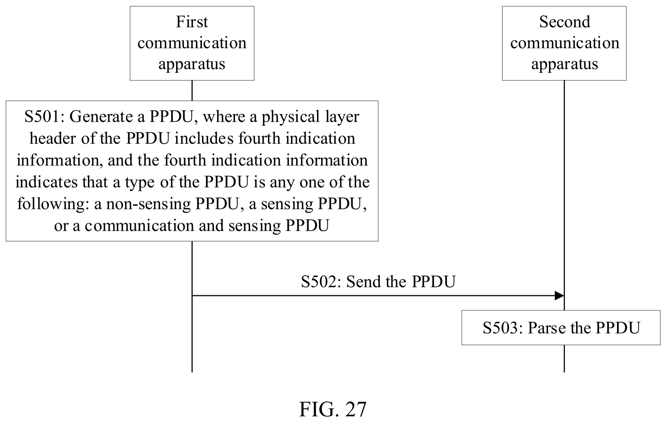

FIG. 27 is a fifth schematic flowchart of a PPDU transmission method according to an embodiment of this application. In the method, how to reduce frame exchanges between a device that does not have a sensing capability or a device that does not participate in sensing and a sensing initiator in a sensing procedure, and how to reduce impact on a device that does not have a sensing capability or a device that does not participate in sensing in a sensing procedure are mainly described. It can be understood that the sensing procedure mentioned in this embodiment of this application may include a sensing technology in the current 802.11bf protocol, or may include a technology that is designed in the foregoing embodiments of this application and that is used for simultaneously performing communication and sensing, or may include a technology that is designed in the foregoing embodiments of this application and that is used for simultaneously performing communication and sensing measurement session termination.

In this embodiment of this application, a first communication apparatus may be an AP, and a second communication apparatus may be a non-AP STA (or referred to as a STA); or a first communication apparatus may be a non-AP STA (or referred to as a STA), and a second communication apparatus may be an AP. This is not limited in this embodiment of this application.

As shown in FIG. 27, the PPDU transmission method includes but is not limited to the following steps.

S501: The first communication apparatus generates a PPDU, where a physical layer header of the PPDU includes fourth indication information, and the fourth indication information indicates that a type of the PPDU is any one of the following: a non-sensing PPDU, a sensing PPDU, or a communication and sensing PPDU.

S502: The first communication apparatus sends the PPDU.

Correspondingly, the second communication apparatus receives the PPDU.

S503: The second communication apparatus parses the PPDU.

In a possible implementation, the PPDU in this embodiment of this application may be a PPDU of any type, for example, a PPDU specified in the 802.11ax protocol, a PPDU specified in the 802.11be protocol, or a PPDU specified in a future-generation 802.11 protocol. This is not limited in this embodiment of this application.

In a possible implementation, the physical layer header of the PPDU includes the fourth indication information, and the fourth indication information may indicate the type of the PPDU. In this embodiment of this application, the type of the PPDU may include one or more of the following: the non-sensing PPDU (non-sensing PPDU), the sensing PPDU (sensing PPDU), or the communication and sensing PPDU (communication and sensing PPDU). The non-sensing PPDU may be understood as a PPDU irrelevant to a sensing technology. In other words, the PPDU does not carry sensing-related information (for example, the first indication information or the fifth indication information designed in the foregoing embodiments of this application, or an existing sensing-related parameter). In other words, the PPDU is a PPDU related only to communication. The sensing PPDU may be understood as a PPDU related to a sensing technology. In other words, the PPDU carries sensing-related information, or the PPDU participates in a sensing-related processing process. In other words, the PPDU is a PPDU related only to sensing. The communication and sensing PPDU may be understood as a PPDU related to both communication and sensing. In other words, the PPDU carries both communication data and sensing-related information. In other words, the PPDU participates in both conventional communication processing and sensing processing.

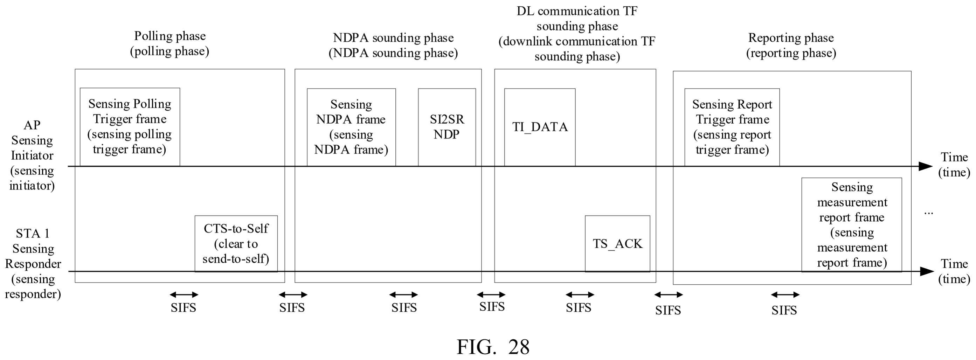

For example, FIG. 28 is a diagram of yet another possible sensing measurement exchange according to an embodiment of this application. FIG. 28 mainly shows a sensing measurement exchange procedure between an AP and a STA 1. As shown in FIG. 28, PPDU types of a sensing polling trigger frame, a sensing NDPA frame, an SI2SR NDP, a sensing report trigger frame, and a sensing measurement report frame are sensing PPDUs. A PPDU type of a CTS-to-self frame is a non-sensing PPDU. PPDU types of a TI_DATA frame and a TS_ACK PPDU are communication and sensing PPDUs. For specific implementations of a polling phase, an NDPA sounding phase, and a reporting phase in FIG. 28, refer to the conventional technology. For a specific implementation of a downlink communication TF sounding phase, refer to the descriptions of FIG. 14. Details are not described herein again.

It can be understood that FIG. 28 merely shows sensing PPDUs, non-sensing PPDUs, and communication and sensing PPDUs in a sensing measurement exchange procedure in a single-user communication scenario as an example, but this does not indicate that this embodiment of this application is applicable only to a single-user scenario. During actual application, this embodiment of this application is applicable to both a single-user scenario and a multi-user scenario. Details are not described herein.

In a possible implementation, in this embodiment of this application, 2 redefinable bits may be found in a PHY header of a PPDU, and the 2 bits represent a type of the PPDU. To be specific, the 2 bits are redefined as the fourth indication information. For example, the 2 bits may be referred to as a least significant bit and a most significant bit. For example, when the most significant bit is set to 1, the least significant bit being set to 0 indicates that the type of the PPDU is a sensing PPDU, or the least significant bit being set to 1 indicates that the type of the PPDU is a non-sensing PPDU. The least significant bit being set to 0 and the most significant bit being set to 0 indicates that the type of the PPDU is a communication and sensing PPDU. When the least significant bit is set to 0 and the most significant bit is set to 1, the bits are reserved. When the least significant bit is set to 1, the most significant bit can be set only to 1. Certainly, this embodiment of this application may alternatively have other indication manners, and is not limited to the foregoing examples. Details are not described herein.

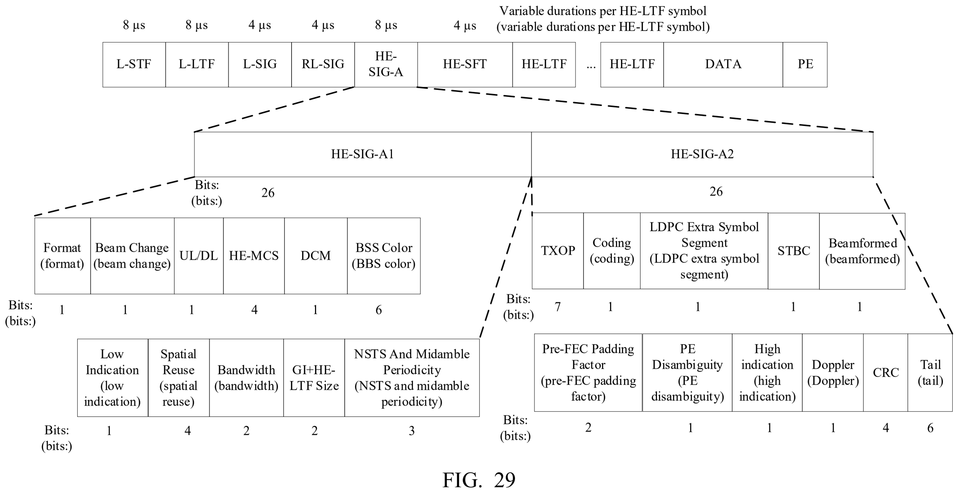

For example, FIG. 29 is a diagram of a frame format of an HE PPDU according to an embodiment of this application. As shown in FIG. 29, a high efficiency signal A (high efficiency signal A, HE-SIG-A) field in the HE PPDU includes two subfields: an HE-SIG-A1 and an HE-SIG-A2. The HE-SIG-A1 and the HE-SIG-A2 each include a reserved (Reserved) field. A reserved field in the HE-SIG-A1 is a least significant bit, and may be modified to a low indication (Low Indication) field. A reserved field in the HE-SIG-A2 is a most significant bit, and is modified to a high indication (High Indication) field. For example, when the low indication field is set to 1, the high indication field needs to be 1. This indicates that a type of the PPDU is a non-sensing PPDU. The low indication field being 0 and the high indication field being 1 indicates that a type of the PPDU is a sensing PPDU, in other words, a frame carried in the PPDU is a unique frame in the 802.11bf protocol. The low indication field being set to 0 and the high indication field being set to 0 indicates that a type of the PPDU is a communication and sensing PPDU.

It can be understood that field names of the least significant bit and the most significant bit in FIG. 29 are merely examples, and there may alternatively be other names, for example, a least significant bit type indication field and a most significant bit type indication field. This is not limited in this embodiment of this application.

In a possible implementation, the second communication apparatus may learn, by parsing the low indication field and the high indication field (namely, the fourth indication information) in the PPDU, whether to continue to parse a subsequent field. For example, if the second communication apparatus is a device without a sensing capability or the second communication apparatus has a sensing capability but does not participate in sensing, in a single-user scenario, when the second communication apparatus learns, through parsing, that a PPDU type indicated by the fourth indication information is a sensing PPDU or a communication and sensing PPDU, the second communication apparatus may stop parsing a subsequent field (for example, a MAC part). However, in a multi-user scenario, when the second communication apparatus learns, through parsing, that a PPDU type indicated by the fourth indication information is a sensing PPDU or a communication and sensing PPDU, the second communication apparatus further needs to parse a MAC part of the PPDU, and determine, based on a MAC address, whether to parse a subsequent data part. If the second communication apparatus is a device with a sensing capability and participates in sensing, but the second communication apparatus has only a conventional sensing capability and does not have a capability of simultaneously (or concurrently) performing communication and sensing in a design of this application, when the second communication apparatus learns, through parsing, that a PPDU type indicated by the fourth indication information is a communication and sensing PPDU (for example, a most significant bit is 0), the second communication apparatus may stop parsing a subsequent field (for example, a MAC part). When the second communication apparatus has a conventional sensing capability and a capability of simultaneously performing communication and sensing, and participates in sensing, the second communication apparatus parses a MAC part of the PPDU, and determines, based on a MAC address, whether to parse a subsequent data part.

In a possible implementation, this embodiment of this application may be implemented independently, or may be implemented in combination with any one of the foregoing embodiments (for example, the embodiment shown in FIG. 10, the embodiment shown in FIG. 16, the embodiment shown in FIG. 21, or the embodiment shown in FIG. 25). This is not limited in this application. When this embodiment of this application is implemented in combination with any one of the foregoing embodiments, the fourth indication information may be located in the physical layer header of the first PPDU and/or the physical layer header of the second PPDU in any one of the foregoing embodiments.

In the conventional technology, an AP and a STA exchange a large quantity of frames during sensing. A basic service set (basic service set, BSS) to which the AP belongs may include other STAs that do not participate in sensing. If the STAs are in a non-sleep state, the STAs also receive sensing-related frames sent by other devices. When obtaining a receiving MAC address of a frame through parsing, the STAs learn that the frame is not sent to the STAs, and therefore stop subsequent frame parsing. However, the MAC address is in a MAC part of the frame, and the STAs need to parse a PHY header before continuing to parse the MAC part. Therefore, a part of energy of the STAs is still consumed in unnecessary frame parsing.

Therefore, in this embodiment of this application, 2 redefined bits are found in a PHY header of a PPDU, and the 2 bits (namely, the fourth indication information) indicate a type of the PPDU, so that a device receiving the PPDU learns, by parsing the 2 bits in the PPDU, whether to continue to parse a subsequent field. This can reduce energy loss, caused by parsing a sensing-related PPDU during sensing, of a device that does not participate in sensing, to achieve power saving for the device, and minimize impact of a sensing activity on the device that does not participate in sensing.

The foregoing content describes in detail the methods provided in this application. To facilitate implementation of the foregoing solutions in embodiments of this application, embodiments of this application further provide a corresponding apparatus or device.

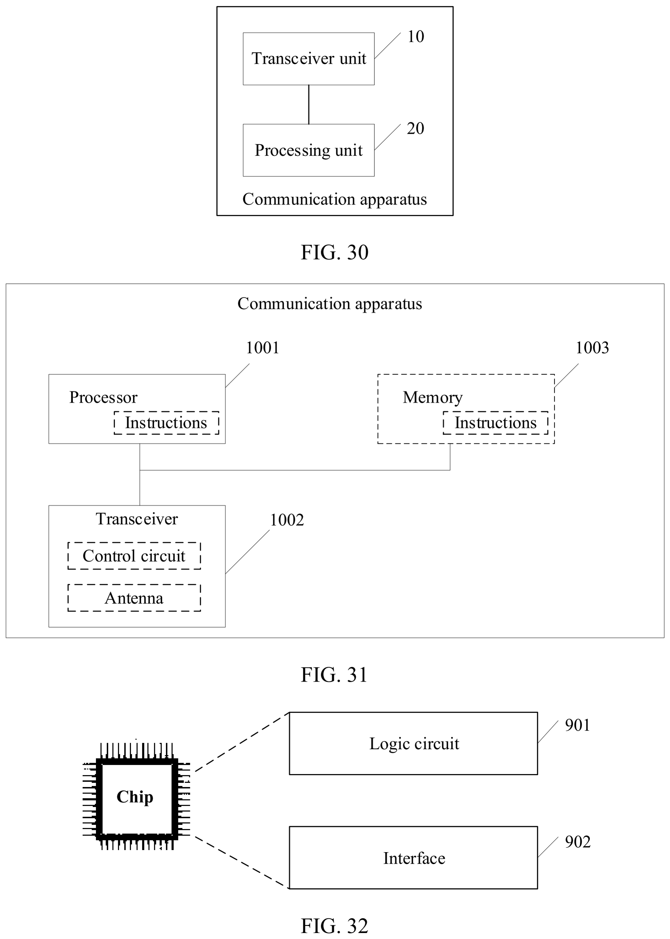

In this application, a communication apparatus is divided into functional modules based on the foregoing method embodiments. For example, the functional modules may be divided based on functions, or two or more functions may be integrated into one processing module. The integrated module may be implemented in a form of hardware, or may be implemented in a form of a software functional module. It should be noted that, in this application, division into the modules is an example and is merely logical function division. During actual implementation, another division manner may be used. The following describes in detail a communication apparatus in embodiments of this application with reference to FIG. 30 to FIG. 32.

FIG. 30 is a diagram of a structure of a communication apparatus according to an embodiment of this application. As shown in FIG. 30, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface or a communication unit.

In some embodiments of this application, the communication apparatus may be the first communication apparatus shown above. To be specific, the communication apparatus shown in FIG. 30 may be configured to perform the steps, the functions, or the like performed by the first communication apparatus in the foregoing method embodiments. For example, the communication apparatus may be the first communication apparatus, or a chip, a functional module, or the like configured in the first communication apparatus. This is not limited in this embodiment of this application. The transceiver unit 10 is configured to perform a sending/receiving-related operation of the first communication apparatus in the foregoing method embodiments. The processing unit 20 is configured to perform a processing-related operation of the first communication apparatus in the foregoing method embodiments.

For example, the processing unit 20 is configured to generate a first PPDU, and the transceiver unit 10 is configured to send or output the first PPDU. The first PPDU includes a first data frame. The first data frame includes first indication information. The first indication information is used to determine one or more of the following: transmit power of a second PPDU from a second communication apparatus, or a quantity of fields used for sensing in the second PPDU.

It can be understood that the transceiver unit 10 may send the first PPDU to another communication apparatus, or the transceiver unit 10 outputs the first PPDU from the processing unit 20 to another component, another functional module, or the like in the communication apparatus. Related descriptions of outputting other information by the transceiver unit are similar. Details are not described below again.

For example, the transceiver unit 10 is further configured to receive or input the second PPDU. The second PPDU includes at least one field used for sensing and a feedback used to determine whether the first data frame is successfully transmitted. The quantity of fields used for sensing in the second PPDU is determined based on the first indication information.

It can be understood that the transceiver unit 10 may receive the second PPDU from another communication apparatus, or the transceiver unit 10 inputs the second PPDU from another component, another functional module, or the like in the communication apparatus. Related descriptions of inputting other information by the transceiver unit are similar. Details are not described below again.

For example, the processing unit 20 is further configured to perform sensing measurement based on at least one field used for sensing in the received second PPDU.

For specific descriptions of the first PPDU, the first data frame, the first indication information, the second PPDU, and the like, refer to the foregoing method embodiment 1 or 2. Details are not described herein again.

It can be understood that specific descriptions of the transceiver unit and the processing unit in this embodiment of this application are merely an example. For specific functions, steps, or the like performed by the transceiver unit and the processing unit, refer to the foregoing method embodiment 1 or 2. Details are not described herein again. For example, the transceiver unit 10 may be configured to perform step S102 shown in FIG. 10 or step S202 shown in FIG. 16, and the processing unit 20 may be configured to perform step S101 (and step S105) shown in FIG. 10 or step S201 (and step S205) shown in FIG. 16.

For example, the transceiver unit 10 is configured to send or output a first PPDU, where the first PPDU includes a data frame, the data frame includes fifth indication information, and the fifth indication information is used to terminate a sensing measurement session; and the transceiver unit 10 is further configured to receive or input a second PPDU, where the second PPDU includes a feedback used to determine whether the data frame is successfully transmitted.

For example, the processing unit 20 is configured to generate the first PPDU.

For specific descriptions of the first PPDU, the data frame, the fifth indication information, the second PPDU, and the like, refer to the foregoing method embodiment 3. Details are not described herein again.

It can be understood that specific descriptions of the transceiver unit and the processing unit in this embodiment of this application are merely an example. For specific functions, steps, or the like performed by the transceiver unit and the processing unit, refer to the foregoing method embodiment 3. Details are not described herein again. For example, the processing unit 20 may be configured to generate the first PPDU sent in step S301 in FIG. 21, and the transceiver unit 10 may be configured to perform step S301 shown in FIG. 21.

For example, the processing unit 20 is configured to generate a first PPDU, and the transceiver unit 10 is configured to send or output the first PPDU. The first PPDU includes a data frame. The data frame includes third indication information. The third indication information indicates that the data frame carries first indication information, or indicates that the data frame carries fifth indication information. The first indication information is used to determine one or more of the following: transmit power of a second PPDU from a second communication apparatus, or a quantity of fields used for sensing in the second PPDU. The fifth indication information is used to terminate a sensing measurement session.

For example, the transceiver unit 10 is further configured to receive or input the second PPDU. The second PPDU includes a feedback used to determine whether the data frame is successfully transmitted. Optionally, the second PPDU further includes at least one field used for sensing. The quantity of fields used for sensing in the second PPDU is determined based on the first indication information.

For specific descriptions of the first PPDU, the data frame, the first indication information, the third indication information, the fifth indication information, the second PPDU, and the like, refer to the foregoing method embodiment 4. Details are not described herein again.

It can be understood that specific descriptions of the transceiver unit and the processing unit in this embodiment of this application are merely an example. For specific functions, steps, or the like performed by the transceiver unit and the processing unit, refer to the foregoing method embodiment 4. Details are not described herein again. For example, the transceiver unit 10 may be configured to perform step S402 shown in FIG. 25, and the processing unit 20 may be configured to perform step S401 shown in FIG. 25.

For example, the processing unit 20 is configured to generate a PPDU, and the transceiver unit 10 is configured to send or output the PPDU. A physical layer header of the PPDU includes fourth indication information. The fourth indication information indicates that a type of the PPDU is any one of the following: a non-sensing PPDU, a sensing PPDU, or a communication and sensing PPDU.

For specific descriptions of the PPDU, the fourth indication information, and the like, refer to the foregoing method embodiment 5. Details are not described herein again.

It can be understood that specific descriptions of the transceiver unit and the processing unit in this embodiment of this application are merely an example. For specific functions, steps, or the like performed by the transceiver unit and the processing unit, refer to the foregoing method embodiment 5. Details are not described herein again. For example, the transceiver unit 10 may be configured to perform step S502 shown in FIG. 27, and the processing unit 20 may be configured to perform step S501 shown in FIG. 27.

Still refer to FIG. 30. In some other embodiments of this application, the communication apparatus may be the second communication apparatus shown above. To be specific, the communication apparatus shown in FIG. 30 may be configured to perform the steps, the functions, or the like performed by the second communication apparatus in the foregoing method embodiments. For example, the communication apparatus may be the second communication apparatus, or a chip, a functional module, or the like configured in the second communication apparatus. This is not limited in this embodiment of this application. The transceiver unit 10 is configured to perform a sending/receiving-related operation of the second communication apparatus in the foregoing method embodiments. The processing unit 20 is configured to perform a processing-related operation of the second communication apparatus in the foregoing method embodiments.

For example, the transceiver unit 10 is configured to receive or input a first PPDU, and the processing unit 20 is configured to parse the first PPDU. The first PPDU includes a first data frame. The first data frame includes first indication information. The first indication information is used to determine one or more of the following: transmit power of a second PPDU, or a quantity of fields used for sensing in the second PPDU.

For example, the transceiver unit 10 is further configured to send or output the second PPDU based on the first indication information. The second PPDU includes at least one field used for sensing and a feedback used to determine whether the first data frame is successfully transmitted. The quantity of fields used for sensing in the second PPDU is determined based on the first indication information. The field used for sensing is used for a first communication apparatus to perform sensing measurement.

For specific descriptions of the first PPDU, the first data frame, the first indication information, the second PPDU, and the like, refer to the foregoing method embodiment 1 or 2. Details are not described herein again.

It can be understood that specific descriptions of the transceiver unit and the processing unit in this embodiment of this application are merely an example. For specific functions, steps, or the like performed by the transceiver unit and the processing unit, refer to the foregoing method embodiment 1 or 2. Details are not described herein again. For example, the transceiver unit 10 may be configured to receive the first PPDU sent in step S102 and/or perform step S104 shown in FIG. 10, and the processing unit 20 may be configured to perform step S103 shown in FIG. 10. Alternatively, the transceiver unit 10 may be configured to receive the first PPDU sent in step S202 and/or perform step S204 shown in FIG. 16, and the processing unit 20 may be configured to perform step S203 shown in FIG. 16.

For example, the transceiver unit 10 is configured to receive or input a first PPDU, where the first PPDU includes a data frame, the data frame includes fifth indication information, and the fifth indication information is used to terminate a sensing measurement session; the processing unit 20 is configured to parse the first PPDU; and the transceiver unit 10 is further configured to send or output a second PPDU, where the second PPDU includes a feedback used to determine whether the data frame is successfully transmitted.

For specific descriptions of the first PPDU, the data frame, the fifth indication information, the second PPDU, and the like, refer to the foregoing method embodiment 3. Details are not described herein again.

It can be understood that specific descriptions of the transceiver unit and the processing unit in this embodiment of this application are merely an example. For specific functions, steps, or the like performed by the transceiver unit and the processing unit, refer to the foregoing method embodiment 3. Details are not described herein again. For example, the processing unit 20 may be configured to parse a received first PPDU and generate the second PPDU sent in step S302 in FIG. 21, and the transceiver unit 10 may be configured to perform step S302 shown in FIG. 21.

For example, the transceiver unit 10 is configured to receive or input the first PPDU, and the processing unit 20 is configured to parse the first PPDU. The first PPDU includes a data frame. The data frame includes third indication information. The third indication information indicates that the data frame carries first indication information, or indicates that the data frame carries fifth indication information. The first indication information is used to determine one or more of the following: transmit power of a second PPDU from a second communication apparatus, or a quantity of fields used for sensing in the second PPDU. The fifth indication information is used to terminate a sensing measurement session.

For example, the transceiver unit 10 is further configured to send or output the second PPDU. The second PPDU includes a feedback used to determine whether the data frame is successfully transmitted. Optionally, the second PPDU further includes at least one field used for sensing. The quantity of fields used for sensing in the second PPDU is determined based on the first indication information.

For specific descriptions of the first PPDU, the data frame, the first indication information, the third indication information, the fifth indication information, the second PPDU, and the like, refer to the foregoing method embodiment 4. Details are not described herein again.

It can be understood that specific descriptions of the transceiver unit and the processing unit in this embodiment of this application are merely an example. For specific functions, steps, or the like performed by the transceiver unit and the processing unit, refer to the foregoing method embodiment 4. Details are not described herein again. For example, the transceiver unit 10 may be configured to receive a first PPDU, and the processing unit 20 may be configured to perform step S403 shown in FIG. 25.

For example, the transceiver unit 10 is configured to receive or input a PPDU, and the processing unit 20 is configured to parse the PPDU. A physical layer header of the PPDU includes fourth indication information. The fourth indication information indicates that a type of the PPDU is any one of the following: a non-sensing PPDU, a sensing PPDU, or a communication and sensing PPDU.

For specific descriptions of the PPDU, the fourth indication information, and the like, refer to the foregoing method embodiment 5. Details are not described herein again.

It can be understood that specific descriptions of the transceiver unit and the processing unit in this embodiment of this application are merely an example. For specific functions, steps, or the like performed by the transceiver unit and the processing unit, refer to the foregoing method embodiment 5. Details are not described herein again. For example, the transceiver unit 10 may be configured to receive a PPDU, and the processing unit 20 may be configured to perform step S503 shown in FIG. 27.

The foregoing describes the communication apparatus in embodiments of this application. The following describes a possible product form of the communication apparatus. It should be understood that a product in any form that has a function of the communication apparatus in FIG. 30 falls within the protection scope of embodiments of this application. It should be further understood that the following descriptions are merely examples, and a product form of the communication apparatus in embodiments of this application is not limited thereto.

In a possible implementation, in the communication apparatus shown in FIG. 30, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A manner of connection between the processor and the transceiver is not limited in embodiments of this application. In a process of performing the foregoing methods, a process of sending information (for example, sending a PPDU) in the foregoing methods may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information (for example, receiving a PPDU) in the foregoing methods may be understood as a process of receiving the input information by the processor. When the processor receives the input information, the transceiver receives the information, and inputs the information to the processor. Further, after the transceiver receives the information, other processing may need to be performed on the information before the information is input to the processor.

FIG. 31 is a diagram of another structure of a communication apparatus according to an embodiment of this application. The communication apparatus may be a first communication apparatus, a second communication apparatus, or a chip in the first communication apparatus or the second communication apparatus. FIG. 31 shows only main components of the communication apparatus. In addition to a processor 1001, the communication apparatus may usually further include a transceiver 1002, and the communication apparatus may further include a memory 1003. The communication apparatus may further include an input/output apparatus (not shown in the figure).

The processor 1001 is mainly configured to process a communication protocol and communication data, control the entire communication apparatus, execute a software program, and process data of the software program. The memory 1003 is mainly configured to store a software program and data. The transceiver 1002 is mainly configured to exchange information between the communication apparatus and the outside. The transceiver 1002 may be implemented by using an input/output circuit. Alternatively, the transceiver 1002 may include a control circuit and an antenna. The control circuit is mainly configured to perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to receive data input by a user and output data to the user.

After the communication apparatus is powered on, the processor 1001 may read the software program in the memory 1003, interpret and execute instructions of the software program, and process data of the software program. When data needs to be sent wirelessly, the processor 1001 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

For example, when the communication apparatus is configured to perform the steps, the methods, or the functions performed by the first communication apparatus in the foregoing method embodiment 1, the processor 1001 may be configured to perform step S101 and/or step S105 in FIG. 10, and/or perform another process of the technology described in this specification; and the transceiver 1002 may be configured to perform step S102 in FIG. 10, and/or perform another process of the technology described in this specification.

For example, when the communication apparatus is configured to perform the steps, the methods, or the functions performed by the second communication apparatus in the foregoing method embodiment 1, the processor 1001 may be configured to perform step S103 in FIG. 10, and/or perform another process of the technology described in this specification; and the transceiver 1002 may be configured to receive a first PPDU and/or perform step S104 in FIG. 10, and/or perform another process of the technology described in this specification.

For example, when the communication apparatus is configured to perform the steps, the methods, or the functions performed by the first communication apparatus in the foregoing method embodiment 2, the processor 1001 may be configured to perform step S201 and/or step S205 in FIG. 16, and/or perform another process of the technology described in this specification; and the transceiver 1002 may be configured to perform step S202 in FIG. 16, and/or perform another process of the technology described in this specification.

For example, when the communication apparatus is configured to perform the steps, the methods, or the functions performed by the second communication apparatus in the foregoing method embodiment 2, the processor 1001 may be configured to perform step S203 in FIG. 16, and/or perform another process of the technology described in this specification; and the transceiver 1002 may be configured to receive a first PPDU and/or perform step S204 in FIG. 16, and/or perform another process of the technology described in this specification.

For example, when the communication apparatus is configured to perform the steps, the methods, or the functions performed by the first communication apparatus in the foregoing method embodiment 3, the processor 1001 may be configured to generate a first PPDU, and/or perform another process of the technology described in this specification; and the transceiver 1002 may be configured to perform step S301 in FIG. 21, and/or perform another process of the technology described in this specification.

For example, when the communication apparatus is configured to perform the steps, the methods, or the functions performed by the second communication apparatus in the foregoing method embodiment 3, the processor 1001 may be configured to parse a received first PPDU and generate a second PPDU, and/or perform another process of the technology described in this specification; and the transceiver 1002 may be configured to perform step S302 in FIG. 21, and/or perform another process of the technology described in this specification.

For example, when the communication apparatus is configured to perform the steps, the methods, or the functions performed by the first communication apparatus in the foregoing method embodiment 4, the processor 1001 may be configured to perform step S401 in FIG. 25, and/or perform another process of the technology described in this specification; and the transceiver 1002 may be configured to perform step S402 in FIG. 25, and/or perform another process of the technology described in this specification.

For example, when the communication apparatus is configured to perform the steps, the methods, or the functions performed by the second communication apparatus in the foregoing method embodiment 4, the processor 1001 may be configured to perform step S403 in FIG. 25, and/or perform another process of the technology described in this specification; and the transceiver 1002 may be configured to receive a first PPDU, and/or perform another process of the technology described in this specification.

For example, when the communication apparatus is configured to perform the steps, the methods, or the functions performed by the first communication apparatus in the foregoing method embodiment 5, the processor 1001 may be configured to perform step S501 in FIG. 27, and/or perform another process of the technology described in this specification; and the transceiver 1002 may be configured to perform step S502 in FIG. 27, and/or perform another process of the technology described in this specification.

For example, when the communication apparatus is configured to perform the steps, the methods, or the functions performed by the second communication apparatus in the foregoing method embodiment 5, the processor 1001 may be configured to perform step S503 in FIG. 27, and/or perform another process of the technology described in this specification; and the transceiver 1002 may be configured to receive a PPDU, and/or perform another process of the technology described in this specification.

In any one of the foregoing designs, the processor 1001 may include a transceiver for implementing a sending function and a receiving function. For example, the transceiver may be a transceiver circuit, an interface, or an interface circuit. The transceiver circuit, the interface, or the interface circuit for implementing the sending function and the receiving function may be separated, or may be integrated together. The transceiver circuit, the interface, or the interface circuit may be configured to read and write code or data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, to enable the communication apparatus to perform the methods described in the foregoing method embodiments. The computer program may be solidified in the processor 1001. In this case, the processor 1001 may be implemented by using hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal-oxide-semiconductor (complementary metal-oxide-semiconductor, CMOS), an N-channel metal-oxide-semiconductor (N-channel metal-oxide-semiconductor, NMOS), a P-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

It can be understood that the communication apparatus shown in this embodiment of this application may alternatively include more components than those in FIG. 31. This is not limited in this embodiment of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 30, the processing unit 20 may be one or more logic circuits, and the transceiver unit 10 may be an input/output interface, also referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 32 is a diagram of still another structure of a communication apparatus according to an embodiment of this application. As shown in FIG. 32, the communication apparatus shown in FIG. 32 includes a logic circuit 901 and an interface 902. To be specific, the processing unit 20 may be implemented by using the logic circuit 901, and the transceiver unit 10 may be implemented by using the interface 902. The logic circuit 901 may be a chip, a processing circuit, an integrated circuit, a system-on-a-chip (system-on-a-chip, SoC), or the like. The interface 902 may be a communication interface, an input/output interface, a pin, or the like. For example, FIG. 32 shows an example in which the communication apparatus is a chip. The chip includes the logic circuit 901 and the interface 902.

In this embodiment of this application, the logic circuit and the interface may be further coupled to each other. A specific manner of connection between the logic circuit and the interface is not limited in this embodiment of this application.

For example, when the communication apparatus is configured to perform the methods, the functions, or the steps performed by the first communication apparatus in the foregoing method embodiment 1 or 2, the logic circuit 901 is configured to generate a first PPDU, where the first PPDU includes a first data frame, the first data frame includes first indication information, and the first indication information is used to determine one or more of the following: transmit power of a second PPDU from a second communication apparatus, or a quantity of fields used for sensing in the second PPDU; and the interface 902 is configured to output the first PPDU.

For example, when the communication apparatus is configured to perform the methods, the functions, or the steps performed by the second communication apparatus in the foregoing method embodiment 1 or 2, the interface 902 is configured to input a first PPDU, where the first PPDU includes a first data frame, the first data frame includes first indication information, and the first indication information is used to determine one or more of the following: transmit power of a second PPDU, or a quantity of fields used for sensing in the second PPDU; and the logic circuit 901 is configured to parse the first PPDU.

It can be understood that, for specific descriptions of the first PPDU, the first data frame, the first indication information, the second PPDU, and the like, reference may be made to the foregoing method embodiment 1 or 2. Details are not described herein again.

For example, when the communication apparatus is configured to perform the methods, the functions, or the steps performed by the first communication apparatus in the foregoing method embodiment 3, the logic circuit 901 is configured to generate a first PPDU; the interface 902 is configured to output the first PPDU, where the first PPDU includes a data frame, the data frame includes fifth indication information, and the fifth indication information is used to terminate a sensing measurement session; and the interface 902 is further configured to input a second PPDU, where the second PPDU includes a feedback used to determine whether the data frame is successfully transmitted.

For example, when the communication apparatus is configured to perform the methods, the functions, or the steps performed by the second communication apparatus in the foregoing embodiment 3, the interface 902 is configured to input a first PPDU, where the first PPDU includes a data frame, the data frame includes fifth indication information, and the fifth indication information is used to terminate a sensing measurement session; the logic circuit 901 is configured to generate a second PPDU; and the interface 902 is further configured to output the second PPDU, where the second PPDU includes a feedback used to determine whether the data frame is successfully transmitted.

It can be understood that, for specific descriptions of the first PPDU, the data frame, the fifth indication information, the second PPDU, and the like, reference may be made to the foregoing method embodiment 3. Details are not described herein again.

For example, when the communication apparatus is configured to perform the methods, the functions, or the steps performed by the first communication apparatus in the foregoing method embodiment 4, the logic circuit 901 is configured to generate a first PPDU, where the first PPDU includes a data frame, the data frame includes third indication information, the third indication information indicates that the data frame carries first indication information or indicates that the data frame carries fifth indication information, the first indication information is used to determine one or more of the following: transmit power of a second PPDU from a second communication apparatus, or a quantity of fields used for sensing in the second PPDU, and the fifth indication information is used to terminate a sensing measurement session; and the interface 902 is configured to output the first PPDU.

For example, when the communication apparatus is configured to perform the methods, the functions, or the steps performed by the second communication apparatus in the foregoing embodiment 4, the interface 902 is configured to input a first PPDU, where the first PPDU includes a data frame, the data frame includes third indication information, the third indication information indicates that the data frame carries first indication information or indicates that the data frame carries fifth indication information, the first indication information is used to determine one or more of the following: transmit power of a second PPDU, or a quantity of fields used for sensing in the second PPDU, and the fifth indication information is used to terminate a sensing measurement session; and the logic circuit 901 is configured to parse the first PPDU.

It can be understood that, for specific descriptions of the first PPDU, the data frame, the first indication information, the third indication information, the fifth indication information, the second PPDU, and the like, reference may be made to the foregoing method embodiment 4. Details are not described herein again.

For example, when the communication apparatus is configured to perform the methods, the functions, or the steps performed by the first communication apparatus in the foregoing method embodiment 5, the logic circuit 901 is configured to generate a PPDU, where a physical layer header of the PPDU includes fourth indication information, and the fourth indication information indicates that a type of the PPDU is any one of the following: a non-sensing PPDU, a sensing PPDU, or a communication and sensing PPDU; and the interface 902 is configured to output the PPDU.

For example, when the communication apparatus is configured to perform the methods, the functions, or the steps performed by the second communication apparatus in the foregoing embodiment 5, the interface 902 is configured to input a PPDU, where a physical layer header of the PPDU includes fourth indication information, and the fourth indication information indicates that a type of the PPDU is any one of the following: a non-sensing PPDU, a sensing PPDU, or a communication and sensing PPDU; and the logic circuit 901 is configured to parse the PPDU.

It can be understood that, for specific descriptions of the PPDU, the fourth indication information, and the like, reference may be made to the foregoing method embodiment 5. Details are not described herein again.

It can be understood that the communication apparatus shown in this embodiment of this application may implement the methods provided in embodiments of this application in a form of hardware, or may implement the methods provided in embodiments of this application in a form of software. This is not limited in this embodiment of this application.

For a specific implementation of the embodiment shown in FIG. 32, refer to the foregoing embodiments. Details are not described herein again.

An embodiment of this application further provides a wireless communication system. The wireless communication system includes a first communication apparatus and/or a second communication apparatus. The first communication apparatus and the second communication apparatus may be configured to perform the method in any one of the foregoing embodiments.

In addition, this application further provides a computer program. The computer program is used to implement the operations and/or processing performed by the first communication apparatus in the methods provided in this application.

This application further provides a computer program. The computer program is used to implement the operations and/or processing performed by the second communication apparatus in the methods provided in this application.

This application further provides a computer-readable storage medium. The computer-readable storage medium stores computer code. When the computer code is run on a computer, the computer is enabled to perform the operations and/or processing performed by the first communication apparatus in the methods provided in this application.

This application further provides a computer-readable storage medium. The computer-readable storage medium stores computer code. When the computer code is run on a computer, the computer is enabled to perform the operations and/or processing performed by the second communication apparatus in the methods provided in this application.

This application further provides a computer program product. The computer program product includes computer code or a computer program. When the computer code or the computer program is run on a computer, the operations and/or processing performed by the first communication apparatus in the methods provided in this application are/is performed.

This application further provides a computer program product. The computer program product includes computer code or a computer program. When the computer code or the computer program is run on a computer, the operations and/or processing performed by the second communication apparatus in the methods provided in this application are/is performed.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. A part or all of the units may be selected according to an actual requirement to implement the technical effects of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to the conventional technology, or all or a part of the technical solutions may be implemented in a form of a software product. The computer software product is stored in a readable storage medium, and includes several instructions for instructing a computer device (which may be a personal computer, a server, a network device, or the like) to perform all or a part of the steps of the methods described in embodiments of this application. The readable storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer protocol data unit transmission method, comprising:
generating, by a first communication apparatus, a first physical layer protocol data unit PPDU, wherein the first PPDU comprises a first data frame, the first data frame comprises first indication information, and the first indication information is used to determine one or more of the following: transmit power of a second PPDU from a second communication apparatus, or a quantity of fields used for sensing in the second PPDU; and
sending, by the first communication apparatus, the first PPDU.

2. The method according to claim 1, wherein the method further comprises:
receiving, by the first communication apparatus, the second PPDU, wherein the second PPDU comprises at least one field used for sensing and a feedback used to determine whether the first data frame is successfully transmitted, wherein
the quantity of fields used for sensing in the second PPDU is determined based on the first indication information, and the field used for sensing is used for the first communication apparatus to perform sensing measurement.

3. A physical layer protocol data unit transmission method, comprising:
receiving, by a second communication apparatus, a first physical layer protocol data unit PPDU, wherein the first PPDU comprises a first data frame, the first data frame comprises first indication information, and the first indication information is used to determine one or more of the following: transmit power of a second PPDU, or a quantity of fields used for sensing in the second PPDU; and
parsing, by the second communication apparatus, the first PPDU.

4. The method according to claim 3, wherein the method further comprises:
sending, by the second communication apparatus, the second PPDU based on the first indication information, wherein the second PPDU comprises at least one field used for sensing and a feedback used to determine whether the first data frame is successfully transmitted, wherein
the quantity of fields used for sensing in the second PPDU is determined based on the first indication information, and the field used for sensing is used for a first communication apparatus to perform sensing measurement.

5. The method according to any one of claims 1 to 4, wherein the first indication information comprises one or more of the following: transmit power of the first PPDU, expected receive power, a quantity of combinations of fields used for sensing in the second PPDU, or a quantity of fields used for sensing in a combination of fields used for sensing; and
the transmit power of the first PPDU and the expected receive power are used to determine the transmit power of the second PPDU.

6. The method according to any one of claims 1 to 5, wherein the first indication information further comprises one or more of the following: a spatial stream allocated to the second PPDU, or a resource unit RU allocated to the second PPDU.

7. The method according to claim 6, wherein the first data frame belongs to a first user, the first PPDU further comprises a second data frame, and the second data frame belongs to a second user.

8. The method according to claim 7, wherein the second data frame comprises second indication information, and the second indication information is used to determine one or more of the following: transmit power of a third PPDU from a third communication apparatus, or a quantity of fields used for sensing in the third PPDU.

9. The method according to any one of claims 1 to 8, wherein the field used for sensing is a high efficiency-long training field HE-LTF or an extremely high throughput-long training field EHT-LTF.

10. The method according to any one of claims 1 to 9, wherein the first indication information is carried in a medium access control MAC header of the first data frame.

11. The method according to any one of claims 1 to 10, wherein the first data frame further comprises third indication information, and the third indication information indicates that the first data frame carries the first indication information.

12. The method according to any one of claims 1 to 11, wherein the field used for sensing is carried in a physical layer header of the second PPDU.

13. The method according to any one of claims 1 to 12, wherein a physical layer header of the first PPDU comprises fourth indication information, and the fourth indication information indicates that a type of the first PPDU is any one of the following:
a non-sensing PPDU, a sensing PPDU, or a communication and sensing PPDU.

14. The method according to any one of claims 1 to 13, wherein the first communication apparatus is an access point, and the second communication apparatus is a non-access point station; or
the first communication apparatus is a non-access point station, and the second communication apparatus is an access point.

15. A physical layer protocol data unit transmission method, comprising:
generating, by a first communication apparatus, a first physical layer protocol data unit PPDU, wherein the first PPDU comprises a data frame, the data frame comprises third indication information, the third indication information indicates that the data frame carries first indication information or indicates that the data frame carries fifth indication information, the first indication information is used to determine one or more of the following: transmit power of a second PPDU from a second communication apparatus, or a quantity of fields used for sensing in the second PPDU, and the fifth indication information is used to terminate a sensing measurement session; and
sending, by the first communication apparatus, the first PPDU.

16. A physical layer protocol data unit transmission method, comprising:
receiving, by a second communication apparatus, a first physical layer protocol data unit PPDU, wherein the first PPDU comprises a data frame, the data frame comprises third indication information, the third indication information indicates that the data frame carries first indication information or indicates that the data frame carries fifth indication information, the first indication information is used to determine one or more of the following: transmit power of a second PPDU, or a quantity of fields used for sensing in the second PPDU, and the fifth indication information is used to terminate a sensing measurement session; and
parsing, by the second communication apparatus, the first PPDU.

17. The method according to claim 15 or 16, wherein when the third indication information is a first value, the third indication information indicates that the data frame carries the first indication information; or
when the third indication information is a second value, the third indication information indicates that the data frame carries the fifth indication information.

18. A physical layer protocol data unit transmission method, comprising:
sending, by a first communication apparatus, a first physical layer protocol data unit PPDU, wherein the first PPDU comprises a data frame, the data frame comprises fifth indication information, and the fifth indication information is used to terminate a sensing measurement session; and
receiving, by the first communication apparatus, a second PPDU, wherein the second PPDU comprises a feedback used to determine whether the data frame is successfully transmitted.

19. A physical layer protocol data unit transmission method, comprising:
receiving, by a second communication apparatus, a first physical layer protocol data unit PPDU, wherein the first PPDU comprises a data frame, the data frame comprises fifth indication information, and the fifth indication information is used to terminate a sensing measurement session; and
sending, by the second communication apparatus, a second PPDU, wherein the second PPDU comprises a feedback used to determine whether the data frame is successfully transmitted.

20. The method according to claim 18 or 19, wherein the fifth indication information comprises one or more of the following: a measurement session identifier field, a terminate all trigger-based measurement sessions field, a terminate all non-trigger-based measurement sessions field, or a trigger-based/non-trigger-based measurement session type field.

21. The method according to any one of claims 18 to 20, wherein the data frame belongs to a first user, and the first PPDU further comprises a data frame belonging to a second user.

22. The method according to any one of claims 18 to 21, wherein the fifth indication information is carried in a medium access control MAC header of the data frame.

23. The method according to any one of claims 18 to 22, wherein the data frame further comprises sixth indication information, and the sixth indication information indicates that the data frame carries the fifth indication information.

24. The method according to any one of claims 18 to 23, wherein a physical layer header of the first PPDU comprises fourth indication information, and the fourth indication information indicates that a type of the first PPDU is any one of the following:
a non-sensing PPDU, a sensing PPDU, or a communication and sensing PPDU.

25. A physical layer protocol data unit transmission method, comprising:
generating, by a first communication apparatus, a physical layer protocol data unit PPDU, wherein a physical layer header of the PPDU comprises fourth indication information, and the fourth indication information indicates that a type of the PPDU is any one of the following: a non-sensing PPDU, a sensing PPDU, or a communication and sensing PPDU; and
sending, by the first communication apparatus, the PPDU.

26. A physical layer protocol data unit transmission method, comprising:
receiving, by a second communication apparatus, a physical layer protocol data unit PPDU, wherein a physical layer header of the PPDU comprises fourth indication information, and the fourth indication information indicates that a type of the PPDU is any one of the following: a non-sensing PPDU, a sensing PPDU, or a communication and sensing PPDU; and
parsing, by the second communication apparatus, the PPDU.

27. A communication apparatus, comprising a unit or a module for performing the method according to any one of claims 1 to 26.

28. A communication apparatus, comprising a processor and a memory, wherein
the memory is configured to store instructions; and
the processor is configured to execute the instructions, to perform the method according to any one of claims 1 to 26.

29. A wireless communication system, comprising: a first communication apparatus for performing the method according to any one of claims 1 and 2, 5 to 15, 17 to 18, and 20 to 25, and/or a second communication apparatus for performing the method according to any one of claims 3 to 14, 16 to 17, 19 to 24, and 26.

30. A readable storage medium, wherein the readable storage medium is configured to store a computer program, and when the computer program is executed by a processor, a communication apparatus comprising the processor is enabled to perform the method according to any one of claims 1 to 26.
